# EUROPEAN PATENT SPECIFICATION

(11) **EP 3 589 783 B1**
(45) Date of publication and mention of the grant of the patent: **09.09.2026**
(21) Application number: 18713079.4
(22) Date of filing: 27.02.2018
(51) Int. Cl.: D01D 5/096, D01D 5/26, D04H 1/425, D01F 2/28

(54) **CELLULOSE ACETATE FIBERS IN NONWOVEN FABRICS**
CELLULOSEACETATFASERN IN VLIESSTOFFEN
FIBRES D'ACÉTATE DE CELLULOSE DANS DES TISSUS NON-TISSÉS

(30) Priority: 28.02.2017 US 201762464715 P; 16.11.2017 US 201762587228 P; 07.12.2017 US 201762595872 P
(43) Date of publication of application: 08.01.2020
(73) Proprietor: Eastman Chemical Company, Kingsport, TN 37660 (US)
(72) Inventor: STEACH, Jeremy Kenneth, Kingsport, Tennessee 37664 (US); GAYNOR, Scott Gregory, Bristol, Tennessee 37620 (US); SPRUELL, Jason Michael, Alpharetta, Georgia 30022-4728 (US); HASSAN, Mohammad Abouelreesh, Roanoke, Virginia 24018-0080 (US); QIN, Guo Wei, Johnson City, Tennessee 37615 (US); APPLING, Yancey, Johnson City, Tennessee 37604 (US); SHAH, Syed Ali, Pittsburgh, Pennsylvania 15206-5104 (US); POSA, James M., Greer, South Carolina 29651 (US); GHOSH, Koushik, Kingsport, Tennessee 37660 (US); IZALLALEN, Mounir, Kingsport, Tennessee 37664 (US)
(74) Representative: Ricker, Mathias
(86) International application number: PCT/US2018/019995
(87) International publication number: WO 2018/160584

(56) References cited:
- EP-A1- 2 907 493
- EP-A1- 3 128 070
- WO-A1-93/02247
- CA-A- 677 852

## Description

### CROSS-REFERENCE TO RELATED APPLICATIONS

This application claims priority under 35 U.S.C. 119(e) to U.S. Provisional Application Serial No. 62/464,715, filed on February 28, 2017, U.S. Provisional Application Serial No. 62/587,228, filed on November 16, 2017, and U.S. Provisional Application Serial No. 62/595,872, filed on December 7, 2017.

### TECHNICAL FIELD

The present disclosure relates to filament yarns and fibers formed therefrom. The present disclosure also relates to methods of making and using the fibers and filament yarns, as well as methods for making nonwoven webs and articles formed from the same.

### BACKGROUND

Nonwoven fabrics are widely used in a variety of products including, for example, personal hygiene products such as diapers and feminine products, as well as in a variety of consumer, industrial, and medical applications. Typically, nonwoven fabrics are formed from natural or synthetic materials, such as, for example, polyesters, acrylics, nylons, glass, wool, and cotton. Nonwoven fabrics have also been formed from a variety of cellulosic materials, such as viscose, Modal, and Lyocell.

Although used in a variety of different applications, nonwoven fabrics are often required to have suitable properties such as wicking, absorbency, and flexibility, as well as other consumer-driven properties such as loft, softness, and substantialness, particularly when the nonwoven will be used in an article that contacts a user's skin. Many articles that utilize nonwovens must also exhibit sufficient strength and abrasion resistance under a wide range of conditions in order to ensure that the article can be used in a variety of circumstances without falling apart or undesirable effects, such as linting or pilling. Further, because many of these types of articles are disposable, it is also desirable that the nonwoven fabric be biodegradable and that its production and use minimize adverse environmental impacts.

Cellulose esters have demonstrated varying degrees of environmental non-persistence under certain conditions, but, to date, no cellulose ester-based fiber or fibrous article has exhibited satisfactory biodegradation under a range of different environmental conditions. Conventionally, this limited degree of biodegradability has been addressed by including plasticizers and other additives in the cellulose ester in order to accelerate the degradation of the fiber or article when exposed to certain environmental conditions, such as heat or sunlight. Although these additives have successfully increased the degradability of the articles to a certain degree, such additives complicate the manufacturing process, increase the overall production cost, and threaten the long-term functionality of the articles.

Much development has been focused in the area of improving properties of nonwoven fabrics to produce articles that exhibit a good balance of desirable properties, while also being easily and efficiently processable by manufacturers at a commercial scale. Significant efforts toward improving these properties continue and are complicated by the number and diversity of desirable end use applications. Thus, a need exists for a nonwoven fabric that exhibits a desirable set of properties, such as strength, absorbency, flexibility, and that may be used in a variety of end use applications. Advantageously, the staple fibers used to form the nonwoven fabric would also exhibit desirable properties, including enhanced processability in order to facilitate efficient commercial manufacturing of both the fibers and the nonwoven fabrics in facilities with new or existing equipment, while also degrading easily and completely upon disposal under a variety of conditions.

Prior art is disclosed in WO93/02247.

### SUMMARY

The invention is set forth in the appended claims. In one aspect, the present disclosure concerns a staple fiber formed from cellulose acetate. The fiber is at least partially coated with a spinning finish and a top-coat finish. The fiber has a denier per filament of about 0.5 to about 2.75 and a crimp frequency of from about 8 to about 22 crimps per inch (CPI). A plurality of the fibers exhibits a fiber-to-fiber staple pad coefficient of friction of not more than about 0.70.

In other aspects, the present disclosure concerns a staple fiber suitable for use in a nonwoven or the use of a staple fiber in a nonwoven. The staple fiber is formed from cellulose acetate. The fiber is at least partially coated with a spinning finish and a top-coat finish. The fiber has a denier per filament of about 0.5 to about 2.75 and a crimp frequency of about 8 to about 22 crimps per inch (CPI). A plurality of the fibers exhibit a fiber-to-fiber staple pad coefficient of friction of not more than about 0.70.

In yet another aspect, the present disclosure concerns a process for producing crimped, coated cellulose acetate staple fibers, the process comprising: (a) forming a cellulose acetate filament yarn comprising plurality of individual cellulose acetate filaments, wherein the individual cellulose acetate filaments have an average denier per filament in the range of from about 0.5 to about 2.75, wherein the forming includes applying at least one spinning finish to at least a portion of the filament yarn; (b) crimping at least a portion of the cellulose acetate filament yarn to provide a crimped filament yarn, wherein the crimped filament yarn has an average crimping frequency, measured in at least 5 different locations of the crimped filament yarn, of from about 6 to about 22 crimps per inch (CPI); and (c) cutting the crimped filament yarn to form a plurality of crimped cellulose acetate staple fibers having a length of about 3 to about 75 mm.

The average tenacity of the filaments of the crimped filament yarn is at least 90 percent of the average tenacity of the filaments of the filament yarn prior to the crimping.

Each feature recited in the claims of this application may apply to staple fibers suitable for use in a nonwoven web or article formed from the nonwoven web.

In a still further aspect, the present disclosure concerns a nonwoven web formed from a plurality of staple fibers as claimed in claim 1.

In an even further aspect, the present disclosure concerns a process for producing a nonwoven web, the process comprising: (a) providing a plurality of cellulose acetate staple fibers according to claim 1, (b) introducing the staple fibers into an apparatus for forming a dry-laid nonwoven; and (c) forming the staple fibers into a nonwoven web in the apparatus.

### BRIEF DESCRIPTION OF THE FIGURES

FIG. 1a schematic overview of the main steps in a process for forming staple fibers according to embodiments of the present disclosure;
FIG. 1b is a schematic overview of the main steps in a process for forming a nonwoven web according to embodiments of the present disclosure;
FIG. 2 is a schematic diagram showing the measurement of various dimensions on a crimped fiber;
FIG. 3 is a graph summarizing the final static voltage after two minutes for several types of staple fibers as described in Example 1;
FIG. 4 is a graph summarizing the coefficient of sliding friction for several yarn samples as a function of amount of finish for several types of finishes as described in Example 2;
FIG. 5 is a graph summarizing the coefficient of friction for several yarns as a function of amount of finish applied as described in Example 2;
FIG. 6 is a graph summarizing stick-slip values for several yarns as a function of amount of finish applied as described in Example 2;
FIG. 7 is a graph summarizing static half-life values for several yarns as a function of amount of finish applied as described in Example 2;
FIG. 8 is a graph summarizing the tenacity of several filaments as a function of crimp frequency as described in Example 4;
FIG. 9 is a graph summarizing the tenacity of several filaments as a function of crimp frequency and denier per filament as described in Example 4;
FIG. 10 is a graph summarizing the wicking height of several nonwoven webs as a function of time as described in Example 5;
FIG. 11 is a graph summarizing the wicking height after 5 minutes for several nonwoven webs as described in Example 5;
FIG. 12 is a graph summarizing the absorbance of several nonwoven webs as described in Example 5;
FIG. 13 is a graph summarizing the absorbance of several other nonwoven webs as described in Example 6;
FIG. 14 is a graph summarizing the absorbance of additional nonwoven webs as described in Example 6;
FIG. 15 is a graph summarizing the real softness of several nonwoven webs as a function of hand feel as described in Example 7;
FIG. 16 is a graph comparing the biodegradation rate of cellulose fibers with cellulose acetate fibers under industrial composting conditions as described in Example 11;
FIG. 17 is a graph comparing the biodegradation rate of cellulose fibers with cellulose acetate fibers under home composting conditions as described in Example 11; and
FIG. 18 is a graph comparing the biodegradation of cellulose fibers with cellulose acetate fibers under soil conditions as described in Example 11.

### DETAILED DESCRIPTION

The present disclosure relates to staple fibers formed from organic acid esters of cellulose (*e.g*., cellulose esters), as well as methods of making these staple fibers and the use of these staple fibers to form nonwoven fabrics and articles. It has been unexpectedly found that cellulose ester staple fibers as described herein may be used to form nonwoven webs that exhibit enhanced properties, such as absorbency, strength, and softness. At the same time, the cellulose ester fibers may be environmentally-friendly and can be processed using both new and existing processing equipment. Examples of suitable types of nonwoven articles formable from the staple fibers described herein can include, but are not limited to, disposable diapers and training pants, feminine hygiene products, adult incontinence pads, wet and dry personal, medical, and industrial wipes including flushable wipes, as well as various types of filtration media, masks, disposable sheets, gowns, bandages, blankets for medical use, disposable clothing including medical and surgical gowns and industrial protective clothing and masks, geotextiles, filters, carpet underlay and backing, and padding for pillows, upholstery, and mattresses.

Staple fibers as described herein are formed from cellulose acetate.

When the staple fiber is formed from cellulose acetate, it may be formed from cellulose diacetate, cellulose triacetate, or mixtures thereof. The cellulose acetate useful in embodiments of the present disclosure can have a degree of substitution in the range of from 1.9 to 2.9. As used herein, the term "degree of substitution" or "DS" refers to the average number of acyl substituents per anhydroglucose ring of the cellulose polymer, wherein the maximum degree of substitution is 3.0. In some cases, the cellulose acetate used to form fibers as described herein may have an average degree of substitution of at least about 1.95, 2.0, 2.05, 2.1, 2.15, 2.2, 2.25, or 2.3 and/or not more than about 2.9, 2.85, 2.8, 2.75, 2.7, 2.65, 2.6, 2.55, 2.5, 2.45, 2.4, or 2.35, with greater than 90, 91, 92, 93, 94, 95, 96, 97, 98, or 99 percent of the cellulose acetate having a degree of substitution greater than 2.15, 2.2, or 2.25. In some cases, greater than 90 percent of the cellulose acetate can have a degree of substitution greater than 2.2, 2.25, 2.3, or 2.35. Typically, acetyl groups can make up at least about 1, 5, 10, 15, 20, 25, 30, 35, 40, 45, 50, 55, or 60 percent and/or not more than about 99, 95, 90, 85, 80, 75, or 70 percent of the total acyl substituents.

The cellulose acetate may have a weight-average molecular weight (M_{w}) of not more than 90,000, measured using gel permeation chromatography with N-methyl-2-pyrrolidone (NMP) as the solvent. In some case, the cellulose acetate may have a molecular weight of at least about 10,000, at least about 20,000, 25,000, 30,000, 35,000, 40,000, or 45,000 and/or not more than about 100,000, 95,000, 90,000, 85,000, 80,000, 75,000, 70,000, 65,000, 60,000, or 50,000.

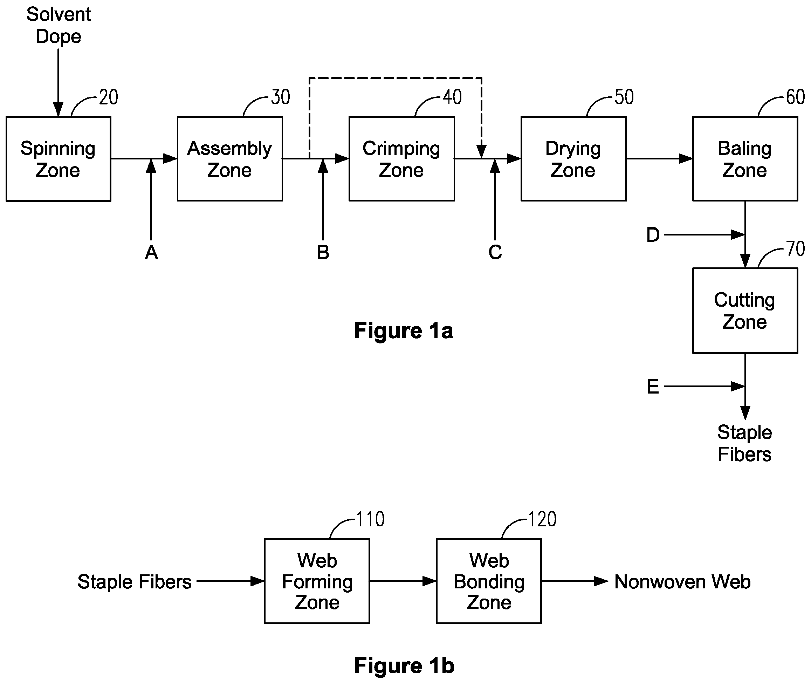

Turning now to FIG. 1a, the main steps of a process for forming cellulose acetate staple fibers are provided. The cellulose acetate or other cellulose ester may be formed by any suitable method. In some cases, cellulose acetate may be formed by reacting a cellulosic material such as wood pulp with acetic anhydride and a catalyst in an acidic reaction medium to form a cellulose acetate flake. The flake may then be dissolved in a solvent, such as acetone or methyl ethyl ketone, to form a "solvent dope," which can be filtered and sent through a spinnerette in a spinning zone 20 as shown in FIG. 1a to form cellulose acetate fibers. In some cases, up to about 1 weight percent or more of titanium dioxide or other delusterant may be added to the dope prior to filtration, depending on the desired properties and ultimate end use of the fibers.

In some cases, the solvent dope or flake used to form the cellulose acetate fibers may include few or no additives in addition to the cellulose acetate. Such additives can include, but are not limited to, plasticizers, antioxidants, thermal stabilizers, pro-oxidants, acid scavengers, inorganics, pigments, and colorants. In some cases, the cellulose acetate fibers as described herein can include at least about 90, 90.5, 91, 91.5, 92, 92.5, 93, 93.5, 94, 94.5, 95, 95.5, 96, 96.5, 97, 97.5, 98, 98.5, 99, 99.5, 99.9, 99.99, 99.995, or 99.999 percent cellulose acetate, based on the total weight of the fiber. Fibers formed according to the present disclosure may include not more than about 10, 9.5, 9, 8.5, 8, 7.5, 7, 6.5, 6, 5.5, 5, 4.5, 4, 3.5, 3, 2.5, 2, 1.5, 1, 0.5, 0.1, 0.01, 0.005, or 0.001 weight percent of additives other than cellulose acetate, including the specific additives listed herein.

Cellulose acetate fibers can achieve higher levels of biodegradability and/or compostability without use of additives that have traditionally been used to facilitate environmental non-persistence of similar fibers. Such additives can include, for example, photodegradation agents, biodegradation agents, decomposition accelerating agents, and various types of other additives. Despite being substantially free of these types of additives, the cellulose acetate fibers and articles have unexpectedly been found to exhibit enhanced biodegradability and compostability when tested under industrial, home, and/or soil conditions, as discussed previously.

In some embodiments, the cellulose acetate fibers described herein may be substantially free of photodegradation agents. For example, the fibers may include not more than about 1, 0.75, 0.50, 0.25, 0.10, 0.05, 0.025, 0.01, 0.005, 0.0025, or 0.001 weight percent of photodegradation agent, based on the total weight of the fiber, or the fibers may include no photodegradation agents. Examples of such photodegradation agents include, but are not limited to, pigments which act as photooxidation catalysts and are optionally augmented by the presence of one or more metal salts, oxidizable promoters, and combinations thereof. Pigments can include coated or uncoated anatase or rutile titanium dioxide, which may be present alone or in combination with one or more of the augmenting components such as, for example, various types of metals. Other examples of photodegradation agents include benzoins, benzoin alkyl ethers, benzophenone and its derivatives, acetophenone and its derivatives, quinones, thioxanthones, phthalocyanine and other photosensitizers, ethylene-carbon monoxide copolymer, aromatic ketone-metal salt sensitizers, and combinations thereof.

In some embodiments, the cellulose acetate fibers described herein may be substantially free of biodegradation agents and/or decomposition agents. For example, the fibers may include not more than about 1, 0.75, 0.50, 0.25, 0.10, 0.05, 0.025, 0.01, 0.005, 0.0025, 0.0020, 0.0015, 0.001, 0.0005 weight percent of biodegradation agents and/or decomposition agents, based on the total weight of the fiber, or the fibers may include no biodegradation and/or decomposition agents. Examples of such biodegradation and decomposition agents include, but are not limited to, salts of oxygen acid of phosphorus, esters of oxygen acid of phosphorus or salts thereof, carbonic acids or salts thereof, oxygen acids of phosphorus, oxygen acids of sulfur, oxygen acids of nitrogen, partial esters or hydrogen salts of these oxygen acids, carbonic acid and its hydrogen salt, sulfonic acids, and carboxylic acids.

Other examples of such biodegradation and decomposition agents include an organic acid selected from the group consisting of oxo acids having 2 to 6 carbon atoms per molecule, saturated dicarboxylic acids having 2 to 6 carbon atoms per molecule, and lower alkyl esters of the oxo acids or the saturated dicarboxylic acids with alcohols having from 1 to 4 carbon atoms. Biodegradation agents may also comprise enzymes such as, for example, a lipase, a cellulase, an esterase, and combinations thereof. Other types of biodegradation and decomposition agents can include cellulose phosphate, starch phosphate, calcium secondary phosphate, calcium tertiary phosphate, calcium phosphate hydroxide, glycolic acid, lactic acid, citric acid, tartaric acid, malic acid, oxalic acid, malonic acid, succinic acid, succinic anhydride, glutaric acid, acetic acid, and combinations thereof.

Cellulose acetate fibers described herein may also be substantially free of several other types of additives that have been added to other fibers to encourage environmental non-persistence. Examples of these additives can include, but are not limited to, polyesters, including aliphatic and low molecular weight (e.g., less than 5000) polyesters, enzymes, microorganisms, water soluble polymers, modified cellulose acetate, water-dispersible additives, nitrogen-containing compounds, hydroxy-functional compounds, oxygen-containing heterocyclic compounds, sulfur-containing heterocyclic compounds, anhydrides, monoepoxides, and combinations thereof. In some cases, the fibers described herein may include not more than about 0.5, 0.4, 0.3, 0.25, 0.1, 0.075, 0.05, 0.025, 0.01, 0.0075, 0.005, 0.0025, or 0.001 weight percent of these types of additives, or the cellulose acetate fibers may not include any of these types of additives.

Turning back FIG. 1a, at the spinnerette, the solvent dope can be extruded through a plurality of holes to form continuous cellulose acetate filaments. At the spinnerette, filaments may be drawn to form bundles of several hundred, or even thousand, individual filaments. Each of these bundles, or bands, may include at least 100, 150, 200, 250, 300, 350, or 400 and/or not more than 1000, 900, 850, 800, 750, or 700 fibers. The spinnerette may be operated at any speed suitable to produce filaments and bundles having desired size and shape.

Multiple bundles may be assembled into a filament yarn in an assembly zone 30 as shown in FIG. 1a. As used herein, a "filament yarn" or "tow yarn" refers to a yarn formed from a plurality of continuous, untwisted individual filaments. The filament yarn may be of any suitable size and, in some embodiments, may have a total denier of at least about 20,000, 25,000, 30,000, 35,000, 40,000, 45,000, 50,000, 75,000, 100,000, 150,000, 200,000, 250,000, 300,000, 350,000, 400,000, 450,000, or 500,000. Alternatively, or in addition, the total denier of the filament yarn can be not more than about 5,000,000, 4,500,000, 4,000,000, 3,500,00, 3,000,000, 2,500,000, 2,000,000, 1,500,000, 1,000,000, 900,000, 800,000, 700,000, 600,00, 500,000, 400,000, 350,000, 300,000, 250,000, 200,000, 150,000, 100,000, 95,000, 90,000, 85,000, 80,000, 75,000, or 70,000.

The individual filaments, which are extruded in a generally longitudinally aligned manner and which ultimately form the filament yarn, may also be of any suitable size. For example, each filament may have a linear denier per filament (weight in g of 9000m fiber length) of at least about 0.1, 0.5, 1, 1.5, 2, 2.5, 3, 4, or 5 and/or not more than about 30, 25, 20, 15, 14, 13, 12, 11, 10, 9, 8, 7, 6, 5, 4.5, 4, 3, or 2.75, measured according to ASTM D1577-01 using the FAVIMAT vibroscope procedure. As used herein, the term "filament" refers to an elongated, continuous single strand fiber and is distinguished from a staple fiber, which has been cut to a specified length, as described in further detail below.

The individual filaments discharged from the spinnerette are round or Y-shaped. As used herein, the term "cross-section" generally refers to the transverse cross-section of the filament measured in a direction perpendicular to the direction of elongation of the filament. The cross-section of the filament may be determined and measured using Quantitative Image Analysis (QIA). Staple fibers may have a cross-sectional shape similar to the filaments from which they were formed.

In some embodiments, the cross-sectional shape of an individual filament (or staple fiber) may be characterized according to its deviation from a round cross-sectional shape. In some cases, this deviation can be characterized by the shape factor of the filament or fiber, which is determined by the following formula: Shape Factor = Perimeter / (4π x Cross-Sectional Area)^{1/2}. In some embodiments, the shape factor of the individual cellulose acetate (or other cellulose ester) filaments or fibers can be at least about 1, 1.01, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.25, 2.5, 2.75, 3, or 3.25 and/or not more than about 5, 4.8, 4.75, 4.5, 4.25, 4, 3.75, 3.5, 3.25, 3, 2.75, 2.5, 2.25, 2, 1.75, 1.5, or 1.25. (Note: these values may also be expressed as ratios of the listed numbers to 1 - *e.g.*, 1.45:1.). The shape factor of filament or fiber having a round cross-sectional shape is 1. The shape factor can be calculated from the cross-sectional area of a filament or fiber, which can be measured using QIA.

Additionally, the cross-sectional shape of the filament or fiber may also be compared to a round cross-section according to its equivalent diameter, which is the equivalent diameter of a round filament or fiber having a cross-sectional area equal to a given filament or fiber. In some embodiments, cellulose acetate filaments or fibers according to embodiments of the present disclosure can have an equivalent diameter of at least about 0.0022, 0.0023, 0.0024, 0.0025, 0.0030, 0.0033, 0.0035, 0.0040, 0.0045, 0.0050, 0.0055, 0.0060, 0.0065, 0.0070, 0.0073, 0.0075, 0.0080, 0.0085, 0.0090, 0.0095, 0.0100, 0.0103, 0.0104, 0.0105, 0.0110, 0.0112, 0.0115, 0.0120, 0.0125, 0.0126, 0.013, 0.014, or 0.015 mm. Alternatively, or in addition, the cellulose acetate filaments or fibers may have an equivalent diameter of not more than about 0.0400, 0.0375, 0.036, 0.0359, 0.0350, 0.0033, 0.0327, 0.0325, 0.0300, 0.0275, 0.0250, 0.0232, 0.0225, 0.0200, 0.0179, 0.0175, 0.016, 0.0150, 0.0127, 0.0125, or 0.0120 mm. The equivalent diameter is calculated from the cross-section of a filament or fiber, measured using QIA.

In some embodiments, as shown in FIG. 1a, the filament yarn (or tow yarn) may be passed through a crimping zone 40 wherein a patterned wavelike shape may be imparted to at least a portion, or substantially all, of the individual filaments. In some cases, the filaments may not be crimped, and the uncrimped filaments may be passed directly from the assembly zone to a drying zone 50, as shown by the dashed line in FIG. 1a.

When used, the crimping zone 40 indudes at least one crimping device for mechanically crimping the filament yarn. According to embodiments of the present disdosure, filament yarns may not crimped by thermal or chemical means (*e.g*., hot water baths, steam, air jets, or chemical treatments or coatings), but instead are mechanically crimped using a suitable crimper. One example of a suitable type of mechanical crimper is a "stuffing box' or "stuffer box" crimper that utilizes a plurality of rollers to generate friction, which causes the fibers to buckle and form crimps. Other types of crimpers may also be suitable. Examples of equipment suitable for imparting crimp to a filament yarn are described in, for example, U.S. Patent Nos. 9,179,709; 2,346,258; 3,353,239; 3,571,870; 3,813,740; 4,004,330; 4,095,318; 5,025,538; 7,152,288; and 7,585,442. In some cases, the crimping step may be performed at a rate of at least about 50, 75, 100, 125, 150, 175, 200, 225, or 250 meters per minute (m/min) and/or not more than about 750, 600, 550, 500, 475, 450, 425, 400, 375, 350, 325, or 300 m/min.

In some cases, low crimp, low denier per filament cellulose acetate fibers may be formed that exhibit minimal breakage and a high degree of retained tenacity. As used herein, the term "retained tenacity" refers to the ratio of the average tenacity of a crimped filament (or fiber) to the average tenacity of an identical but uncrimped filament (or fiber), expressed as a percent. For example, a crimped fiber having a tenacity of 1.3 gram-force/denier (g/denier) would have a retained tenacity of 87 percent if an identical but uncrimped fiber had a tenacity of 1.5 g/denier.

In some embodiments, cellulose acetate filaments crimped according to embodiments of the present disclosure may have a retained tenacity of at least about 50, 55, 60, 65, 70, 75, 80, 85, 90, 95, 97, or 99 percent. Additionally, or in the alternative, the retained tenacity of the cellulose acetate filaments may be not more than about 99, 97, 95, 90, 92, 90, 87, 85, 82, or 80 percent, calculated as described herein. The retained tenacity may be 100 percent in some cases. Crimped filaments exhibiting a retained tenacity in these ranges is unexpected in light of the inherent weakness of most cellulose acetate filaments. In some cases, the final cellulose acetate staple fibers may exhibit similar retained tenacities as compared to identical but uncrimped staple fibers.

Crimping is performed such that the final staple fibers have a crimp frequency of at least about 8, 9, 10, 11, 12, 13, or 14 and not more than about 22, 21, 20, 19, 18, 17, 16, 15, 14, 13, 12, 10, 9 crimps per inch (CPI), measured according to ASTM D3937. The crimp frequency of the crimped filament yarn may also fall within one or more of the above ranges, although the crimped filament yarn may have similar, or slightly different, values for crimp frequency than the staple fibers formed from cutting the filament yarn. For example, in some cases, the difference between the crimp frequency of the filament yarn and the staple fibers formed from that filament yarn may be at least about 0.5, at least about 1, or at least about 1.5 CPI and/or not more than about 5, not more than about 2.5, not more than about 2, not more than about 1.5, not more than about 1, or not more than about 0.75 CPI. In other embodiments, when the fibers are uncrimped, the fibers (and/or filament yarn from which the fibers are formed) may can have a crimp frequency of not more than 2 or 1 CPI, or it may be 0 CPI. In some embodiments, when measured on a filament yarn, the crimp frequency can be measured in at least 5 different locations along the filament yarn. Typically, these locations can be spaced apart from one another and from the ends of the filament yarn by at least one-half inch.

According to some embodiments, the ratio of the crimp frequency to the linear denier per filament of the individual filaments can be greater than about 2.75:1, 2.80:1, 2.85:1, 2.90:1, 2.95:1, 3.00:1, 3.05:1, 3.10:1, 3.15:1, 3.20:1, 3.25:1, 3.30:1, 3.35:1, 3.40:1, 3.45:1, or 3.50:1. In some cases, this ratio may be even higher, such as, for example, greater than about 4:1, 5:1, 6:1, 7:1, 8:1, 9:1 or even 10:1 particularly when, for example, the filaments being crimped are relatively fine.

When crimped, the crimp amplitude of the fibers or filaments may vary and can, for example, be at least about 0.85, 0.90, 0.91, 0.92, 0.93, 0.94, 0.95, 0.96, 0.97, 0.98, 0.99, 1.00, 1.01, 1.02, 1.03, 1.04, or 1.05 mm. Additionally, or in the alternative, the crimp amplitude of the fibers or filaments may be not than about 1.75, 1.70, 1.65, 1.60, 1.58, 1.55, 1.50, 1.45, 1.40, 1.37, 1.35, 1.30, 1.29, 1.28, 1.27, 1.26, 1.25, 1.24, 1.23, 1.22, 1.21, 1.20, 1.19, 1.18, 1.17, 1.16, 1.15, 1.14, 1.13, 1.12, 1.11, 1.10, 1.09, 1.08, 1.07, 1.06, 1.05, 1.04, 1.03, 1.02, 1.01, 1.00, 0.99, 0.98, 0.97, 0.96, 0.95, 0.94, 0.93, 0.92, 0.91, or 0.90 mm.

Additionally, the staple fibers or filaments may have a crimp ratio of at least about 1:1. As used herein, "crimp ratio" refers to the ratio of the non-crimped length of the fiber or filament to the crimped length of the fiber or filament. In some embodiments, the fibers or filaments may have a crimp ratio of at least about 1:1, 1.025:1, 1.05:1, 1.075:1, 1.1:1, 1.125:1, 1.15:1, 1.16:1, 1.175:1, 1.2:1, 1.225:1, 1.23:1, 1.25:1, 1.275:1, 1.3:1, 1.325:1, 1.35:1, 1.375:1, 1.39:1, 1.4:1. Additionally, or in the alternative, the crimped tow or staple fibers may have a crimp ratio of not more than about 2.01:1, 2:1, 1.975:1, 1.95:1, 1.925:1, 1.9:1, 1.875:1, 1.85:1, 1.825:1, 1.8:1, 1.775:1, 1.75:1, 1.725:1, 1.7:1, 1.675:1, 1.65:1, 1.625:1, 1.6:1, 1.575:1, 1.55:1, 1.525:1, 1.5:1, 1.475:1, 1.45:1, 1.425:1, 1.4:1, 1.39:1, 1.375:1, or 1.35:1.

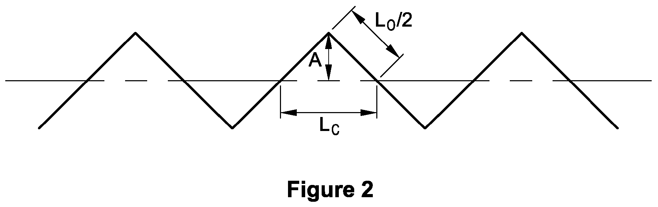

Crimp amplitude and crimp ratio are measured according to the following calculations, with the dimensions referenced being shown in FIG. 2: Crimped length (L_{c}) is equal to the reciprocal of crimp frequency (1/crimp frequency), and the crimp ratio is equal to the straight length (L₀) divided by the crimped length (L₀:L_{c}). The amplitude (A) is calculated geometrically, as shown in FIG. 2, using half of the straight length (L₀/2) and half of the crimped length (L_{c}/2). The uncrimped length is simply measured using conventional methods.

After crimping (or, if not crimped, after spinning and gathering in the assembly zone 30), the filament yarn may further be dried in a drying zone 50 in order to reduce the moisture and/or solvent content of the filament yarn. In some cases, the drying performed in the drying zone 50 may be sufficient to reduce the final moisture content of the filament yarn to at least about 3.5, 4, 4.5, 5, 5.5, 6, 6.5, or 7 weight percent, based on the total weight of the filament yarn and/or not more than about 9, 8.5, 8, 7.5, 7, or 6.5 weight percent. Any suitable type of dryer can be used in the drying zone such as, for example, a forced air oven, a drum dryer, or a heat setting channel. The dryer may be operated at any temperature and pressure conditions that provide the requisite level of drying without damaging the filament yarn. A single dryer may be used or two or more dryers may be used in parallel or in series to achieve the desired final moisture content.

Once dried, the filament yarn may be optionally baled in a baling zone 60 and the resulting bales may be introduced into a cutting zone 70, wherein the filament yarns may be cut into staple fibers. As used herein, the term "staple fiber" refers to a fiber cut from a filament yarn that has a discrete length, which is typically less than about 150 mm. The staple fibers of the present disclosure are cut to a length of at least about 3, 4, 5, 6, 8, 10, 12, 15, 17, 20, 22, 25, 27, 30, 32, or 35 and not more than about 75, 70, 65, 60, 55, 50, 45, 40, 35, 30, 25, 20, 10, or 8 mm. Any suitable type of cutting device may be used that is capable of cutting the filaments to a desired length without excessively damaging the fibers. Examples of cutting devices can include, but are not limited to, rotary cutters, guillotines, stretch breaking devices, reciprocating blades, and combinations thereof. Once cut, the staple fibers may be baled or otherwise bagged or packaged for subsequent transportation, storage, and/or use. The cut length of the staple fibers may be measured according to ASTM D-5103.

According to embodiments of the present disclosure, the staple fibers (or filament yarns used to form such fibers) as described herein are at least partially coated with
at least one fiber finish. As used herein, the terms "fiber finish" and "finish" refer to any suitable type of coating that, when applied to a fiber, modifies friction exerted by and on the fiber, and alters the ability of the fibers to move relative to one another and/or relative to a surface. Finishes are not the same as adhesives, bonding agents, or other similar chemical additives which, when added to fibers, prevent movement between the fibers by adhering them to one another. Finishes, when applied, continue to permit the movement of the fibers relative to one another and/or relative to other surfaces, but may modify the ease of this movement by increasing or decreasing the frictional forces. In some cases, finishes may not modify the frictional forces between fibers, but can, instead, impart one or more other desirable properties to the final coated fiber.

The staple fibers include at least two finishes applied to all or a portion of the staple fiber surface at one or more points during the fiber production process. When two or more finishes are applied to the fibers, the finishes may be applied as a blend of two or more different finishes, or the finishes may be applied separately at different times during the process. The staple fibers are at least partially coated with a spinning or spin finish applied to the filament yarn prior to cutting a filament yarn.

Any suitable method of applying the spinning finish may be used and can include, for example, spraying, wick application, dipping, or use of squeeze, lick, or kiss rollers. When used, the spinning finish may be of any suitable type and can be present on the filaments or staple fibers in an amount of at least about 0.50, 0.55, 0.60, 0.70, 0.80, 0.90, or 1 percent finish-on-yarn (FOY). Alternatively, or in addition, the spinning finish may be present in an amount of not more than about 1.5, 1.4, 1.3, 1.2, 1.1, 1.0, 0.90, 0.80, 0.75, 0.70, 0.65, 0.60, or 0.50 percent finish-on-yarn (FOY) based on the total weight of the dried fiber. As used herein "FOY" or "finish on yarn" refers to the amount of finish on the staple fiber or filament, yarn less any added water. One or two or more types of spinning finishes may be used. In some cases, the spinning finish may be hydrophobic.

Additionally, the staple fibers include a top-coat finish added after crimping to impart certain properties or characteristics to the filaments. The top-coat finish is added at one or more points during the formation of the staple fibers, including, for example, before the cutter (as shown by arrow D in FIG. 1a). When applied, the total amount of top-coat finish on the staple fibers or filament yarn is not more than about 0.50, 0.45, 0.40, 0.35, 0.30, or 0.25 percent FOY, based on the total weight of the dried fiber or filament yarn. The fiber may include one or two or more types of top-coat finishes.

The top-coat finish may be ionic or non-ionic, and when ionic can be a cationic or an anionic finish. The finish may be in the form of a solution, an emulsion, or a dispersion. The top-coat finish may be applied to the fibers or filament yarn according to any known method, including those discussed previously with respect to the spinning finish. In some embodiments, the top-coat finish may be an aqueous emulsion and it may or may not include any type of hydrocarbon, oil including silicone oil, waxes, alcohol, glycol, or siloxanes. Examples of suitable top-coat finishes can include, but are not limited to, phosphate salts, sulfate salts, ammonium salts, and combinations thereof. Minor amounts of other components, such as surfactants, may also be present in order to enhance the stability and/or processability of the finish, and/or to make it more desirable for the intended end use of the fiber (e.g., non-irritating when the fiber will be contacted with a user's skin). Further, depending on the end use of the coated staple fibers, the finish may be compliant with various Federal and state regulations and can be, for example, non-animal, Proposition 65 compliant, and/or FDA food contact approved.

The specific type of top-coat finish applied to the filaments or fibers may depend, at least in part, on the final application for which the staple fibers will be used. In some embodiments, the top-coat finish may enhance the frictional forces between the fibers (or filaments) and/or with other surfaces that contact the fiber (or filaments), while, in other embodiments, the frictional forces between fibers and/or other surfaces may be reduced by the top-coat finish. Additionally, the finishes may impact the interaction of the coated fiber with water by modifying the hydrophilicity or hydrophobicity of the uncoated fiber to make it more or less hydrophilic or more or less hydrophobic. Use of a top-coat finish may or may not impart additional moisture to the fiber itself. In some embodiments, addition of the top-coat finish results in less than 1.0, 0.90, 0.80, 0.70, 0.60, 0.50, 0.40, 0.30, or 0.20% FOY moisture added to the uncoated fiber or filament.

In some cases, it has been found that top-coat finishes that enhance fiber-to-fiber friction as compared to an identical but uncoated fiber may be desirable for fibers of relatively low (e.g., not more than 8 CPI) or no crimp frequency, while, in other cases, it has been found that fibers having relatively higher crimp frequency (e.g., 16 CPI or higher) may benefit from top-coat finishes that either do not modify or reduce fiber-to-fiber friction as compared to an identical but uncoated fiber. In some cases, fibers having a crimp frequency in the range of from about 8 to about 16 CPI or about 10 to about 14 CPI may be processed with no top-coat finish. In some cases, only a top-coat finish may be applied to the fibers.

Further, in some embodiments, the top-coat (and/or spinning) finish may include other additives such as, for example, an anti-static agent. In addition, the finish may also include one or more other additives such as a wetting agent, antioxidants, biocides, anti-corrosion agents, pH control agents, emulsifiers, and combinations thereof. It is also possible that one or more additives may be added to a fiber as a coating, but without additional friction-modifying properties. For example, an antistatic agent may be applied to a fiber that does not otherwise include a top-coat finish and may be suitably formed into a nonwoven web as described herein.

When present, any suitable anti-static agent may be used and, in some cases, the anti-static agent may include polar and/or hydrophilic compounds. When used, such additives may be present in any suitable amount such as, for example, at least about 0.10, 0.15, 0.20, 0.25, 0.30, or 0.35 weight percent and/or not more than about 3, 2.9, 2.8, 2.7, 2.6, 2.5, 2.4, 2.3, 2.2, 2.1, 2.0, 1.9, 1.8, 1.7, 1.6, 1.5, 1.4, 1.3, 1.2, 1.1, 1, 0.90, 0.80, 0.70, 0.60, or 0.50 weight percent, based on the total weight of the finish.

When the staple fibers are coated with an anti-static finish, the coated fiber may exhibit a static half-life of not more than about 100, 90, 80, 75, 70, 65, 60, 55, 50, 45, 40, 35, 30, 25, 22, 20, 17, 15, 12, 10, 8, 5, 3, 2, 1.5, or 1 second, measured according to AATCC 84-2011. In some embodiments, the staple fibers may have a static half-life of not more than about 30, 25, 20, 18, 15, 12, 10, or 8 minutes. In other embodiments, the static half-life of the coated fiber may be at least about 30 seconds, at least about 1 minute, at least about 5, 8, 10, 15, 20, 30, 40, 50, 60, 75, 90, or 100 minutes and/or not more than about 120, 110, 100, 90, 75, 60, 45, 40, 35, 30, 20, 15, or 12 minutes, measured according to AATCC 84-2011.

In some embodiments, this may be not more than 95, 90, 85, 80, 75, 70, 65, 60, 55, 50, 45, 40, 35, 30, 25, 20, 15, 10, or 5 percent of the static half-life of an identical but uncoated fiber. In some cases, the static half-life of the coated fiber may be at least 5, 10, 15, 20, 25, 30, 35, 40, 45, 50, 55, 60, 65, 70, 75, 80, 85, 90, or 95 percent less than the static half-life of an identical but uncoated fiber.

Alternatively, or in addition, the coated staple fibers described herein may have a surface resistivity (Log R) of at least about 2, 2.5, 3, 3.5, 4, 4.5, 5, 5.5, 6, 6.5, 7, 7.5, 8, 8.5, or 9 and/or not more than about 11, 10.5, 10, 9.75, 9.5, 9.25, 9, 8.75, 8.5, 8.25, 8, 7.75, 7.5 measured according to AATCC TM76-2011. The surface resistivity was measured using a Monroe Electronics resistivity meter (Model No. 272A) connected to a Keithley Instruments isolation box (Model No. 6104) using an isolation cup for measuring the resistivity of the staple fibers. The surface resistivity (Log R) is calculated by multiplying the surface resistance by the ratio of the length of the area being tested to its width and expressing the result as the base 10 logarithm of the calculated value.

The staple fibers or filament yarns are at least partially coated with at least one spinning finish and at least one top-coat finish. The total amount of all finishes present on the staple fibers or filament yarns according to embodiments of the present disclosure can be at least about 0.50, 0.55, 0.60, 0.65, 0.70, 0.75, 0.80, 0.85, 0.90, 0.95, 1.0, or 1.05 percent FOY and/or not more than about 10, 9, 8, 7, 6, 5, 4, 3, 2, 1.5, 1.4, 1.3, 1.2, 1.1, 1.0, 0.90, 0.80, 0.75, 0.70, 0.65, 0.60, 0.55, 0.50, or 0.45 percent FOY, based on the total weight of the dried fiber. The amount of finish on the fibers as expressed by weight percent may be determined by solvent extraction according to ASTM D2257.

A staple pad of the fibers whose friction is to be measured is sandwiched between a weight on top of the staple pad and a base that is underneath the staple pad and is mounted on the lower crosshead of an Instron 5966 Blue Hill machine (product of

The coated staple fibers may exhibit a fiber-to-fiber (F/F) staple pad coefficient of friction (SPCOF) of at least about 0.10, 0.15, 0.20, 0.25, 0.30, 0.32, 0.35, 0.40, 0.42, 0.45, 0.50, 0.55 and/or not more than about 1, 0.95, 0.90, 0.85, 0.80, 0.75, 0.70, 0.65, 0.60, 0.55, 0.50, 0.45, 0.40, or 0.35, measured as described in U.S. Patent No. 5,683,811, modified as below. Instron Engineering Corp., Canton, Mass) with Series IX software. The staple pad is prepared by carding the staple fibers (using a roller top laboratory card) to form a batt which is cut into sections, that are 12 ins in length and 3 ins wide, with the fibers oriented in the length dimension of the batt. Enough sections are stacked up so the staple pad weighs 3 g. The metal weight on top of the staple pad is of length (L)100 mm, width (W) 45 mm ins, and height (H) 40 mm, and weighs 1200 gm. The surfaces of the weight and of the base that contact the staple pad are covered with 60 GC sandpaper attached with doubled sided tape, so that it is the sandpaper that makes contact with the surfaces of the staple pad. The staple pad is placed on the base. The weight is placed on the middle of the pad. A nylon monofil line is attached to one of the smaller vertical (W×H) faces of the weight and passed around a small pulley up to the upper crosshead of the Instron, making a 90 degree wrap angle around the pulley.

A computer interfaced to the Instron is given a signal to start the test. The lower crosshead of the Instron is moved down at a speed of150 (+/- 30) mm/min. The staple pad, the weight and the pulley are also moved down with the base, which is mounted on the lower crosshead. Tension increases in the nylon monofil as it is stretched between the weight, which is moving down, and the upper crosshead, which remains stationary. Tension is applied to the weight in a horizontal direction, which is the direction of orientation of the fibers in the staple pad. Initially, there is little or no movement within the staple pad. The force applied to the upper crosshead of the Instron is monitored by a load cell and increases to a threshold level, when the fibers in the pad start moving past each other. (Because of the Emery cloth at the interfaces with the staple pad, there is little relative motion at these interfaces; essentially any motion results from fibers within the staple pad moving past each other.) The highest friction force level indicates what is required to overcome the fiber-to-fiber static friction and is recorded. The lowest friction force is the dynamic friction force. The average friction force is the average of static and dynamic friction force.

Four values are used to compute the average friction force (average load at 20-60 mm peel extension). The staple pad fiber-to-fiber coefficient of friction is determined by dividing the measured average friction force by the 1200 gm weight. The scroop value could be determined as the difference between static and dynamic friction force.

Additionally, or in the alternative, the coated staple fibers may exhibit a fiber-to-metal (F/M) staple pad coefficient of friction (SPCOF) of at least about 0.10, 0.12, 0.15, 0.17, 0.20, 0.22, 0.25, 0.30, 0.32 0.35, 0.40, 0.42, 0.45, 0.48, 0.50, 0.55, 0.60 and/or not more than about 1, 0.95, 0.90, 0.85, 0.80, 0.75, 0.70, 0.65, 0.60, 0.55, 0.50, 0.45, 0.40, 0.37, 0.35, 0.32, or 0.30, measured as described in measured as described in U.S. Patent No. 5,683,811, modified as above and with the exception that the 1200-gram metal weight surface is not covered with the staple pad or the sandpaper when measuring the fiber-to-metal SPCOF.

and

In another embodiment, yarns described herein may have a F/F coefficient of friction value within one or more of the above ranges measured using a continuous tension tester electronic device (CTT-E) according to ASTM D3412 with the specified yarn parameters, a speed of 20 m/min, an input tension of 10 grams, and a single twist applied to the filament.

Additionally, filament yarns coated with a spinning and/or top-coat finish according to embodiments of the present disclosure may exhibit a fiber-to-metal (F/M) coefficient of friction of at least about 0.01, 0.05, 0.10, 0.15, 0.20, 0.25, 0.30, 0.35, 0.40, 0.45, 0.50, 0.55, 0.57, 0.60, or 0.65 and/or not more than about 0.80, 0.75, 0.70, 0.65, 0.60, 0.55, 0.50, 0.45, or 0.40. Values for the F/M coefficient of friction of continuous filaments can be determined according to ASTM D3108 with the specified yarn parameters, a speed of 100m/min, and an input tension of 48 grams.

In another embodiment, yarns described herein may have a F/M coefficient of friction value within one or more of the above ranges measured using a continuous tension tester electronic device (CTT-E) according to ASTM D3108 with the specified yarn parameters, a speed of 100 m/min, and an input tension of 10 grams.

The fiber-to-fiber cohesion of the coated staple fibers may be described by the "scroop value," exhibited by the coated fiber. The scroop value, measured as the difference between static and dynamic pulling forces, of the coated fibers described herein can be less than 160 grams-force (g). In some embodiments, the coated staple fibers may exhibit a scroop value of at least about 10, 15, 20, 25, 30, 35, 40, 45, 50, 55, 60, 65, 70, 75, 80, 85, 90, 95, 100, 105, 110, 115, 120, or 150 grams-force (gf) and/or not more than about 275, 250, 200, 195, 190, 185, 180, 175, 170, 165, 160, 155, 150, 145, 140, 135, 130, 125, 120, 115, 110, 105, or 100 gf. Coated staple fibers with lower cohesion, as indicated by a lower scoop values, may form nonwoven materials with an overall softer feel.

The static and dynamic friction (in gram-force) and the resulting scroop value may be calculated from the staple pad friction method described in U.S. Patent No. 5,683,811 and U.S. Patent No. 5,480,710, but using an Instron 5500 series machine, rather than an Instron 1122 machine. The fiber-to-fiber static friction is determined as described in the '710 patent as the maximum threshold pulling force at low pulling speed upon reaching equilibrium pulling behavior, and the fiber-to-fiber dynamic friction is similarly calculated, but is the minimum threshold level of force as the staple pad traverses a slip-stick behavior. The scroop is calculated as the difference between static and dynamic friction pulling forces with units of gram-force.

The coated staple fibers as described herein may also exhibit higher-than-expected strength. For example, in some embodiments, the coated staple fibers may be formed from filaments that exhibit a tenacity of at least about 0.5, 0.55, 0.60, 0.65, 0.70, 0.75, 0.80, 0.85, 0.90, 0.95, 1.0, 1.05, 1.1, 1.15, 1.20, 1.25, 1.30, or 1.35 grams-force/denier (g/denier) and/or not more than 2.50, 2.45, 2.40, 2.35, 2.30, 2.25, 2.20, 2.15, 2.10, 2.05, 2.00, 1.95, 1.90, 1.85, 1.80, 1.75, 1.70, 1.65, 1.60, 1.55, 1.50, 1.47, 1.45, or 1.40 g/denier, measured according to ASTM D3822. Additionally, in some embodiments, the elongation at break of the coated staple fibers (or filaments from which the staple fibers are formed) can be at least about 5, 6, 10, 15, 20, or 25 percent and/or not more than about 50, 45, 40, 35, or 30 percent, measured according to ASTM D3822.

Traditionally, cellulose acetate fibers and filaments have been coated with a plasticizer in order to facilitate formation and ultimate biodegradability of the final fibrous article. However, fibers and filament yarns described herein include little or no plasticizer and have unexpectedly been shown to exhibit enhanced biodegradability under industrial, home, and soil conditions, even as compared to cellulose acetate fibers with higher levels of plasticizer.

In some embodiments, the fibers described herein can include not more than about 30, 27, 25, 22, 20, 17, 15, 12, 10, 9.5, 9, 8.5, 8, 7.5, 7, 6.5, 6, 5.5, 5, 4.5, 4, 3.5, 3, 2.5, 2, 1.5, 1, 0.5, 0.25, or 0.10 percent plasticizers, based on the total weight of the fiber, or the fibers may include no plasticizer. When present, the plasticizer may be incorporated into the fiber itself by being blended with the solvent dope or cellulose acetate flake, or the plasticizer may be applied to the surface of the fiber or filament by spraying, by centrifugal force from a rotating drum apparatus, or by an immersion bath.

Examples of plasticizers that may or may not be present in or on the fibers can include, but are not limited to, aromatic polycarboxylic acid esters, aliphatic polycarboxylic acid esters, lower fatty acid esters of polyhydric alcohols, and phosphoric acid esters. Further examples can include, but are not limited to, dimethyl phthalate, diethyl phthalate, dibutyl phthalate, dihexyl phthalate, dioctyl phthalate, dimethoxyethyl phthalate, ethyl phthalylethyl glycolate, butyl phthalylbutyl glycolate, tetraoctyl pyromellitate, trioctyl trimellitate, dibutyl adipate, dioctyl adipate, dibutyl sebacate, dioctyl sebacate, diethyl azelate, dibutyl azelate, dioctyl azelate, glycerol, trimethylolpropane, pentaerythritol, sorbitol, glycerin triacetate (triacetin), diglycerin tetracetate, triethyl phosphate, tributyl phosphate, tributoxyethyl phosphate, triphenyl phosphate, and tricresyl phosphate, and combinations thereof. In some embodiments, the fibers of the present disclosure may not include any type of plasticizer or other additive, and can consist essentially of, or consist of, cellulose acetate and not more than 1 percent FOY of a spinning finish.

Additionally, the cellulose acetate fibers described herein may not have undergone additional treatment steps designed to enhance the biodegradability of the fibers. For example, the fibers may not have been hydroylzed or treated with enyzmes or microorganisms. The fibers may include not more than about 1, 0.75, 0.5, 0.25, 0.1, 0.05, or 0.01 weight percent of an adhesive or bonding agent and may include less than 1, 0.75, 0.5, 0.25, 0.1, 0.05, or 0.01 weigh percent of modified or substituted cellulose acetate. In some embodiments, the fibers may not include any adhesive or bonding agent and may not be formed from any substituted or modified cellulose acetate. Substituted or modified cellulose acetate may include cellulose acetate that has been modified with a polar substituent, such as a substituent selected from the group consisting of sulfates, phosphates, borates, carbonates, and combinations thereof.

Cellulose acetate fibers, filaments, and yarns as described herein can be used to form nonwoven webs that can be used in several types of fibrous articles. For example, in some cases, coated staple fibers as described herein may be suitable for use in forming nonwoven fabrics that exhibit unexpected and improved properties, such as strength, durability, flexibility, softness, and absorbency. Additionally, staple fibers as described herein exhibit unique properties such as lower friction, higher strength, and more durability, which facilitate faster, more efficient, and more uniform processing of the fibers into nonwoven webs.

Nonwoven fabrics according to embodiments of the present disclosure may be formed according to any suitable process. Turning now to FIG. 1b, the major steps of a process for forming a nonwoven web are provided. In general, as shown in FIG. 1b, the process of forming nonwovens includes two main steps - a web forming step performed in a web forming zone 110 and a web bonding step performed in a web bonding zone 120. The web forming step may be performed under wet or dry conditions and the web bonding step may be carried out mechanically, hydro-mechanically, chemically, and/or thermally. In some cases, the web forming step may include one or more wet-laid processes, one or more spun-melt processes, one or more dry-laid processes, or a spun-melt process in combination with a dry-laid process. Spun-melt processes include smelt blowing, spunbonding, and solution blowing. Dry-laid processes include air laying and carding processes. When a combination of a dry-laid and spun-melt processes are used, one or more dry-laid fiber stream(s) may be co-mingled or otherwise combined with one or more spun-melt fiber stream(s) to form a hybrid nonwoven substrate. Staple fibers according to embodiments of the present disclosure can be used in any of these processes under conditions suitable for forming a web without unduly damaging the fibers.

As shown in FIG. 1b, staple fibers as described herein may be introduced into the web forming zone, wherein the fibers may be formed into a web using a wet laid or a dry laid process such, as for example, carding or air-laying. In a carding process, fibers placed on a conveyor, or card, and are passed through a pair of rollers (or other movable surfaces) having a set of metal teeth or other gripping surfaces. As the surfaces move relative to one another, the fibers are mechanically separated and aligned to form a web. In an air laid process, the fibers are entrained in streams of air which are directed to a conveyor, onto which the fibers are deposited to form a web. Similarly, in a wet laid process, fibers are dispersed in water or another liquid medium and passed through a drying mat or filter onto which the fibers are deposited to form a paper-like web. Suitable ranges of values for particular properties, such as length and crimp, of the staple fibers may vary depending on the process used to produce the nonwoven web.

Once the web is formed, the web may be transported to the web bonding zone 120 as shown in FIG. 1b, wherein it is bonded using chemical, thermal, and/or mechanical methods to form a bonded web. Examples of suitable mechanical bonding methods include, but are not limited to, hydroentangling, needle punching, stitching, and combinations thereof. Examples of suitable chemical bonding techniques include, but are not limited to, saturation bonding, spray bonding, foam bonding, use of adhesive powders, use of binder fibers, and combinations thereof. Examples of thermal bonding methods include, but are not limited to, calendaring, ultrasonic bonding, and through-air oven bonding. Particular suitable combinations of web formation and bonding steps include, but are not limited to, formation by carding and bonding by hydroentanglement, formation by carding or air laying and thermal bonding, formation by wet laying and chemical bonding, and formation by air laying or carding and chemical bonding.

In some embodiments, a plurality of cellulose acetate staple fibers may be used alone to form a nonwoven web as described above. In such cases, at least about 90, 92, 95, 97, 99, or up to 100 weight percent of the staple fibers in the nonwoven web are cellulose acetate fibers. In some embodiments, at least about 90, 91, 92, 93, 94, 95, 96, 97, 98, 99, or all of the fibers used to form the nonwoven web may be at least partially coated with at least one finish, as described previously.

In other embodiments, a nonwoven web may be formed from a blend of cellulose acetate staple fibers with one or more additional fibers. In some cases, the blend may include cellulose acetate fibers in combination with at least two, at least three, or four or more types of additional fibers. The additional fibers may be high or low static fibers, or may have other desirable properties such as adhesiveness and antimicrobial properties, or the additional fibers may be binder fibers used to chemically bond the cellulose acetate staple fibers during the web bonding step. In some cases, the other fibers are of a known and desirable biodegradability.

When used in a blend, the cellulose acetate staple fibers may be present in an amount of at least about 5, 10, 15, 20, 25, 30, 35, 40, 45, 50, 55, 60, 65, 70, 75, 80, 85, 90, or 95 percent, based on the total weight of the blend. Additionally, or in the alternative, the amount of cellulose acetate fibers in a fiber blend may be not more than about 95, 90, 85, 80, 75, 70, 65, 60, 55, 50, 45, 40, 35, 30, 25, 20, 15, 10, or 5 percent, based on the total weight of the blend. One or more of the other fibers may be present in an amount of at least about 5, 10, 15, 20, 25, 30, 35, 40, 45, 50, 55, 60, 65, 70, 75, 80, 85, 90, or 95 weight percent and/or not more than about 99, 97, 95, 90, 85, 80, 75, 70, 65, 60, 55, 50, 45, 40, 35, 30, 25, 20, 15, 10, or 5 weight percent, based on the total weight of the blend. Compositions of specific blends can be determined according to AATCC TM20A-2014, No. 1.

Other types of fibers suitable for use in a blend with cellulose acetate staple fibers can include natural and/or synthetic fibers including, but not limited to, fibers formed from cotton, regenerated cellulose such as rayon or viscose, wood pulp, acetates such as polyvinylacetate, wool, glass, polyamides including nylon, polyesters such as polyethylene terephthalate (PET), polycyclohexylenedimethylene terephthalate (PCT) and other copolymers, olefinic polymers such as polypropylene and polyethylene, polycarbonates, polysulfates, polysulfones, polyethers, acrylics, acrylonitrile copolymers, polyvinylchloride (PVC), polylactic acid, polyglycolic acid, derivatives thereof, and combinations thereof.

In some cases, the fibers may be single-component fibers, while, in other cases, the fibers could be multicomponent fibers including cellulose acetate with one or more other types of materials. When the fibers are bicomponent or multicomponent fibers, the fibers may have any suitable cross-section, including, for example, in a side-by-side cross-section, a core-and-sheath cross-section, an islands-in-the-sea cross-section, a tipped cross-section, or a segmented pie cross-section. Some of the fibers could be core and sheath fibers with identical or dissimilar materials for core and sheath including cellulose acetate as either core or sheath material.

The process for forming a nonwoven web with cellulose acetate fibers as described herein may be performed on a lab-, pilot-, and/or commercial scale. It has been discovered that use of the cellulose acetate fibers described herein may provide processing advantages that permit formation of nonwoven webs on a larger, commercial scale. For example, in some embodiments, the web forming step may be carried out at a rate of at least about 50, 75, 100, 125, 150, 175, 200, 225, 250, 275, 300, 325, 350, 375, 400, 425, 450, 475, or 500 meters per minute (m/min). Additionally, or in the alternative, the web forming step may be performed at a rate of not more than about 600, 575, 550, 525, 500, 475, 450, 425, 400, 375, 350, 325, or 300 m/min.

Nonwoven webs formed according to embodiments of the present disclosure can have a wide range of values for several properties. Often, the particular value or set of values for a given property of the nonwoven depend on its ultimate end use. In some embodiments, nonwoven webs can have a thickness of at least about 0.25, 0.30, 0.35, 0.40, 0.45, 0.50, 0.55, 0.60, 0.65, 0.70, 0.75, 0.80, 0.85, 0.90, or 0.95 mm and/or not more than about 2.75, 2.5, 2.25, 2.0, 1.9, 1.8, 1.7, 1.6, 1.5, 1.4, 1.3, 1.2, 1.1, 1.05, 0.95, 0.90, 0.85, 0.80, 0.75, 0.70, 0.65, 0.60, 0.55, or 0.50 mm. In some cases, the thickness of the nonwoven webs can be at least about 20, 30, 40, 50, 60, 70, 80, 90, 100, 125, 150, 175, or 200 mm and/or not more than about 400, 375, 350, 325, 300, 275, 250, 225, 200, 175, 150, 125, 100, 90, 80, 70, 60, 50, 40, 30, or 20 mm. Thickness can be measured according to NWSP 120.1.R0 (15).

Additionally, the nonwoven webs may have a basis weight of at least about 15, 20, 25, 30, 35, 40, 45, 50, 51, 52, 53, 54, 55, 56, 57, 58, 59, 60, 61, or 62 grams per square meter (gsm) and/or not more than about 80, 75, 74, 73, 72, 71, 70, 69, 68, 67, 66, 65, 64, 63, or 62 gsm. In some cases, the nonwoven webs can have a basis weight of at least about 50, 75, 100, 125, 150, 175, 200, 225, 250, 275, 300, 325, 350, 375, 400, 425, 450, 475, 500, 525, 550, 575, 600, 700, 800, 900, or 1000 gsm. Alternatively, or in addition, the nonwoven webs may have a basis weight of not more than about 8000, 7500, 7000, 6500, 6000, 5500, 5000, 4500, 4000, 3500, 3000, 2500, 2000, 1500, 1000, 500, 400, 300, 200, or 150 gsm. Basis weight can be measured according to NWSP 130.1.R0 (15).

In some cases, the specific basis weight of the nonwoven may depend on its final application and/or the method by which it is formed. For example, in some cases, nonwoven articles with light basis weight, such as, for example from about 0.1 to about 5 gsm may be used as a functional layer in a hybrid construction or laminate, such as a nanofiber layer in various types of filtration media. In other cases, when the nonwoven is used in a feminine hygiene or diaper application, it may have a basis weight in the range of from about 10 to about 70 gsm, while the basis weight for absorbent cores may be in the range of from about 100 to about 300 gsm. The basis weight for various types of wipes may range from about 50 to about 500 gsm or higher, with baby wipes having a typical basis weight from about 50 to about 75 gsm, food service wipes having a basis weight from about 60 to about 90 gsm, and industrial wipes having a basis weight of from about 100 to about 350 gsm, or even 500 or higher, depending on the specific end use. When used in automotive applications, the nonwoven may have a basis weight in the range of from about 500 to about 8000 gsm, or about 500 to about 3000 gsm.

According to some embodiments, a nonwoven web formed by the present disclosure can exhibit one or more of the following characteristics: (i) a wet tensile strength in the machine direction (MD) in the range of 10 to 2000 Nm²/kg, normalized for the basis weight of the nonwoven; (ii) a wet tensile strength in the cross direction (CD) in the range of 10 to 1000 Nm²/kg, normalized for the basis weight of the nonwoven; (iii) a dry tensile strength in the machine direction (MD) in the range of 10 to 2000 Nm²/kg, normalized for the basis weight of the nonwoven; (iv) a dry tensile strength in the cross direction (CD) in the range of 10 to 1000 Nm²/kg, normalized for the basis weight of the nonwoven; an absorbency in the range of 5 to 20 grams of water per grams of fiber (g/g); and (vi) a real softness in the range of from about 2.5 to about 6 dB. In some cases, a nonwoven may exhibit at least two, at least three, at least four, at least five, or all of characteristics (i) through (vi) listed above.

Nonwoven webs formed according to the present disclosure can have a dry tensile strength in the machine direction of at least about 0.5, 1, 2, 5, 10, 12, 15, 20, 25, 30, 35, 40, 45, 50, 55, or 60 N/in and/or not more than about 250, 245, 240, 235, 230, 225, 220, 215, 210, 205, 200, 195, 190, 185, 180, 175, 170, 165, 160, 155, 150, 145, 140, 135, 130, 125, 120, 115, 110, 100, 95, 90, 85, 90, 75, 60, 5, 50, 45, 40, 35, 30, or 25 N/in, measured according to the procedure described in NWSP 110.4 Option A with a 1-inch test strip. All tensile strength measurements were performed on a 1-inch strip of sample, unless otherwise stated.

Additionally, or in the alternative, nonwoven webs as described herein may have a dry tensile strength in the cross direction of at least about 0.5, 1, 3, 4, 5, 10, 15, 20, 25, 30, 35, 40, or 45 N/in and/or not more than about 225, 200, 190, 180, 175, 170, 160, 150, 140, 130, 125, 120, 110, 100, 90, 80, 75, 70, 60, 50, 45, 40, 35, 30, 25, 20, 15, 12, 10, 8, or 5 N/in, measured according to NWSP 110.4 Option A.

In some embodiments, the ratio of dry tensile strength in the machine direction to dry tensile strength in the cross direction (dry MD:CD) can be not more than about 10:1, 9.5:1, 9:1, 8.5:1, 8:1, 7.5:1, 7:1, 6.5:1, 6:1, 5.5:1, 5:1, 4.5:1, 4:1, 3.5:1, 3:1, 2.5:1, 2:1, 1.5:1, 1.25:1, or 1.1:1. In some cases, the ratio of dry MD:CD can be at least about 1.01:1, 1.05:1, 1.10:1, 1.15:1, 1.20:1, 1.25:1, 1.30:1, 1.35:1, 1.4:1, 1.45:1, 1.5:1, 1.55:1, 1.6:1, 1.65:1, 1.7:1, 1.75:1, 1.8:1, or 1.85:1.

Nonwoven webs formed as described herein may also have a wet tensile strength in the machine direction of at least about 0.5, 1, 1.5, 5, 10, 15, 20, 25, 30, 35, 40, 45, or 50 N and/or not more than about 250, 240, 230, 220, 210, 200, 190, 180, 170, 160, 150, 145, 140, 135, 130, 125, 120, 115, 110, 105, 100, 95, 90, 85, 80, 75, 70, 65, 60, 50, 40, 35, 30, 25, or 20 N/in, measured according to NWSP 110.4 Option A.

Additionally, nonwoven webs formed as described herein can have a wet tensile strength in the cross-direction of at least about 0.5, 1, 1.5, 2, 3, 4, 5, 8, 10, 12, 15, 18, or 20 N/in and/or not more than about 120, 115, 110, 105, 100, 95, 90, 85, 80, 75, 70, 65, 60, 55, 50, 45, 40, 35, 30, 28, 25, 20, 15, 12, or 10 N/in, measured according to NWSP 110.4 Option A.

In some embodiments, the ratio of wet tensile strength in the machine direction to wet tensile strength in the cross direction (wet MD:CD) can be not more than about 10:1, 9.5:1, 9:1, 8.5:1, 8:1, 7.5:1, 7:1, 6.5:1, 6:1, 5.5:1, 5:1, 4.5:1, 4:1, 3.5:1, 3:1, 2.5:1, 2:1, 1.5:1, 1.25:1, or 1.1:1. In some cases, the ratio of wet MD:CD can be at least about 1.01:1, 1.05:1, 1.10:1, 1.15:1, 1.20:1, 1.25:1, 1.30:1, 1.35:1, 1.4:1, 1.45:1, 1.5:1, 1.55:1, 1.6:1, 1.65:1, 1.7:1, 1.75:1, 1.8:1, or 1.85:1.

The tensile strength of the nonwoven webs formed as described herein may also be normalized according to the basis weight, thickness, and/or bulk density of the web. In some cases, nonwoven webs formed as described herein may also have a wet tensile strength in the machine direction, normalized for the basis weight of the nonwoven, of at least about 10, 20, 40, 60, 80, 100, 200, 300, 400, 500, 600, 700, 800, or 900 Nm²/kg and/or not more than about 2000, 1900, 1800, 1700, 1600, 1500, 1400, 1300, 1200, 1100, 1000, 900, 800, 700, 600, 500, or 400 Nm²/kg, measured according to NWSP 110.4 Option A. Additionally, a nonwoven web may have a wet tensile strength in the cross-direction, normalized for the basis weight of the nonwoven, of at least about 10, 20, 40, 60, 80, 100, 200, 240, or 250 Nm²/kg and/or not more than about 1000, 900, 800, 700, 600, 560, 500, 400, or 300 Nm²/kg, measured according to NWSP 110.4 Option A.

The dry tensile strength in the machine direction, normalized according to basis weight of the nonwoven, may be at least about 10, 25, 50, 100, 200, 300, 400, 500, 600, 700, 800, 900, or 1000 Nm²/kg and/or not more than about 5000, 4500, 4000, 3500, 3400, 3000, 2500, 2000, 1500, 1000, 750, or 500 Nm²/kg, while the dry tensile strength in the cross direction normalized for basis weight can be at least about 10, 25, 50, 80, 100, 200, 250, or 300 Nm²/kg and/or not more than about 4000, 3500, 3000, 2500, 2000, 1500, 1200, 1000, 900, or 500 Nm²/kg, measured according to NWSP 100.4 Option A.

Nonwoven webs may also have a wet tensile strength in the machine direction, normalized for the thickness of the nonwoven, of at least about 2000, 3000, 4000, 5000, 6000, 7000, 8000, 9000, 10,000, 15,000, 20,000, 25,000, 30,000, 35,000, 40,000, or 45,000 N/m and/or not more than about 150,000, 145,000, 140,000, 135,000, 130,000, 125,000, 120,000, 117,000, 115,000, 110,000, 100,000, 80,000, 60,000, 40,000, or 20,000 N/m, measured according to NWSP 110.4 Option A. Additionally, a nonwoven web may have a wet tensile strength in the cross-direction, normalized for the thickness of the nonwoven, of at least about 2000, 3000, 4000, 5000, 6000, 7000, 8000, 9000, 10,000, 12,000, 15,000, or 20,000 N/m and/or not more than about 100,000, 95,000, 90,000, 85,000, 83,000, 80,000, 75,000, 70,000, 65,000, 60,000, 55,000, 50,000, 47,000, 45,000, or 40,000 N/m, measured according to NWSP 110.4 Option A.

The dry tensile strength in the machine direction, normalized according to the thickness of the nonwoven, may be at least about 1000, 2000, 3000, 4000, 5000, 6000, 7000, 8000, 9000, 10,000, 12,000, 15,000, 20,000, 25,000, 30,000, 35,000, 40,000, 45,000, or 50,000 N/m and/or not more than about 450,000, 417,000, 400,000, 350,000, 300,000, 283,000, 250,000, or 200,000 N/m, while the dry tensile strength in the cross direction normalized for thickness can be at least about 3000, 4000, 5000, 6000, 7000, 8000, 9000, 10,000, 11,000, 12,000, 13,000, 14,000, or 15,000 N/m and/or not more than about 400,000, 350,000, 300,000, 250,000, 200,000, 150,000, 100,000, 75,000, or 50,000 N/m, measured according to NWSP 100.4 Option A.

When normalized for the bulk density, nonwoven webs formed as described herein may also have a wet tensile strength in the machine direction of at least about 0.01, 0.05, 0.07, 0.10, 0.12, 0.15, 0.20, 0.25, 0.30, 0.35, 0.40, 0.45, 0.50, 0.54, or 0.55 Nm³/kg and/or not more than about 2.0, 1.9, 1.8, 1.7, 1.6, 1.5, 1.4, 1.3, 1.2, 1.1, 1.0, 0.9, 0.8, 0.7, 0.6, 0.5, 0.4, or 0.3 Nm³/kg, measured according to NWSP 110.4 Option A. Additionally, a nonwoven web may have a wet tensile strength in the cross-direction, normalized for the bulk density of the nonwoven, of at least about 0.01, 0.02, 0.05, 0.07, 0.10, 0.12, 0.15, 0.20, 0.25, 0.30, 0.35, 0.40, 0.45, 0.50, 0.54, or 0.55 Nm³/kg and/or not more than about 2.0, 1.9, 1.8, 1.7, 1.6, 1.5, 1.4, 1.3, 1.2, 1.1, 1.0, 0.90, 0.80, 0.70, 0.60, 0.56, 0.50, 0.40, or 0.3 Nm³/kg, measured according to NWSP 110.4 Option A.

The dry tensile strength in the machine direction, normalized according to bulk density of the nonwoven, may be at least about 0.01, 0.02, 0.05, 0.07, 0.10, 0.12, 0.15, 0.20, 0.25, 0.30, 0.35, 0.40, 0.45, 0.50, 0.55, or 0.60 Nm³/kg and/or not more than about 5, 4.5, 4, 3.5, 3.4, 3, 2.5, 2, 1.5, 1, 0.5, or 0.3 Nm³/kg, while the dry tensile strength in the cross direction normalized for basis weight can be at least about 0.01, 0.02, 0.05, 0.07, 0.10, 0.12, 0.15, 0.18, 0.20, 0.25, 0.30, 0.35, 0.40, 0.45, 0.50, 0.55, or 0.60 Nm³/kg and/or not more than about 2.0, 1.9, 1.8, 1.7, 1.6, 1.5, 1.4, 1.3, 1.2, 1.1, 1.0, 0.90, 0.80, 0.70, 0.60, 0.56, 0.50, 0.40, or 0.3 Nm³/kg, measured according to NWSP 100.4 Option A.

In some cases, the wet bondability index (BI₂₀) of the nonwoven web can be at least about 0.1, 0.2, 0.5, 1, 2, 2.5, 5, 6, 7, 8, 9, 10, 11, 12, or 13 and/or not more than about 30, 29, 28, 27, 26, 25, 24, 23, 22, 21, 20, 19, 18, 17, 16, 15, 14, 13, 12, 11, 10, 9, 8, 7, 6, 5, or 4. The dry bondability index of a nonwoven as described herein can be at least about 0.1, 0.5, 1, 2, 2.5, 3, 4, 5, 6, 7, 8, 9, 10, 12, 15, 17, or 20. Alternatively, or in addition, the dry bondability of a nonwoven can be not more than about 50, 45, 40, 35, 30, 25, 20, 15, or 10. The bondability index of a nonwoven is defined as the square root of the product of the tensile strength in the machine direction and the tensile strength in the cross direction. The calculated bondability index is multiplied by 20 and divided by the actual base weight in g/m² to report bondability index in standard nonwovens base weight of 20g/m² (BI₂₀). The wet and dry tensile strengths are measured as described herein.

Additionally, or in the alternative, a nonwoven web including cellulose acetate staple fibers as described herein may have an absorbency of at least 300 percent (3 grams of water per gram of fiber). In other embodiments, the nonwoven web may have an absorbency of at least about 400, 450, 500, 550, 600, 650, 700, 750, 800, 850, 900, 950, 1000, 1050, 1100, or 1150 percent, or at least about 4, 4.5, 5, 5.5, 6, 6.5, 7, 7.5, 8, 8.5, 9, 9.5, 10, 10.5, 11, or 11.5 grams of water per gram of fiber. In some embodiments, nonwoven webs may have an absorbency of not more than about 2500, 2400, 2300, 2200, 2100, 2000, 1950, 1900, 1850, 1800, 1750, 1700, 1650, 1600, 1550, 1500, 1450, 1400, 1350, 1300, 1250, 1200, or 1150 percent, or not more than about 25, 24, 23, 22, 21, 20, 19.5, 19, 18.5, 18, 17.5, 17, 16.5, 16, 15.5, 15, 14.5, 14, 13.5, 13, 12.5, 12, or 11.5 grams of water per gram of fiber. Absorbency values provided herein are measured as described in NWSP 010.1-7.2.

Nonwoven webs as formed herein may also exhibit desirable wicking properties. For example, in some embodiments, nonwoven webs formed from cellulose acetate fiber may have a wicking height, measured in the cross or machine direction, at 5 minutes of not more than 200 mm. In some case, the wicking height of a nonwoven web as described herein can be not more than about 200, 175, 150, 125, 100, 95, 90, 85, 80, 75, 70, 65, 60, 55, 50, 45, 40, 35, 30, 25, 20, 15, 10, or 5 mm, measured as described in NWSP 010.1-7.3. Additionally, or in the alternative, the wicking height can be at least about 1, 5, 10, or 20 mm, measured as described in NWSP 010.1-7.3.

In some embodiments, nonwoven webs as formed herein may have a wicking height, measured in the machine or cross direction, of at least about 1, at least about 2, at least about 3, at least about 5, at least about 10, at least about 12, at least about 15, at least about 20, at least about 25, at least about 30, at least about 35, at least about 40, at least about 45, at least about 50, or at least about 55 mm, measured as described in NWSP 010.1-7.3. Alternatively, or in addition, nonwoven webs as described herein may have a wicking height, measured in the machine or cross direction, of not more than about 70, not more than about 65, not more than about 60, not more than about 55, not more than about 50, not more than about 45, not more than about 40, not more than about 35, not more than about 30, not more than about 25, not more than about 20, not more than about 15, not more than about 12, not more than about 10, not more than about 8, not more than about 5, not more than about 3, or not more than about 2 mm, measured as described in NWSP 010.1-7.3.

Depending on the specific end use application, nonwoven webs may also be formed that exhibit desirable levels of softness and/or opacity. Softness is measured according to the Emtec Tissue Softness Analyzer (TSA) method as described in the Example Section below. In some embodiments, the hand feel of a nonwoven web produced as described herein can be at least about 104, 104.5, 105, 105.5, 106, 106.25, 106.5, 106.75, 107, 107.25, 107.5, 107.75, or 108, as determined by the TSA method using the QA1 algorithm. Additionally, or in the alternative, the real softness of a nonwoven web, measured according to the TSA method, can be at least about 2, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3, 3.05, 3.1, 3.15, 3.2, 3.25, 3.3, 3.35, or 3.4 dB and/or not more than about 6, 5.75, 5.5, 5.25, 5.0, 4.75, 4.50, 4.45, 4.40, 4.35, 4.30, 4.25, 4.20, 4.15, 4.10, 4.05, 4.0, 3.95, 3.90, 3.85, 3.80, 3.75, 3.7, 3.65, 3.6, 3.55, 3.5, or 3.45 dB.

In some embodiments, the roughness of a nonwoven web formed as described herein can be at least about 1, 2, 5, 8, 10, 12, 12.5, 13, 13.5, 14, 14.5, 15, 15.5, 16, 16.5, 17, 17.5, 18, 18.5, or 19 dB and/or not more than about 30, 28, 25, 24, 22.5, 22, 21.5, 21, 20.5, 20, 19.5, 19, 18.5, 18, 17.5, 17, 16.5, 16, 15.5, 15, 14.5, or 14 dB. The web roughness measured according to the TSA method described in the Examples below correlates to the vertical vibration of the tissue sample itself caused by the horizontal motion of the blade and the surface structure.

Opacity of a nonwoven web may be measured according to the procedure described in NWSP 060.1.R0. Nonwoven webs according to the present disclosure may have an opacity of at least about 40, 45, 50, 55, 60, 65, 70, 75, 80, 85, 90, 95, or up to 100 percent, depending on the specific end use application. Alternatively, or in addition, nonwoven webs as described herein may have an opacity of not more than about 95, 90, 85, 80, 75, 70, 65, 60, or 55 percent, measured according to the above procedure. Some end uses, such as filters, may not require high levels of opacity, while others, such as wipes, may.

The staple fibers and nonwovens formed therefrom can be biodegradable, meaning that such fibers are expected to decompose under certain environmental conditions. The degree of degradation can be characterized by the weight loss of a sample over a given period of exposure to certain environmental conditions. In some cases, the material used to form the staple fibers, the fibers, or the nonwoven webs or articles produced from the fibers can exhibit a weight loss of at least about 5, 10, 15, or 20 percent after burial in soil for 60 days and/or a weight loss of at least about 15, 20, 25, 30, or 35 percent after 15 days of exposure to a typical municipal composter. However, the rate of degradation may vary depending on the particular end use of the fibers, as well as the composition of the remaining article, and the specific test. Exemplary test conditions are provided in U.S. Patent No. 5,970,988 and U.S. Patent No. 6,571,802.

In some embodiments, the cellulose ester fibers may be biodegradable fibers and such fibers may be used to form fibrous articles such as textiles, nonwoven fabrics, filters, and yarns. Unexpectedly, it has been found that cellulose ester fibers as described herein exhibit enhanced levels of environmental non-persistence, characterized by better-than-expected degradation under various environmental conditions. Fibers and fibrous articles described herein may meet or exceed passing standards set by international test methods and authorities for industrial compostability, home compostability, and/or soil biodegradability.

To be considered "compostable," a material must meet the following four criteria: (1) the material must be biodegradable; (2) the material must be disintegrable; (3) the material must not contain more than a maximum amount of heavy metals; and (4) the material must not be ecotoxic. As used herein, the term "biodegradable" generally refers to the tendency of a material to chemically decompose under certain environmental conditions. Biodegradability is an intrinsic property of the material itself, and the material can exhibit different degrees of biodegradability, depending on the specific conditions to which it is exposed. The term "disintegrable" refers to the tendency of a material to physically decompose into smaller fragments when exposed to certain conditions. Disintegration depends both on the material itself, as well as the physical size and configuration of the article being tested. Ecotoxicity measures the impact of the material on plant life, and the heavy metal content of the material is determined according to the procedures laid out in the standard test method.

The cellulose ester fibers can exhibit a biodegradation of at least 70 percent in a period of not more than 50 days, when tested under aerobic composting conditions at ambient temperature (28°C ± 2°C) according to ISO 14855-1 (2012). In some cases, the cellulose ester fibers can exhibit a biodegradation of at least 70 percent in a period of not more than 49, 48, 47, 46, 45, 44, 43, 42, 41, 40, 39, 38, or 37 days when tested under these conditions, also called "home composting conditions." These conditions may not be aqueous or anaerobic. In some cases, the cellulose ester fibers can exhibit a total biodegradation of at least about 71, 72, 73, 74, 75, 76, 77, 78, 79, 80, 81, 82, 83, 84, 85, 86, 87, or 88 percent, when tested under according to ISO 14855-1 (2012) for a period of 50 days under home composting conditions. This may represent a relative biodegradation of at least about 95, 97, 99, 100, 101, 102, or 103 percent, when compared to cellulose subjected to identical test conditions.

To be considered "biodegradable," under home composting conditions according to the French norm NF T 51-800 and the Australian standard AS 5810, a material must exhibit a biodegradation of at least 90 percent in total (e.g., as compared to the initial sample), or a biodegradation of at least 90 percent of the maximum degradation of a suitable reference material after a plateau has been reached for both the reference and test item. The maximum test duration for biodegradation under home compositing conditions is 1 year. The cellulose ester fibers as described herein may exhibit a biodegradation of at least 90 percent within not more than 1 year, measured according 14855-1 (2012) under home composting conditions. In some cases, the cellulose ester fibers may exhibit a biodegradation of at least about 91, 92, 93, 94, 95, 96, 97, 98, 99, or 99.5 percent within not more than 1 year, or the fibers may exhibit 100 percent biodegradation within not more than 1 year, measured according 14855-1 (2012) under home composting conditions.

Additionally, or in the alternative, the fibers described herein may exhibit a biodegradation of at least 90 percent within not more than about 350, 325, 300, 275, 250, 225, 220, 210, 200, 190, 180, 170, 160, 150, 140, 130, 120, 110, 100, 90, 80, 70, 60, or 50 days, measured according 14855-1 (2012) under home composting conditions. In some cases, the fibers can be at least about 97, 98, 99, or 99.5 percent biodegradable within not more than about 70, 65, 60, or 50 days of testing according to ISO 14855-1 (2012) under home composting conditions. As a result, the cellulose ester fibers may be considered biodegradable according to, for example, French Standard NF T 51-800 and Australian Standard AS 5810 when tested under home composting conditions.

The cellulose ester fibers can exhibit a biodegradation of at least 60 percent in a period of not more than 45 days, when tested under aerobic composting conditions at a temperature of 58°C (± 2°C) according to ISO 14855-1 (2012). In some cases, the fibers can exhibit a biodegradation of at least 60 percent in a period of not more than 44, 43, 42, 41, 40, 39, 38, 37, 36, 35, 34, 33, 32, 31, 30, 29, 28, or 27 days when tested under these conditions, also called "industrial composting conditions." These may not be aqueous or anaerobic conditions. In some cases, the fibers can exhibit a total biodegradation of at least about 65, 70, 75, 80, 85, 87, 88, 89, 90, 91, 92, 93, 94, or 95 percent, when tested under according to ISO 14855-1 (2012) for a period of 45 days under industrial composting conditions. This may represent a relative biodegradation of at least about 95, 97, 99, 100, 102, 105, 107, 110, 112, 115, 117, or 119 percent, when compared to cellulose fibers subjected to identical test conditions.

To be considered "biodegradable," under industrial composting conditions according to ASTM D6400 and ISO 17088, at least 90 percent of the organic carbon in the whole item (or for each constituent present in an amount of more than 1% by dry mass) must be converted to carbon dioxide by the end of the test period when compared to the control or in absolute. According to European standard ED 13432 (2000), a material must exhibit a biodegradation of at least 90 percent in total, or a biodegradation of at least 90 percent of the maximum degradation of a suitable reference material after a plateau has been reached for both the reference and test item. The maximum test duration for biodegradability under industrial compositing conditions is 180 days. The cellulose ester fibers described herein may exhibit a biodegradation of at least 90 percent within not more than 180 days, measured according 14855-1 (2012) under industrial composting conditions. In some cases, the cellulose ester fibers may exhibit a biodegradation of at least about 91, 92, 93, 94, 95, 96, 97, 98, 99, or 99.5 percent within not more than 180 days, or the fibers may exhibit 100 percent biodegradation within not more than 180 days, measured according 14855-1 (2012) under industrial composting conditions.

Additionally, or in the alternative, cellulose ester fibers described herein may exhibit a biodegradation of least 90 percent within not more than about 175, 170, 165, 160, 155, 150, 145, 140, 135, 130, 125, 120, 115, 110, 105, 100, 95, 90, 85, 80, 75, 70, 65, 60, 55, 50, or 45 days, measured according 14855-1 (2012) under industrial composting conditions. In some cases, the cellulose ester fibers can be at least about 97, 98, 99, or 99.5 percent biodegradable within not more than about 65, 60, 55, 50, or 45 days of testing according to ISO 14855-1 (2012) under industrial composting conditions. As a result, the cellulose ester fibers described herein may be considered biodegradable according ASTM D6400 and ISO 17088 when tested under industrial composting conditions.

The fibers or fibrous articles may exhibit a biodegradation in soil of at least 60 percent within not more than 130 days, measured according to ISO 17556 (2012) under aerobic conditions at ambient temperature. In some cases, the fibers can exhibit a biodegradation of at least 60 percent in a period of not more than 130, 120, 110, 100, 90, 80, or 75 days when tested under these conditions, also called "soil composting conditions." These may not be aqueous or anaerobic conditions. In some cases, the fibers can exhibit a total biodegradation of at least about 65, 70, 72, 75, 77, 80, 82, or 85 percent, when tested under according to ISO 17556 (2012) for a period of 195 days under soil composting conditions. This may represent a relative biodegradation of at least about 70, 75, 80, 85, 90, or 95 percent, when compared to cellulose fibers subjected to identical test conditions.

In order to be considered "biodegradable," under soil composting conditions according the OK biodegradable SOIL conformity mark of Vingotte and the DIN Geprüft Biodegradable in soil certification scheme of DIN CERTCO, a material must exhibit a biodegradation of at least 90 percent in total (*e.g*., as compared to the initial sample), or a biodegradation of at least 90 percent of the maximum degradation of a suitable reference material after a plateau has been reached for both the reference and test item. The maximum test duration for biodegradability under soil compositing conditions is 2 years. The cellulose ester fibers as described herein may exhibit a biodegradation of at least 90 percent within not more than 2 years, 1.75 years, 1 year, 9 months, or 6 months measured according ISO 17556 (2012) under soil composting conditions. In some cases, the cellulose ester fibers may exhibit a biodegradation of at least about 91, 92, 93, 94, 95, 96, 97, 98, 99, or 99.5 percent within not more than 2 years, or the fibers may exhibit 100 percent biodegradation within not more than 2 years, measured according ISO 17556 (2012) under soil composting conditions.

Additionally, or in the alternative, cellulose ester fibers described herein may exhibit a biodegradation of at least 90 percent within not more than about 700, 650, 600, 550, 500, 450, 400, 350, 300, 275, 250, 240, 230, 220, 210, 200, or 195 days, measured according 17556 (2012) under soil composting conditions. In some cases, the cellulose ester fibers can be at least about 97, 98, 99, or 99.5 percent biodegradable within not more than about 225, 220, 215, 210, 205, 200, or 195 days of testing according to ISO 17556 (2012) under soil composting conditions. As a result, the cellulose ester fibers described herein may meet the requirements to receive The OK biodegradable SOIL conformity mark of Vingotte and to meet the standards of the DIN Geprüft Biodegradable in soil certification scheme of DIN CERTCO.

In some embodiments, cellulose ester fibers (or fibrous articles) of the present disclosure may include less than 1, 0.75, 0.50, or 0.25 weight percent of components of unknown biodegradability. In some cases, the fibers or fibrous articles described herein may include no components of unknown biodegradability.

In addition to being biodegradable under industrial and/or home composting conditions, cellulose ester fibers or fibrous articles as described herein may also be compostable under home and/or industrial conditions. As described previously, a material is considered compostable if it meets or exceeds the requirements set forth in EN 13432 for biodegradability, ability to disintegrate, heavy metal content, and ecotoxicity. The cellulose ester fibers or fibrous articles described herein may exhibit sufficient compostability under home and/or industrial composting conditions to meet the requirements to receive the OK compost and OK compost HOME conformity marks from Vingotte.

In some cases, the cellulose ester and fibers and fibrous articles described herein may have a volatile solids concentration, heavy metals and fluorine content that fulfill all of the requirements laid out by EN 13432 (2000). Additionally, the cellulose ester fibers may not cause a negative effect on compost quality (including chemical parameters and ecotoxicity tests).

In some cases, the cellulose ester fibers or fibrous articles can exhibit a disintegration of at least 90 percent within not more than 26 weeks, measured according to ISO 16929 (2013) under industrial composting conditions. In some cases, the fibers or fibrous articles may exhibit a disintegration of at least about 91, 92, 93, 94, 95, 96, 97, 98, 99, or 99.5 percent under industrial composting conditions within not more than 26 weeks, or the fibers or articles may be 100 percent disintegrated under industrial composting conditions within not more than 26 weeks. Alternatively, or in addition, the fibers or articles may exhibit a disintegration of at least 90 percent under industrial compositing conditions within not more than about 26, 25, 24, 23, 22, 21, 20, 19, 18, 17, 16, 15, 14, 13, 12, 11, or 10 weeks, measured according to ISO 16929 (2013). In some cases, the cellulose ester fibers or fibrous articles described herein may be at least 97, 98, 99, or 99.5 percent disintegrated within not more than 12, 11, 10, 9, or 8 weeks under industrial composting conditions, measured according to ISO 16929 (2013).

In some cases, the cellulose ester fibers or fibrous articles can exhibit a disintegration of at least 90 percent within not more than 26 weeks, measured according to ISO 16929 (2013) under home composting conditions. In some cases, the fibers or fibrous articles may exhibit a disintegration of at least about 91, 92, 93, 94, 95, 96, 97, 98, 99, or 99.5 percent under home composting conditions within not more than 26 weeks, or the fibers or articles may be 100 percent disintegrated under home composting conditions within not more than 26 weeks. Alternatively, or in addition, the fibers or articles may exhibit a disintegration of at least 90 percent within not more than about 26, 25, 24, 23, 22, 21, 20, 19, 18, 17, 16, or 15 weeks under home composting conditions, measured according to ISO 16929 (2013). In some cases, the cellulose ester fibers or fibrous articles described herein may be at least 97, 98, 99, or 99.5 percent disintegrated within not more than 20, 19, 18, 17, 16, 15, 14, 13, or 12 weeks, measured under home composting conditions according to ISO 16929 (2013).

Nonwoven webs as described herein may ultimately be used to form one or more of several different types of articles. Such articles may be suitable for use in various consumer, industrial, and/or medical applications. In some embodiments, articles formed from nonwoven webs of the present disclosure may be disposable and can exhibit one or more desirable properties, such as softness, drape, strength, abrasion resistance, cleaning efficiency, opacity, wicking, thickness, compatibility with other components such as fragrances and lotions, and no lint or pilling. Nonwoven fabrics may be incorporated with one or more additional layers such as, for example, water resistant backing layers or additional absorbent layers, to form the final article.

Examples of suitable articles that may be formed from nonwoven webs as described herein can include those for personal, consumer, industrial, food service, medical, and other types of end uses. Specific examples can include, but are not limited to, baby wipes, flushable wipes, disposable diapers, training pants, feminine hygiene products such as sanitary napkins and tampons, adult incontinence pads, underwear, or briefs, and pet training pads. Other examples include a variety of different dry or wet wipes, including those for consumer (such as personal care or household) and industrial (such as food service, health care, or specialty) use.

Nonwoven webs as described herein can also be used as padding for pillows, mattresses, and upholstery, batting for quilts and comforters. In the medical and industrial fields, nonwoven webs described herein may be used for medical and industrial face masks, protective clothing, caps, and shoe covers, disposable sheets, surgical gowns, drapes, bandages, and medical dressings. Additionally, nonwoven webs as described herein may be used for environmental fabrics such as geotextiles and tarps, oil and chemical absorbent pads, as well as building materials such as acoustic or thermal insulation, tents, lumber and soil covers and sheeting. Nonwoven webs may also be used for other consumer end use applications, such as for, carpet backing, packaging for consumer, industrial, and agricultural goods, thermal or acoustic insulation, and in various types of apparel.

Nonwoven webs as described herein may also be used for a variety of filtration applications, including transportation (e.g., automotive or aeronautical), commercial, residential, industrial, or other specialty applications. Examples can include filter elements for consumer or industrial air or liquid filters (e.g., gasoline, oil, water), including nanofiber webs used for microfiltration, as well as end uses like tea bags, coffee filters, and dryer sheets. Further, nonwoven webs as described herein may be used to form a variety of components for use in automobiles, including, but not limited to, brake pads, trunk liners, carpet tufting, and under padding.

The cellulose acetate fibers may also be used to form textiles for agricultural, medical, food, and other applications.

Further, the cellulose acetate fibers may also be used to form filter tow or other filter material for the formation of cigarette filters or filters for smoking articles that exhibit desirable filtration properties, with little or no influence on the flavor of the smoke.

The following examples are given to illustrate the invention and to enable any person skilled in the art to make and use the invention. It should be understood, however, that the invention is not to be limited to the specific conditions or details described in these examples. The patentable scope of the invention is defined by the claims, and may include other examples that occur to those skilled in the art.

### EXAMPLES

### Example 1

Several cellulose acetate filament yarns were formed from cellulose acetate having a degree of substitution of about 2.5. The total denier of each of the filaments yarns was 750, and the filaments had a linear denier per filament (dpf) of 1.8 and were formed with a Y-shaped cross-section. None of the filament yarns were crimped. Each yarn was first coated with a mineral oil-based emulsion typically used as a spinning finish in an amount of 0.70% finish-on-yarn (FOY). Several of the filament yarns were then coated with 0.70% FOY of various types of top-coat finishes, many of which are commercially available from Pulcra Chemicals, using a lube tip applicator. The control sample did not include a top-coat finish. The filament yarns were then tested according to ASTM D3412 with a speed of 0.5 cm/min and an input tension of 50 g to determine the stick-slip and coefficient of sliding friction of each type of coated yarn. Table 1, below, summarizes the results.

**Table 1: Coefficient of Sliding Friction and Stick-Slip for Cellulose Acetate Fibers**

| **Finish** | **Finish Type** | **Coefficient of Sliding Friction** | **Stick-Slip (cN)** |
|---|---|---|---|
| A | STANTEX^{®} 2753 | 0.061 | 119.3 |
| B | STANTEX^{®} F 2098 | 0.051 | 121.4 |
| C | SETILON^{®} KNL | 0.062 | 103.2 |
| D | STANTEX^{®} 215UP | 0.063 | 113.0 |
| E | KATAX^{®} HS-G | 0.066 | 142.0 |
| F | STANTEX^{®} H1385 | 0.065 | 126.5 |
| G | TRYLOX^{®} 5921 | 0.051 | 109.1 |
| H | SUPERCLEAR^{®} 40 N US | 0.057 | 71.1 |
| I | STANTEX^{®} 0781 | 0.043 | 58.0 |
| J | TRYLOX^{®} 5907 | 0.044 | 67.6 |
| K | Mineral-oil based | 0.060 | 104.3 |
| L | Mineral-oil based | 0.045 | 72.0 |
| Control | - | 0.063 | 98.3 |

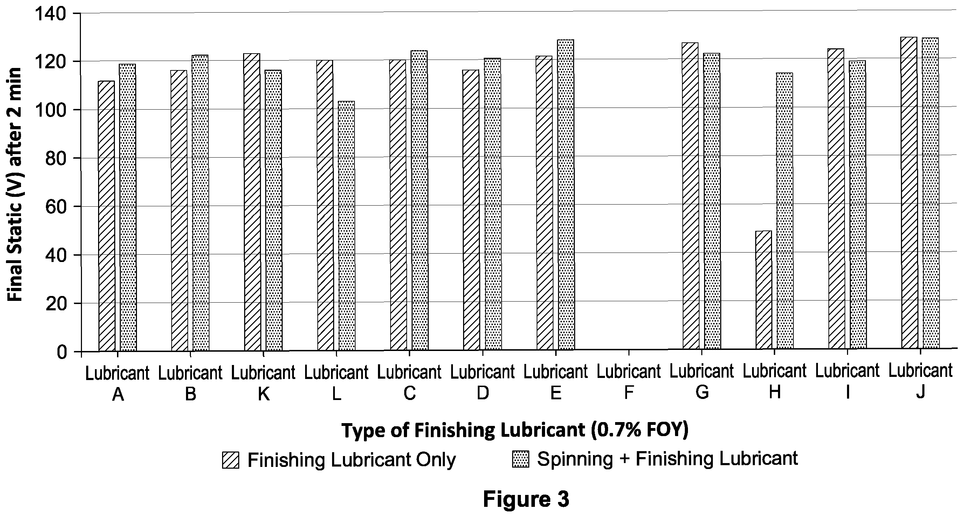

Several additional samples were prepared by forming two sets of similar cellulose acetate filament yarns. The first set of each yarn was coated with a spinning finish as described above and the second was not. Both sets of each yarn were then coated with 0.7% FOY of Finishes A through L shown in Table 1, above, so that one set of yarns was only coated with a top-coat finish and the other was coated with both the spinning finish and top-coat finish. The coated yarns were cut into staple fibers and the static dissipation of each was measured using a Rothschild static voltmeter. FIG. 3 shows the final static charge, in volts, of each coated fiber sample after 2 minutes. As shown in FIG. 3, the fibers coated with Finish F were able to dissipate the total amount of electric charge after the allotted time.

### Example 2

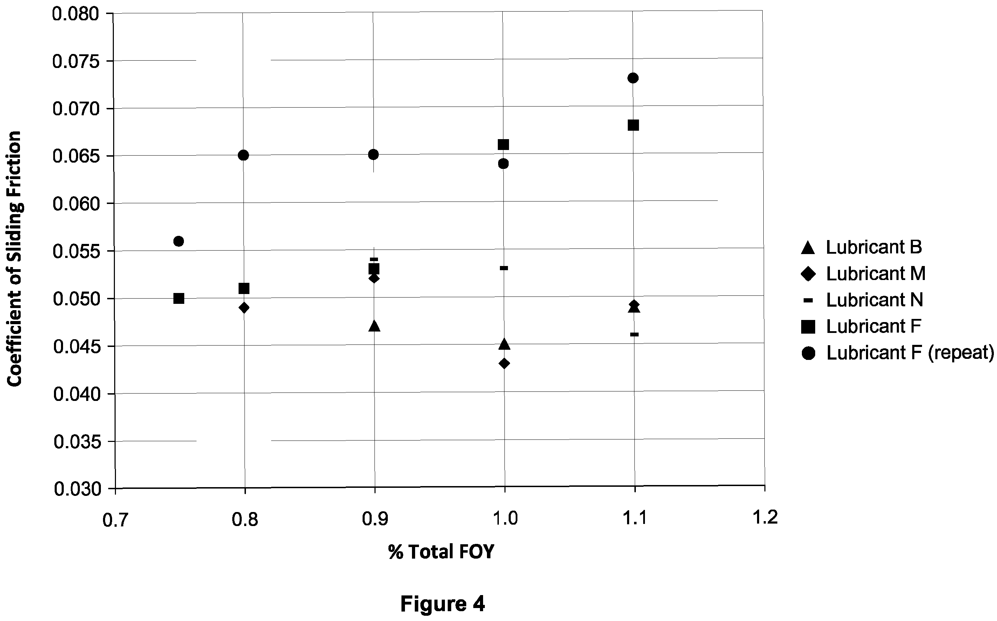

Several cellulose acetate filament yarns were formed from cellulose acetate having a degree of substitution of about 2.5. The filament yarns were formed from individual filaments having a linear denier per filament (dpf) of 1.8 and had a Y-shaped cross-section. None of the filament yarns were crimped. Each yarn was coated with a mineral oil-based emulsion typically used as a spinning finish in an amount of 0.70% FOY and then coated with one of four different top-coat finishes (e.g., Finishes B and F described in Example 1 and additional top-coat Finishes M and N) in varying amounts from 0 to 0.4% FOY. Finish M was STANTEX^{®} 2244 and Finish N was SELBANA^{®}, both commercially available from Pulcra Chemicals. The total amount of finish on each yarn sample ranged from 0.7% to 1.10% FOY. The coefficient of sliding friction (or fiber-to-fiber coefficient of friction) was determined on the filament yarn for each one according to ASTM D3412, with a speed of 0.5 cm/min and an input tension of 50 grams. The results are provided graphically in FIG. 4, as a function of total finish composition.

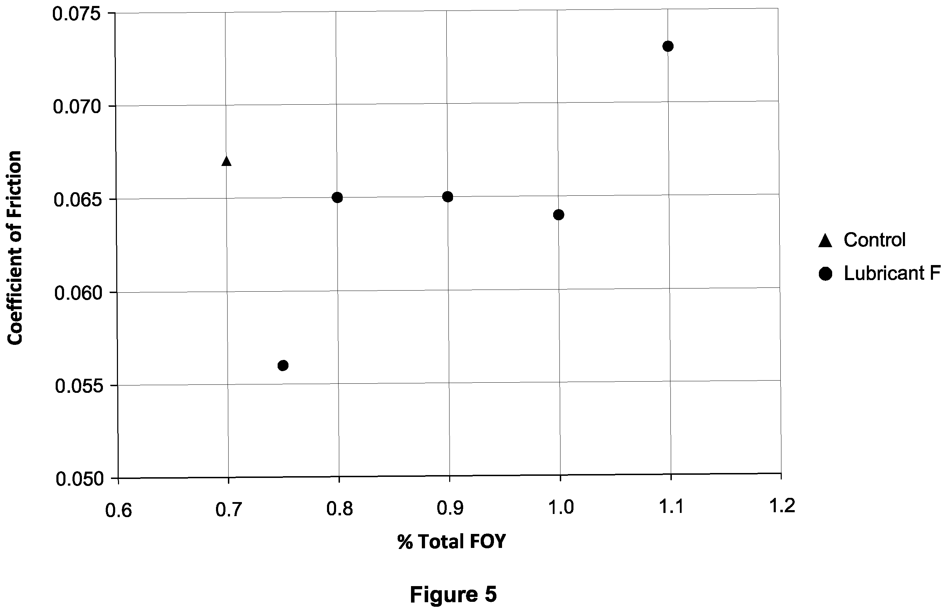

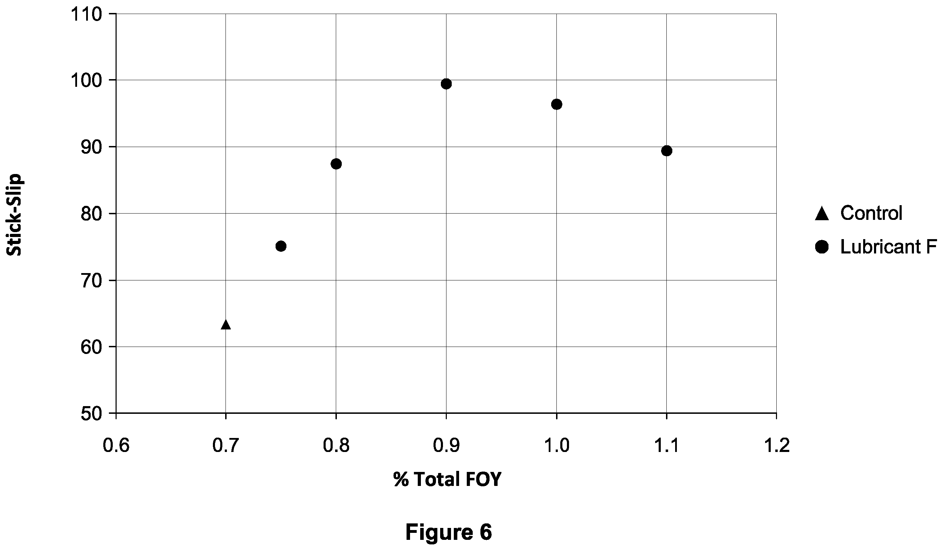

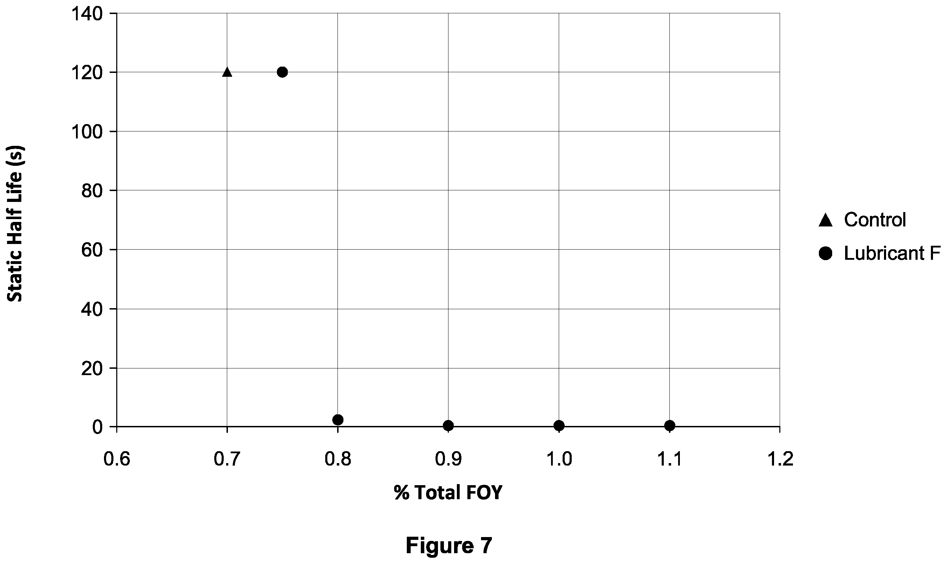

Additional samples were produced by applying varying amounts of Finish F to cellulose acetate filament yarns coated with the spinning finish described above. The coated yarns, which included 0.7% FOY spinning finish and between 0.05% FOY and 0.4% FOY top-coat finish (on a dry basis), were used to determine the coefficient of static friction, stick-slip, and static dissipation for each yarn according to ASTM D3412, with a speed of 0.5 cm/min and an input tension of 50 grams. The results of these analyses illustrated graphically in FIG. 5-7 as a function of amount of top-coat finish. As shown in FIGS. 5 and 6, the coefficient of sliding friction and stick slip tend to increase with increasing amounts of Finish F, while the ability of the coating to dissipate static increases with higher amounts of Finish F, as shown in FIG. 7.

### Example 3

Several cellulose acetate filament yarns were formed from cellulose acetate having a degree of substitution of about 2.5. The filament yarns were formed from individual fibers having a linear denier per filament (dpf) of 1.8 and a Y-shaped cross-section. Each yarn was coated with a mineral oil-based emulsion typically used as a spinning finish in an amount of 0.48% FOY. The filament yarns were crimped to crimp frequencies of 8, 12, and 18 crimps per inch (CPI), measured according to ASTM D3937. Each yarn was then cut to form staple fibers having a length of 38 mm. One half of the staple fibers from each yarn (8 CPI, 12 CPI, and 18 CPI) were contacted with a mixture of isopropanol and hexane to remove the spinning finish and permitted to air dry overnight. The coated and uncoated staple fibers of each crimp frequency were then tested to determine the staple pad fiber-to-fiber (F/F) friction and fiber-to-metal (F/M) coefficients of friction (SPCOF) as described herein but using an Instron 3500 series machine. Additionally, the static friction (in gram-force), dynamic friction (in gram-force) were also measured, along with the scroop, which is the difference between the static and dynamic friction forces. Table 2a, below, summarizes the results.

**Table 2a: Results of Friction Testing of Cellulose Acetate Fibers with Varying Crimp**

| **Fiber** | **Crimp Frequency** | **Coated?** | **Static Friction (gf)** | **Dynamic Friction (gf)** | **Scroop (gf)** | **F/F SPCOF** | **F/M SPCOF** |
|---|---|---|---|---|---|---|---|
| C-1 | 8 CPI | Yes | 553 | 455 | 98 | 0.363 | 0.201 |
| C-2 | 12 CPI | Yes | 616 | 517 | 99 | 0.407 | 0.216 |
| C-3 | 18 CPI | Yes | 871 | 749 | 122 | 0.583 | 0.212 |
| U-1 | 8 CPI | No | 645 | 477 | 168 | 0.404 | 0.201 |
| U-2 | 12 CPI | No | 713 | 541 | 172 | 0.451 | 0.206 |
| U-3 | 18 CPI | No | 940 | 775 | 165 | 0.617 | 0.214 |

As shown in Table 2a, above, the cellulose acetate fibers produced as described above and coated with a spinning finish exhibit lower F/F staple pad coefficients of friction than similarly crimped fibers that do not include a spinning finish. Similarly, the coated fibers exhibited a lower scroop value and similar F/M staple pad coefficients of friction than the uncoated fibers at a given crimp level, which may indicate that the coated fibers have a less harsh feel than similar, uncoated fibers. Additionally, as shown in Table 2a, above, as the crimp frequency of the coated fibers increases from 8 CPI to 18 CPI, so does the F/F and F/M staple pad coefficients of friction. Similar trends are observed amongst the static friction, dynamic friction, and scroop value of the crimped fibers tested as described herein.

Additional filament yarns having a denier of 1.8 dpf, a crimp frequency of 8 CPI were coated with 0.45% FOY of the mineral oil-based spinning finish used to coat yarns C-1 through C-3, as described above. Three of the filament yarns, C-4 through C-6, were then coated with varying amounts of a top-coat finish (Finish F), including 0.4% FOY (C-4), 0.2% FOY (C-5), and 0.01% FOY (C-6).

Several control yarns were also formed. The first control yarn is C-1 shown in Table 2a, above, which had a crimp frequency of 8 CPI and was coated with 0.48% FOY of the mineral oil spinning finish used to coat C-4 through C-6. C-1 did not include a top-coat finish. Controls 2 and 3 were formed from cotton and viscose fibers, respectively. The static and dynamic friction, in grams-force, were measured for each of C-4 through C-6, as well as C-1 and Controls 2 and 3, and the scroop value for each was calculated. Additionally, the filament yarns were cut into staple fibers having a length of 38 mm, and the fiber-to-fiber (F/F) staple pad coefficient of friction (COF) was also determined for a plurality of each type of fiber as described previously. The results are summarized in Table 2b, below.

**Table 2b: Results of Friction Testing of Various Fibers**

| **Fiber** | **Material** | **Crimp Frequency** | **Top Coat?** | **% FOY (Top)** | **Static Friction (gf)** | **Dynamic Friction (gf)** | **Scroop (gf)** | **F/F SPCOF** |
|---|---|---|---|---|---|---|---|---|
| C-4 | cellulose acetate | 8 CPI | Yes | 0.4 | 761 | 607 | 153 | 0.492 |
| C-5 | cellulose acetate | 8 CPI | Yes | 0.2 | 705 | 538 | 167 | 0.447 |
| C-6 | cellulose acetate | 8 CPI | Yes | 0.1 | 681 | 526 | 155 | 0.434 |
| C-1 | cellulose acetate | 8 CPI | No | - | 553 | 455 | 98 | 0.363 |
| Control 2 | cotton | - | - | - | 661 | 633 | 28 | 0.466 |
| Control 3 | viscose | - | - | - | 792 | 496 | 295 | 0.463 |

| | | | | | | | | |
|---|---|---|---|---|---|---|---|---|
| Note: "-" = not determined | | | | | | | | |

In addition, the static dissipation ability of the fibers was determined using the Log R test, which measures the ability of the fiber to dissipate static during processing. Further, the fiber-to-metal (F/M) staple pad coefficient of friction (COF) was also determined as described above, and several of the coated fibers was subjected to a foam test to determine the relative processability of the fibers. The foam test was conducted by placing 5 grams of the fiber in a graduated cylinder with 50 mL of deionized water. After 2 hours, 10 mL of the residual liquid was removed from each graduated cylinder and transferred to a 25-mL graduated cylinder, which was shaken 30 times. The total height of foam in the shaken graduated cylinder was measured after 1 minute and after 5 minutes. The results of these tests are summarized in Table 2c, below.

**Table 2c: Results of Friction, Static Dissipation, & Foaming Testing of Various Fibers**

| **Fiber** | **Material** | **Top Coat?** | **% FOY (Top)** | **F/M SPCOF** | **Log R** | **Foam 1-min (mL)** | **Foam 5-min (mL)** |
|---|---|---|---|---|---|---|---|
| C-4 | cellulose acetate | Yes | 0.4 | 0.211 | 8.4 | 0.3 | 0.2 |
| C-5 | cellulose acetate | Yes | 0.2 | 0.230 | 8.4 | 0.1 | 0.1 |
| C-6 | cellulose acetate | Yes | 0.1 | 0.221 | 8.5 | 0.2 | 0.1 |
| Control 1 | cellulose acetate | No | - | 0.201 | - | - | - |
| Control 2 | cotton | - | - | 0.140 | 10.8 | 2.0 | 1.2 |
| Control 3 | viscose | - | - | 0.162 | 10.5 | 0.1 | 0.0 |

As shown in Table 2c, above, the general trend for fibers having an 8-CPI frequency is that higher levels of top-coat finish results in higher fiber-to-fiber coefficients of friction. Such fibers can be successfully carded to form nonwoven webs. Additionally, as shown by comparison of the data in Tables 2b and 2c, the fiber-to-fiber staple pad coefficient of friction of lower crimp (*e.g*., 8 CPI) fibers with higher levels of high-friction top-coat finish (*e.g*., 0.4 FOY%) tend to exhibit similar levels of fiber-to-fiber friction as higher crimp fibers (*e.g.*, 12 CPI) that do not have a top-coat finish. Thus, in some cases, higher crimp cellulose acetate fibers with little or no top coat finish may be carded (or otherwise formed into a nonwoven) with a similar degree of processability as lower crimp cellulose acetate fibers having higher levels of high friction top-coat finish. This is one example of how selection of a crimp level in combination with the type and amount of top-coat finish may be performed to achieve a desired end result. Further, FIG. 3 also indicates that Finish F could be employed as an antistatic finish.

### Example 4

Several cellulose acetate filament yarns were formed from cellulose acetate having a degree of substitution of about 2.5. The yarns were formed from individual fibers having a Y-shaped cross section and a linear denier per filament (dpf) of 1.8 or 2.5. Each yarn was coated with a mineral oil-based emulsion typically used as a spinning finish in an amount between 0.4 and 0.7% FOY. The filament yarns were crimped to crimp frequencies of 8, 10, 12, 16, 18, and 22 crimps per inch (CPI), measured according to ASTM D3937. The tenacity of individual filaments was measured using a FAVIMAT device according to ASTM D3822.

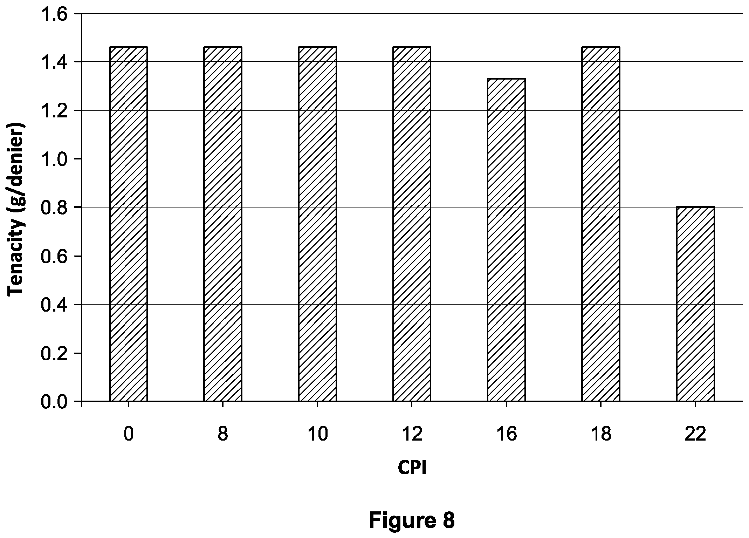

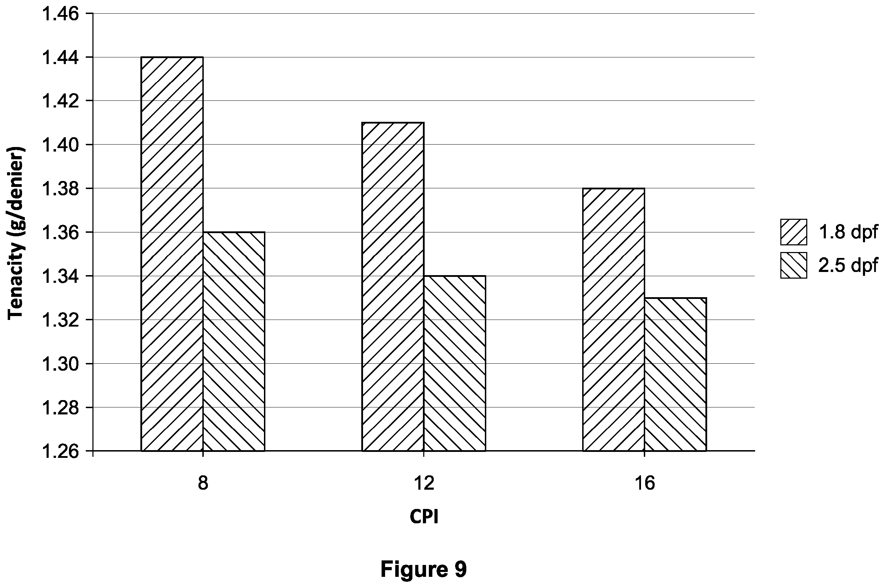

The results of some of these analyses are shown in FIGS. 8 and 9. As generally shown in FIGS. 8 and 9, cellulose acetate filaments having a lower crimp frequency tend to exhibit a higher tenacity. Further, as shown by FIG. 9, for a given crimp frequency, cellulose acetate filaments having a lower denier tend to exhibit a higher tenacity. Additionally, the retained tenacity of several of the 1.8-dpf fibers was also calculated by measuring the tenacity of the crimped fiber and dividing by the average tenacity of an identical but uncrimped fiber of the same denier. The results are also provided in Table 3, below.

**Table 3: Tenacity of Various Cellulose Acetate Fibers**

| **Fiber** | **Crimp Frequency** | **Linear dpf** | **Average Tenacity (g/denier)** | **Relative Tenacity (%)** |
|---|---|---|---|---|
| U-4 | 0 CPI | 1.8 | 1.47 | 100 |
| U-5 | 0 CPI | 2.5 | 1.41 | 100 |
| C-4 | 8 CPI | 1.8 | 1.44 | 98.0 |
| C-5 | 12 CPI | 1.8 | 1.41 | 95.9 |
| C-6 | 16 CPI | 1.8 | 1.38 | 93.9 |
| C-7 | 8 CPI | 2.5 | 1.36 | 96.5 |
| C-8 | 12 CPI | 2.5 | 1.34 | 95.0 |
| C-9 | 16 CPI | 2.5 | 1.33 | 94.3 |

Several additional cellulose acetate filament yarns were formed from cellulose acetate having a degree of substitution of about 2.5. Yarns were formed from individual fibers having a Y-shaped cross section and a linear denier per filament (dpf) of 1.8. Each yarn was coated with a mineral oil-based emulsion typically used as a spinning finish in an amount between 0.4 and 0.7% FOY. The filament yarns were crimped at crimp frequencies ranging from 6.5 to 18 crimps per inch (CPI), measured according to ASTM D3937. The tenacity of the filaments was measured using a FAVIMAT device according to ASTM D3822. The retained tenacity of each fiber, as compared to an identical but uncrimped fiber of the same denier, was also determined, and the results are summarized in Table 4, below.

**Table 4: Tenacity of Variously Crimped Cellulose Acetate Fibers**

| **Fiber** | **Crimp Frequency (CPI)** | **Average Tenacity g/denier** | **Retained Tenacity (%)** |
|---|---|---|---|
| U-4 | - | 1.47 | 100 |
| C-10 | 7 | 1.47 | 100 |
| C-11 | 11 | 1.46 | 99.3 |
| C-12 | 12 | 1.44 | 98.0 |
| C-13 | 17 | 1.37 | 93.2 |
| C-14 | 18 | 1.41 | 95.9 |
| C-15 | 19 | 1.27 | 86.4 |
| C-16 | 10 | 1.42 | 96.6 |
| C-17 | 17 | 1.06 | 72.1 |

As shown in Tables 3 and 4, fibers having lower levels of crimping (e.g., lower CPI) generally exhibit slightly better tenacity than fibers having higher crimp levels (e.g., higher CPI).

### Example 5

Several filament yarns were prepared from cellulose acetate having a degree of substitution of 2.5. The filament yarns were formed from individual cellulose acetate fibers having a linear denier per filament of 1.8 denier and a Y-shaped cross section. Each yarn was crimped to a crimp frequency of 22 CPI and cut into staple fibers. Prior to cutting, the filament yarns were coated with a spinning finish and/or a top-coat finish of the types and in the amounts shown in Table 5, below. Each type of fiber was then blended in a 50/50 weight ratio with PET fibers and the resulting fiber blends were formed into nonwoven webs by carding. The resulting webs were bonded via hydroentanglement. Each nonwoven had a basis weight of approximately 60 grams per square meter (gsm).

**Table 5: Summary of Cellulose Acetate Fibers used to form Nonwoven Webs**

| **Nonwoven** | **Fiber** | **Linear Denier per Filament (dpf)** | **Cross-Section** | **Spinning Finish** | **Amount (% FOY)** | **Top-coat Finish** | **Amount (% FOY)** |
|---|---|---|---|---|---|---|---|
| NW-1 | C-18 | 1.8 | Y | L | 1.3 | - | - |
| NW-2 | C-19 | 1.8 | Y | B | 0.8 | - | - |
| NW-3 | C-20 | 1.8 | Y | K | 0.95 | Finish B | 0.6 |

Additionally, two commercially-available viscose fibers - GALAXY^{®} Trilobal 3.0-dpf regenerated cellulose fiber having Y-shaped cross-section (from Kelheim Fibres) and TENCEL^{®} 1.7-dpf regenerated cellulose fiber with a round cross-section (from Lenzing) were blended with PET fibers to form control nonwovens CW-1 and CW-2, respectively.

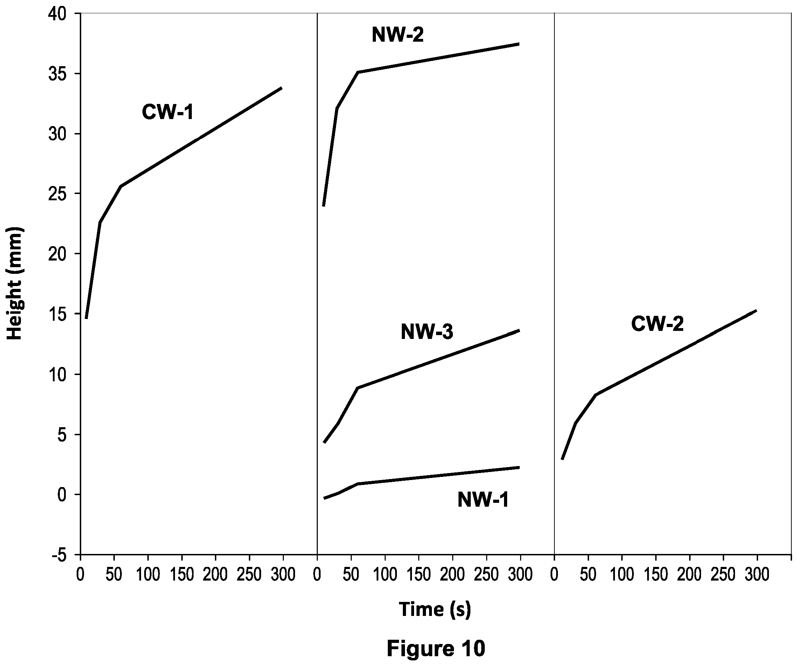

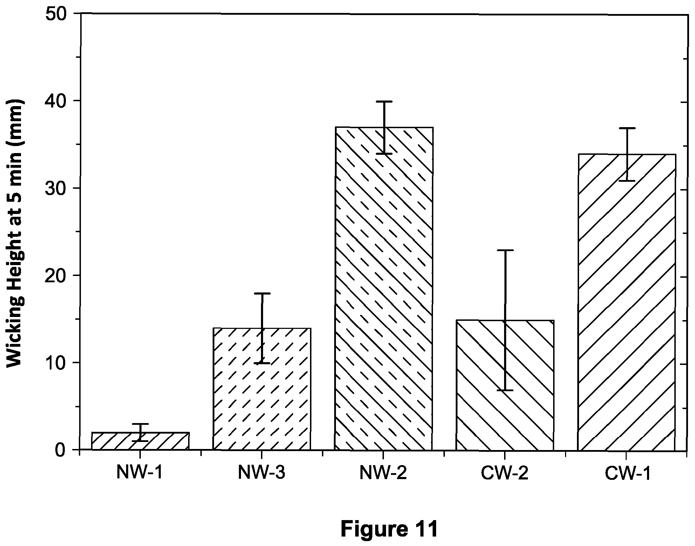

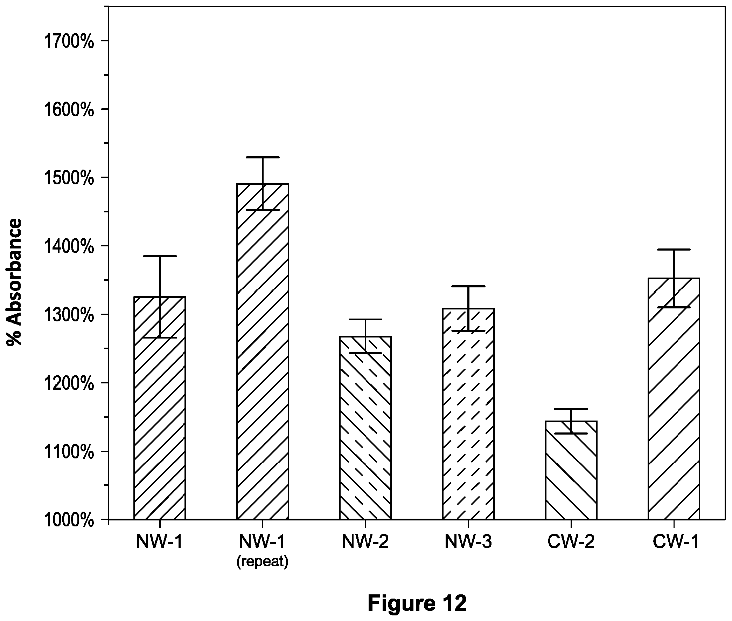

Several tests were performed to compare the performance of each of the nonwovens NW-1 through NW-3 and nonwovens CW-1 and CW-2. In particular, the wicking rate and wicking height at 5 minutes were measured according to NWSP 010.1-7.3 and the results are provided in FIGS. 10 and 11, respectively. The absorbency of each nonwoven was also tested according to NWSP 010.1-7.2 and the results are provided in FIG. 12. As shown in FIG. 10, nonwoven NW-2, which was formed from a 50/50 blend of Fiber C-19 and PET, showed an improved wicking rate as compared to control nonwovens CW-1 and CW-2. Additionally, as shown in FIG. 11, nonwoven NW-2 exhibited a total wicking height after 5 minutes that was comparable to that of control nonwoven CW-1 and was higher than that of control nonwoven CW-2. Additionally, as shown in FIG. 12, each of nonwovens NW-1 through NW-3 exhibited comparable or better absorbency than control nonwovens CW-1 and CW-2.

### Example 6

Several filament yarns were prepared from cellulose acetate having a degree of substitution of 2.5. The filament yarns were formed from individual cellulose acetate filaments having a linear denier per filament of 1.8 or 4.0 denier and a Y, hollow C, octagonal, or X-shaped cross section. The filament yarns were crimped to a crimp frequency of 18 to 22 CPI, and each was coated with 0.7% FOY of a mineral oil-based emulsion typically used as a spinning finish. The filament yarns were then cut into staple fibers and each type of fiber was blended with PET fibers in a 50/50 blend by weight. The resulting blends were formed into nonwoven webs by carding and then bonded by hydroentanglement. A summary of the nonwovens formed in this Example is provided in Table 6.

**Table 6: Summary of Nonwovens NW-5 through NW-10**

| **Nonwoven** | **Fiber** | **Linear Denier per Filament (dpf)** | **Cross-Section** | **Spinning Finish** |
|---|---|---|---|---|
| NW-5 | C-22 | 4 | Hollow C | K |
| NW-6 | C-23 | 4 | Octagon | K |
| NW-7 | C-24 | 4 | Y | K |
| NW-8 | C-25 | 4 | X | K |
| NW-9 | C-24 | 1.8 | Octagon | K |
| NW-10 | C-25 | 1.8 | Y | K |

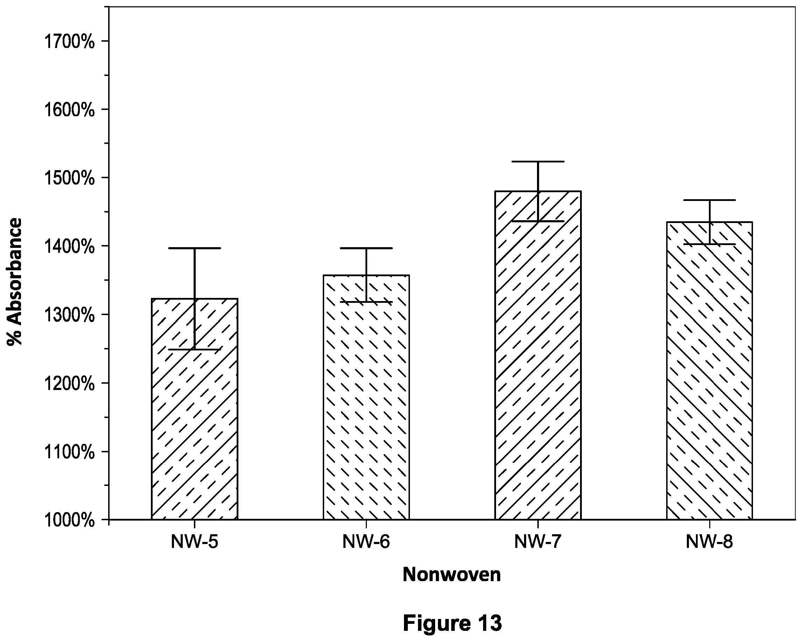

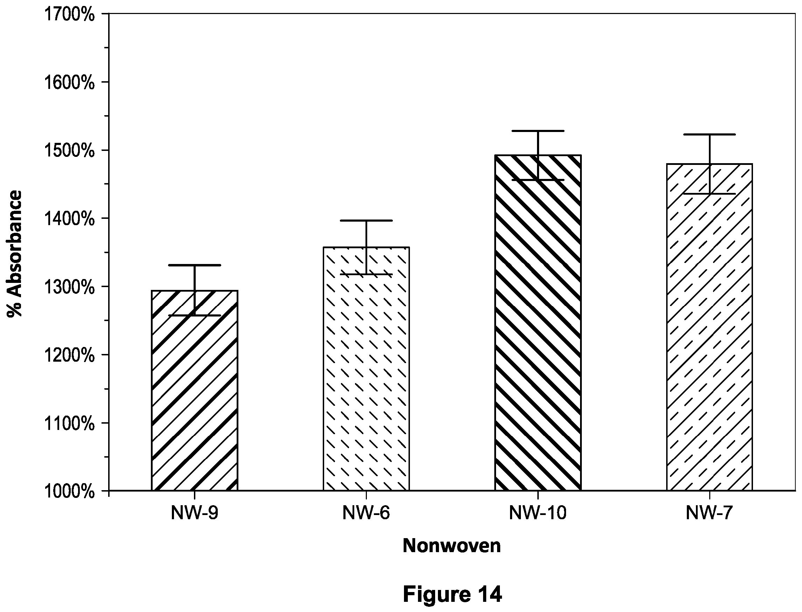

The absorbency of each of the nonwovens summarized in Table 6, above, was measured according to NWSP 010.1-7.2. The results are shown graphically as a function of cross-sectional shape in FIG. 13 and as a function of denier in FIG. 14. As shown in FIG. 13, nonwoven webs formed from cellulose acetate fibers of different cross-sections as described herein show similar absorbency, with Y-shaped fibers providing nonwoven webs of slightly higher absorbency. Additionally, as shown in FIG. 14, the denier of a fiber with a given cross-sectional shape has little impact on the final absorbency of a nonwoven web formed from that fiber.

### Example 7

Several filament yarns were prepared from cellulose acetate having a degree of substitution of 2.5. The filament yarns were formed from individual cellulose acetate filaments having a linear denier per filament of 1.8 or 4 and a Y-shaped or round cross section. The coated yarns were crimped to crimp frequency of about 20 crimps per inch. Next, some yarns were coated with between 0.8 and 1.3% FOY of a single finish (Finish B from Example 1) and the resulting fibers were cut into staple fibers. The staple fibers were then used to form nonwoven webs by carding and bonded by hydroentanglement. A summary of the basic compositions of each of nonwovens NW-11 through NW-14 is provided in Table 7, below.

**Table 7: Summary of Nonwovens NW-11 through NW-14**

| **Nonwoven** | **Fiber** | **Cellulose Acetate Fibers** | | | |
|---|---|---|---|---|---|
| | | **Crimp Frequency (CPI)** | **Cross-Section** | **Filament Denier (dpf)** | **Top-coat Finish** |
| NW-11 | C-26 | 20 | Y | 1.8 | B |
| NW-12 | C-27 | 20 | Y | 4 | K |
| NW-13 | C-28 | 20 | Round | 1.8 | K |
| NW-14 | C-29 | 20 | Y | 1.8 | K |

Additionally, two commercially-available viscose fibers - GALAXY^{®} Trilobal 3.0-dpf regenerated cellulose fiber having Y-shaped cross-section (from Kelheim Fibres) and TENCEL^{®} 1.7-dpf regenerated cellulose fiber with a round cross-section (from Lenzing) were blended with PET fibers to form control nonwovens CW-3 and CW-4, respectively.

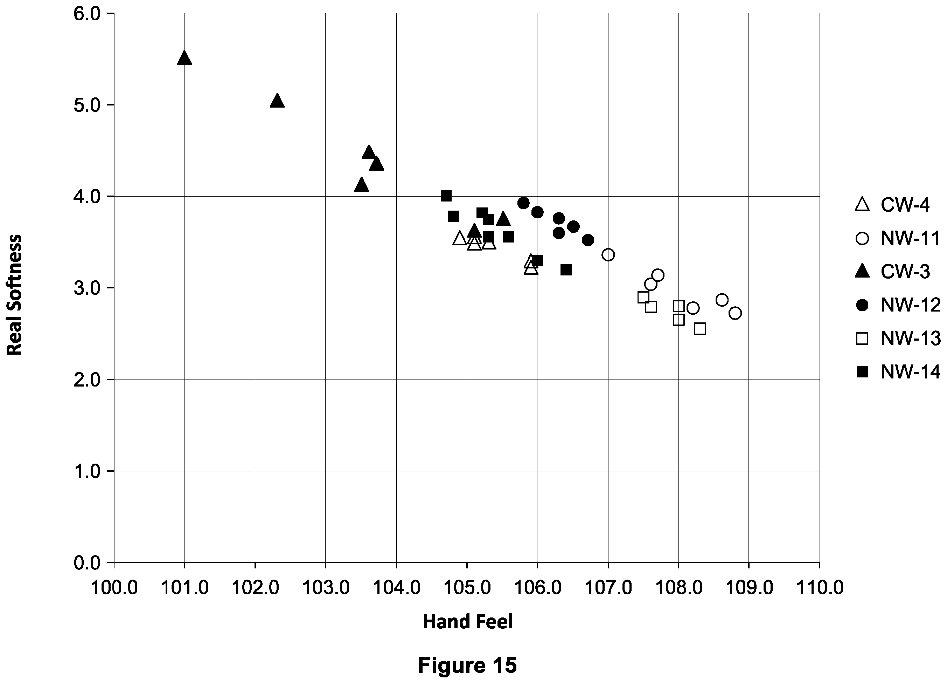

Six nonwovens of each type were prepared, and the real softness, roughness, and stiffness of each was determined using a Tissue Softness Analyzer (TSA) as described by Emtec in the paper "New and objective measuring technique to analyse softness," published in May 2015, and available at www.emtec-papertest.de. The TSA collects data related to the fiber softness, texture, and stiffness and uses built-in mathematical algorithms to calculate standard hand-feel values for a given nonwoven. The real softness measured according to this method correlates to the vibrations of the instrument blade itself, which are mainly caused by the stiffness of the fibers and their level of surface friction. The web roughness measured according to this method correlates to the vertical vibration of the tissue sample itself caused by the horizontal motion of the blade and the surface structure. The nonwoven stiffness measured by this method correlates to the deformation of the sample under a defined force. From the values of real softness, stiffness, and roughness obtained for the nonwovens prepared as described herein, the hand feel of each nonwoven was predicted according to a QAI algorithm based on these three parameters as well as the nonwoven basis weight and thickness. A graph of the predicted hand feel as a function of real softness is provided in FIG. 15, and the results are summarized in Table 8, below.

**Table 8: Softness Testing Results for Several Nonwovens**

| **Nonwoven** | **Avg. Basis Weight (gsm)** | **Avg. Thickness (mm)** | **Real Softness, dB** | | **Roughness. dB** | | **Stiffness** | | **Predicted Hand Feel** | |
|---|---|---|---|---|---|---|---|---|---|---|
| | | | **Mean** | **Std. Dev.** | **Mean** | **Std. Dev.** | **Mean** | **Std. Dev.** | **Mean** | **Std. Dev.** |
| NW-11 | 59 | 0.66 | 3 | 0.25 | 13.5 | 1.19 | 4.2 | 0.16 | 108.0 | 0.68 |
| NW-12 | 62 | 0.80 | 3.7 | 0.15 | 11.5 | 1.45 | 4 | 0.08 | 106.3 | 0.33 |
| NW-13 | 66 | 0.68 | 2.7 | 0.12 | 14.3 | 1.45 | 3.8 | 0.09 | 107.9 | 0.30 |
| NW-14 | 63 | 0.80 | 3.6 | 0.27 | 15.7 | 2.56 | 3.4 | 0.11 | 105.4 | 0.57 |
| CW-3 | 60 | 0.69 | 4.3 | 0.71 | 17.5 | 3.06 | 3.2 | 0.23 | 103.8 | 1.56 |
| CW-4 | 63 | 0.62 | 3.4 | 0.14 | 12.1 | 2.26 | 3.1 | 0.1 | 105.4 | 0.43 |

### Example 8

Several filament yarns were prepared from cellulose acetate having a degree of substitution of 2.5. The filament yarns were formed from individual cellulose acetate filaments having a linear denier per filament of 1.8 and a Y-shaped cross section. The filament yarns were coated with 0.5% FOY a mineral oil-based emulsion typically used as a spinning finish. The coated yarns were crimped to a crimp frequency of 8 crimps per inch (CPI). Next, the filament yarns were coated with 0.1% FOY of a top-coat finish (Finish B from Example 1) and the resulting yarns were cut into staple fibers having a length of 6 mm. The staple fibers were then used alone or in various blends with wood pulp fiber to form nonwoven webs NW-15 through NW-17. The cellulose acetate/wood pulp blends ranged from 20/80 weight blends of cellulose acetate/wood pulp to 50/50 weight blends. A control nonwoven, CW-5, formed from 100 percent wood pulp was also prepared.

The nonwoven webs were formed using an airlaid forming method conducted at a relative humidity of 40% and a temperature of 71°F. The through air oven temperature was 329°F, and the resulting webs were bonded via thermal calendaring rolls operated at a temperature of 250°F with zero nip gap. The dry tensile strength of each of the nonwovens was measured according to NWSP 110.4 Option A, along with the absorption capacity according to NWSP 010.1-7.2. The results of these analyses are summarized in Table 9, below.

**Table 9: Summary of Properties of Several Nonwovens**

| **Nonwoven** | **Fiber Blend** | | **Thickness (mm)** | **Dry Tensile Strength in MD** | | | | **Bond. Index** | **Absorbency (g/g)** |
|---|---|---|---|---|---|---|---|---|---|
| | **Cellulose Acetate (wt%)** | **Wood Pulp (wt%)** | | **Per section (N/in)** | **Per Thickness (N/m)** | **Per Basis Wt. (Nm²/kg)** | **Per Bulk Density (Nm³/kg)** | | |
| CW-5 | 0 | 100 | 0.426 | 24.0 | 28,164 | 240 | 0.102 | 4.8 | 17.4 |
| NW-15 | 20 | 80 | 0.380 | 21.4 | 28,147 | 213.9 | 0.081 | 4.28 | 14.5 |
| NW-16 | 40 | 60 | 0.556 | 20.6 | 18,597 | 206.8 | 0.115 | 4.14 | 15.4 |
| NW-17 | 50 | 50 | 0.384 | 20.4 | 46,630 | 204.5 | 0.079 | 4.09 | 14.5 |

As shown in Table 9, nonwovens formed from cellulose acetate fibers blended with wood pulp showed strength and absorption capacities similar to those formed from wood pulp alone.

### Example 9

Several cellulose acetate filament yarns were formed from cellulose acetate having a degree of substitution of about 2.5. Yarns were formed from a plurality of individual filaments each having either a Y-shaped or round cross-section and a linear denier per filament (dpf) of 1.8 or 2.5. Each yarn was coated during fiber spinning directly with one of two different finishes (e.g., Finishes A and B described in Example 1) in amounts ranging from about 0.40% FOY to about 0.65% FOY. The filament yarns were crimped to crimp frequency of about 16 crimps per inch (CPI), measured according to ASTM D3937 and cut into staple fibers having a length of 38 mm.

Continuous filament yarns (1.8 dpf, Y cross-section, 150 total denier) coated with these same finished types and FOY values were used to determine the fiber-to-fiber (F/F) coefficient of friction (COF) according to ASTM D3412 with the filament yarn parameters as described therein, a speed of 100 m/min, an input tension of 10 grams, and a single twist applied to the filament yarn, and fiber-to-metal (F/M) coefficient of friction according to ASTM D 3108, with the filament yarn parameters as described therein, a speed of 100 m/min, and an input tension of 10 grams. The tenacity of individual filaments was also measured using a FAVIMAT device according to ASTM D3822. The results are summarized in Table 10, below.

**Table 10: Summary of Cellulose Acetate Fibers used to form Nonwoven Webs**

| **Fiber** | **Denier per Filament (dpf)** | **Cross-Section** | **Top-Coat Finish** | **Amount (% FOY)** | **Moisture (wt%)** | **Tenacity (g/denier)** | **F/F COF** | **F/M COF** |
|---|---|---|---|---|---|---|---|---|
| C-30 | 1.8 | Y | B | 0.61 | 6.1 | 1.43 | 0.323 | 0.573 |
| C-31 | 1.8 | round | B | 0.55 | 6.3 | 1.34 | 0.323 | 0.573 |
| C-32 | 1.8 | Y | A | 0.58 | 6.2 | 1.32 | 0.418 | 0.484 |
| C-33 | 2.5 | Y | B | 0.87 | 4.95 | 1.41 | 0.323 | 0.573 |

The fibers listed in Table 10 above were blended in various ratios with 1.7-dtex PET fibers (commercially available from Trevira PET) and the resulting fiber blends were formed into nonwoven webs by carding at speeds ranging from about 150 to about 250 meters per minute (m/min). The resulting webs were bonded via hydroentanglement. Basis weight and thickness of each nonwoven were measured according to NWSP 130.1.R0 (15) and NWSP 120.1.R0 (15), respectively, and the blend ratios were measured according to AATCC TM20A-2014, No. 1. Additionally, control nonwovens CW-6 and CW-7 were formed by carding blends of a commercially-available 1.7-dtex viscose fiber (commercially available from Lenzing) with the same type of PET fibers used to form the other nonwovens, and then bonding the resulting webs via hydroentanglement. Table 11, below, summarizes the composition of and web formation speed for each of nonwovens NW-18 through NW-26, as well as control nonwovens CW-6 and CW-7.

**Table 11: Summary of Compositions of Several Nonwovens**

| **Nonwoven** | **Fiber** | **Thickness (mm)** | **Basis Weight (gsm)** | **Speed (m/min)** | **Blend** | | |
|---|---|---|---|---|---|---|---|
| | | | | | *PET* | *Cellulose Acetate* | *Viscose* |
| NW-18 | C-30 | 0.64 | 51.1 | 150 | 70 | 30 | 0 |
| NW-19 | C-30 | 0.39 | 49.1 | 250 | 70 | 30 | 0 |
| NW-20 | C-30 | 0.71 | 50.1 | 150 | 50 | 50 | 0 |
| NW-21 | C-30 | 0.45 | 52.3 | 200 | 50 | 50 | 0 |
| NW-22 | C-30 | 0.62 | 49.1 | 150 | 30 | 70 | 0 |
| NW-23 | C-31 | 0.6 | 51.0 | 150 | 70 | 30 | 0 |
| NW-24 | C-32 | 0.61 | 50.2 | 150 | 70 | 30 | 0 |
| NW-25 | C-32 | 0.41 | 52.3 | 250 | 70 | 30 | 0 |
| NW-26 | C-33 | 0.49 | 50.8 | 150 | 70 | 30 | 0 |
| CW-6 | viscose | 0.40 | 53.2 | 150 | 70 | 0 | 30 |
| CW-7 | viscose | - | 50.4 | 250 | 70 | 0 | 30 |

| | | | | | | | |
|---|---|---|---|---|---|---|---|
| Note: "-" = not determined | | | | | | | |

The wet and dry tensile strength in the machine direction (MD) and cross direction (CD) of several of the nonwovens listed in Table 11 above were measured according to NWSP 110.4 Option A, along with the absorption rate and absorbency measured according to NWSP 010.1-7.2. Additionally, the wicking height at 1 minute in the cross-direction was also measured for several of the nonwovens according to NWSP 010.1-7.3, along with the opacity of the nonwovens, which was measured according to NWSP 060.1.R0 (15). The results of these analyses are summarized in Tables 12a and 12b, below.

**Table 12a: Tensile Strength Analyses of Several Nonwovens**

| **Nonwoven** | **Thickness (mm)** | **Tensile Strength (N/in)** | | | |
|---|---|---|---|---|---|
| | | *Dry MD* | *Dry CD* | *Wet MD* | *Wet CD* |
| NW-18 | 0.64 | 33.91 | 10.73 | 35.285 | 10.64 |
| NW-19 | 0.39 | 47.245 | 10.185 | 46.74 | 12.05 |
| NW-20 | 0.71 | 17.735 | 5.745 | 19.95 | 6.03 |
| NW-21 | 0.45 | 28.82 | 5.645 | 31.18 | 6.22 |
| NW-22 | 0.62 | 11.23 | 3.57 | 13.7 | 4.25 |
| NW-23 | 0.60 | 41.9 | 12.03 | 41.8 | 11.1 |
| NW-24 | 0.61 | 34.495 | 12.235 | 36.77 | 11.19 |
| NW-25 | 0.41 | 40.34 | 8.345 | 40.925 | 9.43 |
| NW-26 | 0.49 | 36.455 | 11.85 | 41.4 | 11.95 |
| CW-6 | 0.40 | 54.56 | 15.34 | 47.51 | 16.215 |
| CW-7 | 0.40 | 58.265 | 15.2 | 49.32 | 12.365 |

**Table 12b: Properties of Several Nonwovens**

| **Nonwoven** | **Absorbency (%)** | **Wicking Height (mm)** | **Absorption Rate (s)** | **Opacity** |
|---|---|---|---|---|
| NW-18 | 1051.40% | - | 3.96 | 42.36 |
| NW-19 | 957.80% | 15.91 | 6.25 | 42.78 |
| NW-20 | 1174.80% | - | 4.20 | 47.56 |
| NW-21 | 967.60% | 34 | - | 46.90 |
| NW-22 | 1135% | 55.36 | 2.4 | 47.86 |
| NW-23 | 958% | 5.61 | 7.6 | 42.62 |
| NW-24 | 1014.40% | - | - | 46.04 |
| NW-25 | 967.20% | 2.65 | - | 46.60 |
| NW-26 | 977% | 5.67 | 5.98 | 42.38 |
| CW-6 | 819.20% | 38.74 | - | 45.96 |
| CW-7 | 800.20% | 14.08 | - | - |

| | | | | |
|---|---|---|---|---|
| Note: "-" = not determined | | | | |

As shown in Tables 11, 12a, and 12b, above, nonwovens which included cellulose acetate fibers (NW-18 through NW-25) were softer, loftier, and more absorbent than nonwovens which included viscose (CW-6 and CW-7) for a given basis weight. Further, the above results illustrate that tensile strength of a nonwoven is related to the amount of cellulose acetate in the blend used to form the nonwoven, and the data above shows that higher amounts of cellulose acetate may result in lower tensile strengths. Additionally, the tensile strength of nonwovens formed from cellulose acetate-containing blends may be slightly less than the tensile strength of nonwovens formed from viscose.

### Example 10

Nonwovens NW-18 through NW-25, CW-6, and CW-7 described in Example 9, above, were evaluated for wet and dry softness by a panel of independent judges. Each judge evaluated the dry softness of each nonwoven by judging both the surface smoothness/silkiness and hand feeling (e.g., drape, handling, and crunchiness) of a 3-inch by 6-inch panel of each of nonwoven. The judges measured surface smoothness/silkiness of each type of nonwoven by passing their fingertip back and forth over a flat surface of the panel in both the machine and cross-direction and assessing the smoothness of the nonwoven. The hand feeling was measured by rubbing the substrate between their fingertips, against their hand, and by crunching and folding the panel in order to assess the overall feeling of the substrate. After performing each type of test on each of the nonwovens, each judge was asked to rank the softness of each panel from 1 to 5, with lower numbers indicating softer nonwovens.

Samples of each of nonwovens NW-18 through NW-25, CW-6, and CW-7 were treated with a diluted lotion solution in an amount of 2.5 grams of solution per 1 gram of dry substrate. The diluted lotion solution was formed by combining 98 parts by weight of water with 2 parts by weight of Baby Dove baby lotion, commercially available from Unilever. The wet softness of each of the resulting nonwovens was also tested by the same panel of independent judges. Each judge evaluated the surface smoothness/silkiness and hand feeling of each of the wet nonwovens in a similar manner as described above, and each sample was ranked on a scale of 1 to 7, with lower values indicating higher degrees of softness.

The dry and wet softness rankings from the panel were collected and analyzed statistically by first determining the average softness ranking based on the sum of the softness ratings divided by the number of panelists. The results were plotted in a bubble chart with the size of the bubble responding to the number of panelists who rated a given substrate with a particular rating. The result was a relative ranking from 1 to 10 for each of the nonwovens tested, with 1 being the softest and 10 being the least soft. These results are summarized in Table 13, below.

**Table 13: Results of Softness Analysis of Various Nonwovens**

| **Nonwoven** | **Relative Softness** | **Real Softness, dB** |
|---|---|---|
| NW-18 | 4 | 3.9 |
| NW-19 | 5 | - |
| NW-20 | 2 | 4.0 |
| NW-21 | 3 | - |
| NW-22 | 1 | 3.5 |
| NW-23 | 6 | 3.5 |
| NW-24 | 7 | - |
| NW-25 | 8 | - |
| CW-6 | 9 | 4.3 |
| CW-7 | 10 | - |

As shown in Table 13, each of nonwovens NW-18 through NW-25, which were formed with cellulose acetate fibers, were softer than nonwovens CW-6 and CW-7, which were formed using viscose.

### Example 11

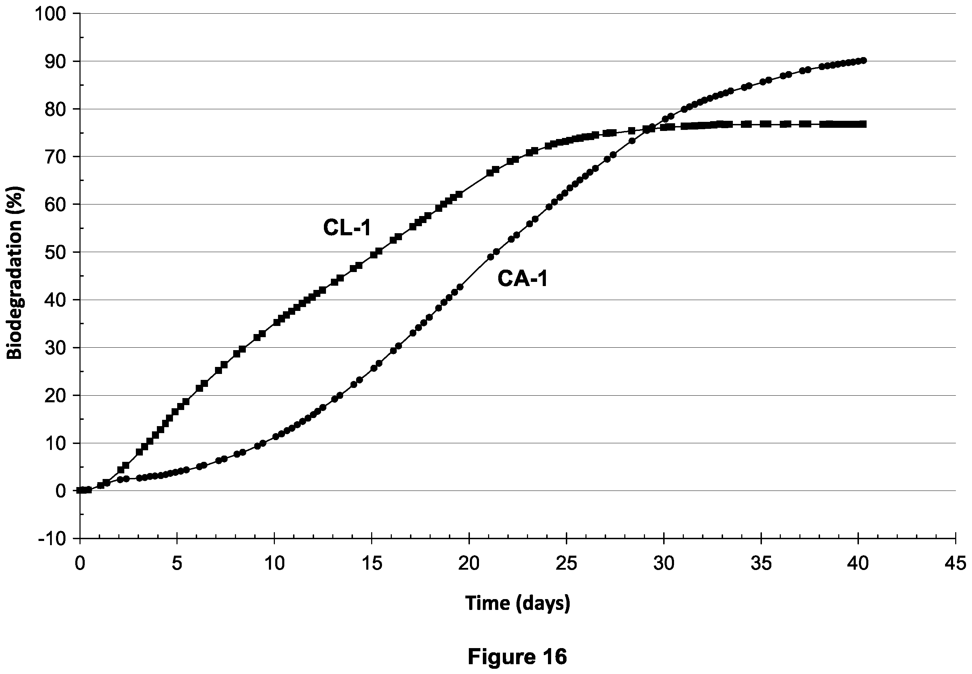

Several samples of cellulose acetate fiber having linear density of 6-dpf formed from cellulose acetate fibers having a degree of substitution of 2.5 were cryogenically ground into a powder having a particle size of less than about 1 mm. The biodegradation of the samples was tested according to ISO 1485501 (2012) under home compositing conditions, ISO 1485501 (2012) under industrial compositing conditions, and ISO 17556 (2012) under soil compositing conditions. Several control samples of cellulose were similarly ground and subjected to the same tests and conditions. The resulting biodegradation of each sample was calculated and each is shown as a function of time in FIGS. 16-18.

As shown in FIG. 16, when exposed to industrial composting conditions, the control cellulose fibers (CL-1) reached a biodegradation percentage of 76.7 percent, while the cellulose acetate fibers achieved a biodegradation of 90 percent. The test period was 45 days. Thus, the cellulose acetate fibers exhibited a higher level of biodegradation than the control sample under industrial composting conditions, and also met the 90 percent biodegradability requirement of EN 13432 (2000) under industrial composting conditions.

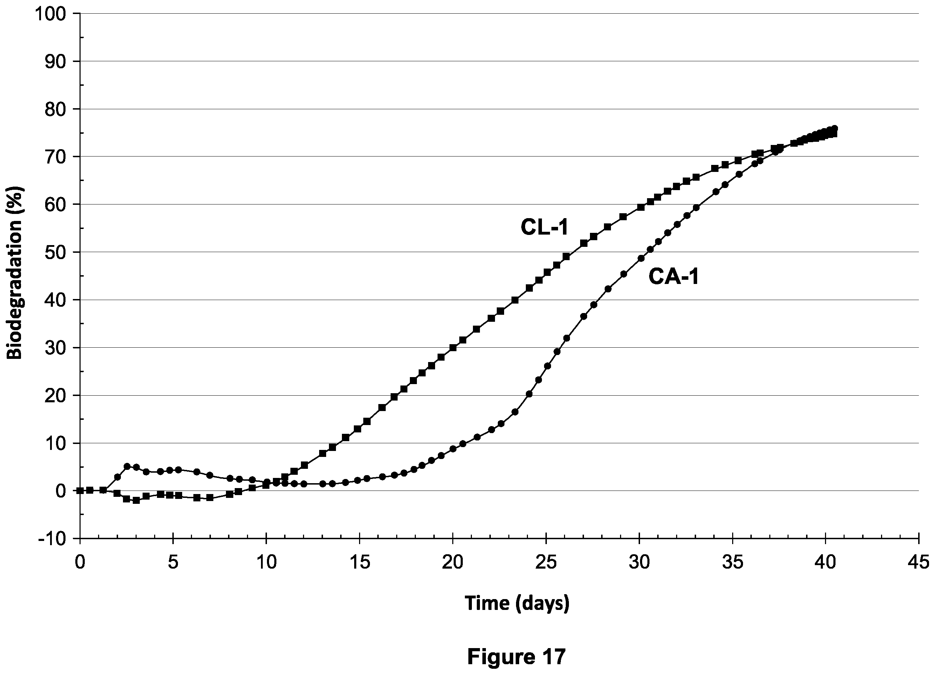

As shown in FIG. 17, when exposed to home composting conditions, the control cellulose reached a biodegradation of 79.8 percent, while the cellulose acetate fibers achieved a biodegradation of 82.5 percent. The test period was 50 days. On a relative basis, the cellulose acetate fibers exhibited a relative biodegradation of 101.7% relative to the control cellulose fibers. As such, the 90 percent biodegradability requirement of EN 13432 (2000) was also achieved by the cellulose acetate fibers under home composting conditions.

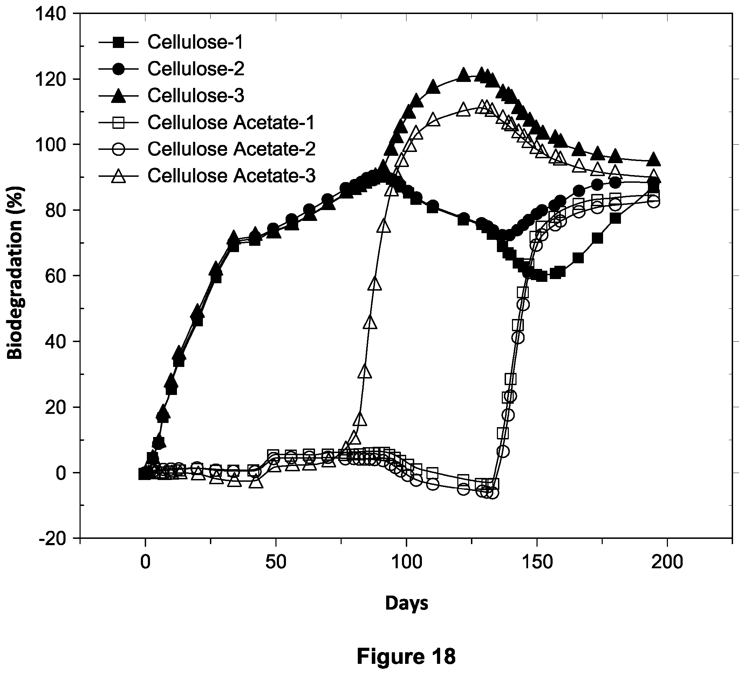

As shown in FIG. 18, after 195 days of testing under soil conditions according to ISO 17556 (2012), the control cellulose samples achieved an average biodegradation of 90.0 percent. The cellulose acetate samples, when exposed to the same conditions, exhibited an average biodegradation of 85.8%, which corresponds to a relative biodegradation of 95.3%.

### Example 12

The disintegration of cellulose acetate fibers having a linear density of 6 dpf and formed from cellulose acetate having a degree of substitution of 2.5 were tested according to ISO 16929 (2013) under both home and industrial composting conditions. The cellulose acetate fibers were completely disintegrated after 12 weeks under industrial composting conditions. This exceeds the 90 percent minimum disintegration threshold laid out in EN 13432. Similarly, when exposed to home composting conditions, the cellulose acetate fibers exhibited a disintegration percentage well above 95 percent after 20 weeks, which is far less than the maximum allotted test duration of 26 weeks. In fact, the cellulose acetate fibers were completely disintegrated after 26 weeks of testing under home composting conditions.

### Example 13

Several filament yarns were formed from individual continuous filaments of cellulose acetate (CA) having a linear denier per filament (dpf) of 1.8 and a round or Y-shaped cross-section. The filament yarns were coated with about 0.7% FOY of a spin finish (e.g., Finish A or B from Table 1, above) and were crimped to a crimp frequency of between 16 and 18 crimps per inch (CPI). After crimping, some of the filament yarns were further coated with about 0.25% FOY of a top-coat finish (e.g., Finish F from Table 1 or another antistatic Finish Q, available as 2724 from Pulcra). The remainder of the filament yarns were not finished with a top-coat finish. Some of the filament yarns were then cut into staple fibers having a length of about 38 mm and others were cut into staple fibers having a length of 51 mm. Several properties of the filament yarns and resulting staple fibers are summarized in Table 15, below.

**Table 15: Summary of Several Filament Yarns & Staple Fibers**

| **Fiber** | **Cross Section** | **Denier per Filament** | **Staple Length, mm** | **CPI** | | **Spin Finish** | | **Top-Coat Finish** | |
|---|---|---|---|---|---|---|---|---|---|
| | | | | ***Yarn*** | ***Fiber*** | ***Type*** | ***Amount*** | ***Type*** | ***Amount*** |
| C-30 | Y | 1.8 | 38 | 16 | 14 | B | 0.61 | n/a | n/a |
| C-32 | Y | 1.8 | 38 | 17 | 14 | A | 0.58 | n/a | n/a |
| C-31 | Round | 1.8 | 38 | 17 | 12 | B | 0.55 | n/a | n/a |
| C-37 | Round | 1.8 | 38 | 16 | 13 | A | 0.67 | n/a | n/a |
| C-38 | Y | 1.8 | 38 | 16 | 13 | B | 0.58 | F | 0.25 |
| C-39 | Y | 1.8 | 38 | 16 | 12 | B | 0.58 | Q | 0.25 |
| C-50 | Y | 1.8 | 51 | 17 | - | B | 0.61 | n/a | n/a |
| C-51 | Y | 1.8 | 51 | 10 | - | B | 0.76 | n/a | n/a |
| C-52 | Y | 1.8 | 51 | 16 | 13 | B | 0.58 | F | 0.25 |
| C-53 | Y | 1.8 | 51 | 16 | - | B | 0.64 | n/a | n/a |
| PET | - | 1.7 | 38 | - | 14 | n/a | n/a | n/a | n/a |
| Viscose | - | 1.7 | 38 | - | 12 | n/a | n/a | n/a | n/a |

| | | | | | | | | | |
|---|---|---|---|---|---|---|---|---|---|
| Note: "-" = not determined | | | | | | | | | |

Several additional properties of the filament yarns and fibers were measured, including surface resistivity (Log R), measured according to AATCC TM76-2011, static half-life, measured according to AATCC 84-2011, and filament tenacity, measured according to ASTM D-3822. Additionally, the fiber-to-fiber (F/F) and fiber-to-metal (F/M) coefficients of friction of the filament yarns were measured according to ASTM D3412 and ASTM D3108. respectively, using a continuous tension tester electronic device (CTT-E) with the specified yarn parameters. The F/F coefficient of friction (COF) was measured according to ASTM D3412 at a speed of 20 m/min, an input tension of 10 grams, and a single twist applied to the filament yarn. The F/M coefficient of friction (COF) was measured according to ASTM D3108 at a speed of 100 m/min an input tension of 10 grams. The staple pad fiber-to-fiber (F/F) coefficient of friction was also measured for the staple fibers according to the method described herein. The results of these measurements are summarized in Table 16, below.

**Table 16: Summary of Select Properties of Several Cellulose Acetate Filaments**

| **Fiber** | **Log R** | **Static Half-life (min)** | **Equivalent Coefficient of Friction** | | **F/F SPCOF** | **Filament Tenacity (g/denier)** |
|---|---|---|---|---|---|---|
| | | | **F/F** | **F/M** | | |
| C-30 | 11 | 10.8 | 0.323 | 0.573 | 0.135 | 1.36 |
| C-32 | 11 | > 60 | 0.418 | 0.484 | 0.239 | 1.40 |
| C-31 | 11 | > 60 | 0.19 | 0.53 | 0.228 | 1.30 |
| C-37 | 11 | > 120 | - | - | 0.266 | 1.42 |
| C-38 | 7 | < 0.01 | - | - | 0.503 | 1.40 |
| C-39 | 9 | 0.12 | - | - | 0.468 | 1.32 |
| C-50 | - | - | - | - | - | 1.33 |
| C-51 | - | - | - | - | - | 1.40 |
| C-52 | - | - | - | - | - | 1.36 |
| C-53 | - | - | - | - | - | 1.43 |
| PET | 8 | 0.10 | - | - | 0.492 | 5.77 |
| Viscose | 8 | 0.13 | - | - | 0.453 | 2.32 |

| | | | | | | |
|---|---|---|---|---|---|---|
| Note: "-" = not determined | | | | | | |

As shown in Table 16, above, Fibers C-38 and C-39, which each included an additional top-coat anti-static finish, exhibited higher friction than fibers C-30 through C-32 and C-37, which were not treated with an additional top-coat finish, as shown by the staple pad coefficient of friction. However, as also shown in Table 16, fibers C-38 and C-39 also exhibited better static dissipation than the fibers without a top-coat finish, as shown by the lower static half-life and lower Log R value (surface resistivity). As shown above, the values for static half-life and F/F staple pad coefficient of friction exhibited by fibers C-38 and C-39 were similar to those exhibited by PET and viscose. As described in further detail below, it was also discovered that fibers C-30 through C-32 and C-37 could be blended in relatively higher amounts with other fibers to form nonwovens that could be produced even at commercial speeds.

Staple fibers from several of the filament yarns listed in Table 16 above were blended in various ratios with 38 mm, 1.7-dtex PET fibers (commercially available from Trevira PET) and the resulting fiber blends were formed into nonwoven webs by carding at a speed of about 150 meters per minute (m/min). One of the nonwovens (NW-59) was formed using 1.4 dpf PET staple fibers having a length of 38mm (commercially available from DAK) blended with fiber C-53 and were formed by carding at a speed of about 250 m/min. The carded webs were then bonded via hydroentanglement to form nonwoven fabrics. The basis weight and thickness of each nonwoven were measured according to NWSP 130.1.R0 (15) and NWSP 120.1.R0 (15), respectively, and the blend ratios were measured according to AATCC TM20A-2014, No. 1.

Additionally, nonwovens CW-8 through CW-10 were formed by carding blends of a commercially-available 1.7-dtex viscose fiber (commercially available from Lenzing) with the same type of PET fibers used to form the cellulose acetate-containing nonwovens, and then bonding the resulting PET/viscose webs via hydroentanglement. Table 17, below, summarizes the composition of several of these nonwovens.

**Table 17: Summary of Properties of Several Nonwovens**

| **Nonwoven** | **Fiber** | **Thickness (mm)** | **Basis Weight (gsm)** | **Target Blend (% CA or % Viscose)** | **Blend** | | |
|---|---|---|---|---|---|---|---|
| | | | | | *PET* | *CA* | *Viscose* |
| NW-27 | C-30 | 0.61 | 50.0 | 30 | 68.4 | 31.6 | 0 |
| NW-20 | C-30 | 0.71 | 50.1 | 50 | 46.8 | 53.2 | 0 |
| NW-22 | C-30 | 0.62 | 49.1 | 70 | 29.7 | 70.3 | 0 |
| NW-24 | C-32 | 0.61 | 50.2 | 30 | 73.1 | 26.9 | 0 |
| NW-31 | C-32 | 0.69 | 51.2 | 50 | 56.4 | 43.6 | 0 |
| NW-32 | C-32 | 0.72 | 53.7 | 70 | 31.3 | 68.7 | 0 |
| NW-23 | C-31 | 0.6 | 51.0 | 30 | 69 | 31 | 0 |
| NW-34 | C-31 | 0.58 | 51.6 | 50 | 51 | 49 | 0 |
| NW-35 | C-31 | 0.58 | 45.6 | 70 | 32.7 | 67.3 | 0 |
| NW-36 | C-37 | 0.59 | 51.5 | 50 | 51.3 | 48.7 | 0 |
| NW-37 | C-38 | 0.61 | 50.2 | 30 | 71 | 29 | 0 |
| NW-38 | C-38 | 0.60 | 48.5 | 50 | 52.7 | 47.3 | 0 |
| NW-39 | C-38 | 0.78 | 51.6 | 85 | 17 | 83 | 0 |
| NW-40 | C-38 | 0.78 | 48.8 | 100 | 0 | 100 | 0 |
| NW-41 | C-39 | 0.62 | 52.2 | 30 | 72.3 | 27.7 | 0 |
| NW-42 | C-39 | 0.69 | 51.4 | 50 | 51 | 49 | 0 |
| NW-43 | C-39 | 0.68 | 47.1 | 85 | 15.3 | 84.7 | 0 |
| NW-44 | C-39 | 0.70 | 46.2 | 100 | 0 | 100 | 0 |
| NW-55 | C-50 | 0.45 | 47.4 | 30 | 28.6 | 71.4 | 0 |
| NW-56 | C-51 | 0.51 | 49.6 | 50 | 47.7 | 52.3 | 0 |
| NW-57 | C-52 | 0.79 | 51.0 | 70 | 69.6 | 30.4 | 0 |
| NW-58 | C-52 | 0.71 | 47.5 | 100 | 100 | 0 | 0 |
| NW-59 | C-53 | 0.48 | 52.6 | 30 | 29.4 | 70.6 | 0 |
| CW-8 | Viscose | 0.54 | 50.9 | 30 | 73.1 | 0 | 26.9 |
| CW-9 | Viscose | 0.54 | 54.5 | 50 | 51.35 | 0 | 48.65 |
| CW-10 | Viscose | 0.48 | 49.0 | 100 | 0 | 0 | 100 |

The wet and dry tensile strengths of the nonwovens listed in Table 17 above were measured according to NWSP 110.4 Option A. Additionally, the absorbency of the nonwovens was also measured according to NWSP 010.1-7.2, along with the wicking height at 1 minute in the cross direction and the machine direction measured according to NWSP 010.1-7.3. The roughness and real softness of several of the nonwovens was also measured using the Emtec Tissue Softness Analyzer (TSA) method as described in Example 7. The results of these analyses are summarized in Tables 18a and 18b, below.

**Table 18a: Tensile Strength Results for Several Nonwovens**

| **Nonwoven** | **Target Blend (% CA or % Viscose)** | **Thickness (mm)** | **Tensile Strength (N/in)** | | | |
|---|---|---|---|---|---|---|
| | | | *Dry MD* | *Dry CD* | *Wet MD* | *Wet CD* |
| NW-27 | 30 | 0.61 | 37.6 | 9.8 | 37.9 | 11.5 |
| NW-20 | 50 | 0.71 | 17.7 | 5.7 | 20.0 | 6.0 |
| NW-22 | 70 | 0.62 | 11.2 | 3.6 | 13.7 | 4.3 |
| NW-24 | 30 | 0.61 | 34.5 | 12.2 | 36.8 | 11.2 |
| NW-31 | 50 | 0.69 | 25.8 | 6.1 | 22.9 | 7.2 |
| NW-32 | 70 | 0.72 | 14.6 | 3.7 | 13.7 | 3.7 |
| NW-23 | 30 | 0.60 | 41.9 | 12.0 | 41.8 | 11.1 |
| NW-34 | 50 | 0.58 | 26.4 | 7.3 | 27.7 | 7.9 |
| NW-35 | 70 | 0.58 | 14.1 | 4.2 | 15.2 | 4.7 |
| NW-36 | 50 | 0.59 | 28.6 | 7.7 | 27.3 | 7.9 |
| NW-37 | 30 | 0.61 | 49.0 | 11.8 | 46.9 | 11.4 |
| NW-38 | 50 | 0.60 | 29.7 | 7.4 | 31.9 | 7.3 |
| NW-39 | 85 | 0.78 | 9.4 | 3.4 | 9.5 | 4.1 |
| NW-40 | 100 | 0.78 | 7.0 | 3.5 | 5.6 | 3.3 |
| NW-41 | 30 | 0.62 | 55.4 | 13.8 | 57.1 | 14.0 |
| NW-42 | 50 | 0.69 | 31.9 | 7.8 | 32.8 | 8.2 |
| NW43 | 85 | 0.68 | 12.2 | 3.9 | 13.3 | 4.0 |
| NW-44 | 100 | 0.70 | 7.2 | 3.5 | 5.5 | 2.9 |
| NW-55 | 30 | 0.45 | 35.5 | 11 | - | - |
| NW-56 | 50 | 0.51 | 25.6 | 8.1 | - | - |
| NW-57 | 70 | 0.79 | 15.2 | 4.5 | 14.1 | 4.8 |
| NW-58 | 100 | 0.71 | 8.5 | 4.0 | 6.7 | 3.7 |
| NW-59 | 30 | 0.48 | 39.8 | 7.4 | 42.1 | 8.1 |
| CW-8 | 30 | 0.54 | 41.5 | 16.4 | 42.8 | 14.4 |
| CW-9 | 50 | 0.54 | 41.7 | 12.0 | 36.9 | 10.5 |
| CW-10 | 100 | 0.48 | 33.8 | 9.3 | 19.9 | 6.3 |

| | | | | | | |
|---|---|---|---|---|---|---|
| Note: "-" = not determined | | | | | | |

**Table 18b: Properties of Several Nonwovens**

| **Nonwoven** | **Target Blend (% CA or % Viscose)** | **Absorbency (%)** | **Wicking Height** | | **Roughness (dB)** | **Real Softness (dB)** |
|---|---|---|---|---|---|---|
| | | | **MD (mm)** | **CD (mm)** | | |
| NW-27 | 30 | 1011% | 29.3 | 18.8 | 16.3 | 3.9 |
| NW-20 | 50 | 1175% | 25.2 | 9.2 | 14.8 | 4.0 |
| NW-22 | 70 | 1135% | 55.4 | 44.9 | 14.2 | 3.5 |
| NW-24 | 30 | 1014% | 3.5 | 0.6 | 14.6 | 3.8 |
| NW-31 | 50 | 1171% | 8.9 | 2.9 | 14.7 | 3.4 |
| NW-32 | 70 | 1161% | 25.3 | 16.5 | 16.4 | 3.4 |
| NW-23 | 30 | 958% | 5.6 | 5.9 | 17.1 | 3.5 |
| NW-34 | 50 | 955% | 34.4 | 21.1 | 14.6 | 3.2 |
| NW-35 | 70 | 1156% | 51.1 | 37.5 | 13.8 | 3.9 |
| NW-36 | 50 | 976% | 7.2 | 3.8 | 14.3 | 3.7 |
| NW-37 | 30 | 945% | 27 | 9.4 | 18.6 | 4.4 |
| NW-38 | 50 | 1028% | 41.2 | 26.7 | 16.6 | 4.1 |
| NW-39 | 85 | 1300% | 63 | 53 | 14.8 | 4.2 |
| NW-40 | 100 | 1313% | 66.7 | 54.9 | 14.4 | 4.2 |
| NW-41 | 30 | 909% | 23.7 | 19.2 | 20.0 | 4.4 |
| NW-42 | 50 | 1068% | 41.9 | 37 | 16.8 | 4.0 |
| NW-43 | 85 | 1227% | 59.2 | 45.7 | 13.7 | 4.1 |
| NW-44 | 100 | 1289% | 58.3 | 48.8 | 15.5 | 4.1 |
| NW-55 | 30 | 965% | - | - | - | - |
| NW-56 | 50 | 1065% | - | - | - | - |
| NW-57 | 70 | 1254% | - | - | - | - |
| NW-58 | 100 | 1285% | - | - | - | - |
| NW-59 | 30 | 861% | - | - | - | - |
| CW-8 | 30 | 863% | 5.0 | 4.5 | 17.4 | 4.3 |
| CW-9 | 50 | 889% | 45.9 | 30.7 | 18.0 | 4.1 |
| CW-10 | 100 | 926% | 96.8 | 67.1 | 19.1 | 5.5 |

| | | | | | | |
|---|---|---|---|---|---|---|
| Note: "-" = not determined | | | | | | |

As shown in Tables 17, 18a, and 18b, above, the roughness of the PET/viscose nonwovens CW-8 through CW-10 increased as a function of viscose inclusion in the blend, whereas the roughness of several of the cellulose acetate/PET nonwovens (e.g., samples NW-27, NW-20, and NW-22, samples NW-23, NW-34, and NW-35, samples NW-37 through NW-39, and samples NW-41 through NW-43) decreased as a function of cellulose acetate content. Additionally, the absorbency of the nonwovens also increased when more cellulose acetate was included in the blend and when a top-coat finish was used on the fibers the absorbency increased significantly, as shown by, for example, comparison of samples NW-37 through NW-40 and samples NW-41 through NW-44.

Further, as shown by comparison of the wet tensile strength measured in the cross direction (Wet CD) of NW-20, NW-22, NW-24, NW-27, and NW-31 through NW-44, formed using cellulose acetate fibers, with the same wet tensile strength in the cross direction of CW-8 through CW-10, the values for tensile strength of the nonwovens formed from cellulose acetate are nearly the same or higher than the tensile strength of the nonwovens formed from viscose. Thus, nonwovens formed from cellulose acetate (and cellulose acetate blends) exhibit similar strength retention under wet conditions as compared to similar nonwovens formed from viscose (and viscose blends). Additionally, as shown in FIG. 18b, nonwovens formed from fibers having a Y-shaped cross-sectional shape tend to have higher absorptivity.

As also shown in Tables 17 and 18a, nonwovens NW-37 through NW-44, which were formed from fibers C-38 or C-39 including about 0.25% FOY of an antistatic top-coat finish, exhibited generally higher tensile strength in the cross and machine direction under wet and dry conditions as compared to nonwovens formed from a similar fiber, C-30 that did not include an antistatic top-coat finish. This particular trend is best shown by comparison of the wet and dry tensile strengths in the machine and cross direction for sample NW-27 (fiber C-30 with no top-coat finish) with samples NW-37 (fiber C-38 with Finish F as a top coat) and NW-41 (Fiber C-39 with Finish Q as a top coat) and sample NW-20 with samples NW-38 and NW-42. The relevant data for this comparison is also provided in Table 19, below.

**Table 19: Tensile Strengths of Select Nonwovens**

| **Nonwoven** | **Fiber** | **Blend (% CA)** | **Tensile Strength (N/in)** | | | |
|---|---|---|---|---|---|---|
| | | | **Dry MD** | **Dry CD** | **Wet MD** | **Wet CD** |
| NW-27 | C-30 | 30 | 37.6 | 9.8 | 37.9 | 11.5 |
| NW-37 | C-38 | 30 | 49.0 | 11.8 | 46.9 | 11.4 |
| NW-41 | C-39 | 30 | 55.4 | 13.8 | 57.1 | 14.0 |
| NW-20 | C-30 | 50 | 17.7 | 5.7 | 20.0 | 6.0 |
| NW-38 | C-38 | 50 | 29.7 | 7.4 | 31.9 | 7.3 |
| NW-42 | C-39 | 50 | 31.9 | 7.8 | 32.8 | 8.2 |

Additionally, as shown in Tables 17, 18a, and 18b, above, nonwovens formed from fibers having a round cross-section tended to exhibit a higher strength than nonwovens formed from similar fibers having a Y-shaped cross-section. However, nonwovens formed from fibers with a round cross-section tended to produce thinner webs with slightly lower absorbencies, when incorporated into blends with PET up to 50%. Table 20, below, summarizes the relevant data from Tables 17, 18a, and 18b for this comparison.

**Table 20: Properties of Select Nonwovens**

| **Nonwoven** | **Fiber** | **Cross Section** | **Blend (% CA)** | **Thickness (mm)** | **Tensile Strength (N/in)** | | | | **Absorbency (%)** | **Real Softness (dB)** |
|---|---|---|---|---|---|---|---|---|---|---|
| | | | | | **Dry MD** | **Dry CD** | **Wet MD** | **Wet CD** | | |
| NW-27 | C-30 | Y | 30 | 0.61 | 37.6 | 9.8 | 37.9 | 11.5 | 1011% | 3.93 |
| NW-23 | C-31 | R | 30 | 0.60 | 41.9 | 12.0 | 41.8 | 11.1 | 958% | 3.53 |
| NW-20 | C-30 | Y | 50 | 0.71 | 17.7 | 5.7 | 20.0 | 6.0 | 1175% | 3.97 |
| NW-34 | C-31 | R | 50 | 0.58 | 26.4 | 7.3 | 27.7 | 7.9 | 955% | 3.23 |
| NW-22 | C-30 | Y | 70 | 0.62 | 11.2 | 3.6 | 13.7 | 4.3 | 1135% | 3.50 |
| NW-35 | C-31 | R | 70 | 0.58 | 14.1 | 4.2 | 15.2 | 4.7 | 1156% | 3.93 |
| NW-31 | C-32 | Y | 50 | 0.69 | 25.8 | 6.1 | 22.9 | 7.2 | 1171% | 3.40 |
| NW-36 | C-37 | R | 50 | 0.59 | 28.6 | 7.7 | 27.3 | 7.9 | 976% | 3.67 |

### Example 14

Several filament yarns were prepared from individual continuous filaments of cellulose acetate having a linear denier per filament (dpf) of 1.2, 1.8, or 2.5 and a round or Y-shaped cross-section. The filament yarns were crimped to a crimp frequency between 10 and 16 crimps per inch (CPI), and were coated with a varying amount of Finish B from Table 1, above. Table 21, below, summarizes several characteristics of each of these yarns.

**Table 21: Characteristics of Cellulose Acetate Yarns**

| **Fiber** | **Cross Section** | **Denier per Filament** | **CPI** | **Spin Finish (% FOY)** |
|---|---|---|---|---|
| C-33 | Y | 2.5 | 16 | 0.87 |
| C-41 | Y | 2.5 | 10 | 0.76 |
| C-42 | round | 1.2 | 16 | 1.24 |
| C-43 | Y | 1.8 | 10 | 0.76 |

The filament yarns were then cut into staple fibers having a length of about 38 mm and blended in various ratios with 1.7-dtex PET fibers (commercially available from Trevira PET). The resulting fiber blends were carded at a speed of about 150 meters per minute (m/min). The carded webs were then bonded via hydroentanglement to form nonwoven fabrics. The basis weight and thickness of each nonwoven were measured according to NWSP 130.1.R0 (15) and NWSP 120.1.R0 (15), respectively.

The wet and dry tensile strength of the nonwovens listed in Table 21 above were measured according to NWSP 110.4 Option A. Additionally, the absorbency of several of the nonwovens was also measured according to NWSP 010.1-7.2, along with the wicking height at 1 minute in the cross direction and the machine direction measured according to NWSP 010.1-7.3. The results of these analyses are summarized in Table 22, below.

**Table 22a: Properties of Select Nonwovens**

| **Nonwoven** | **Fiber** | **Target Blend (% CA)** | **Basis Weight (gsm)** | **Thickness (mm)** | **Tensile Strength (N/in)** | | | |
|---|---|---|---|---|---|---|---|---|
| | | | | | ***Dry MD*** | ***Dry CD*** | ***Wet MD*** | ***Wet CD*** |
| NW-26 | C-33 | 30 | 50.8 | 0.486 | 36.5 | 11.9 | 41.4 | 12.0 |
| NW-46 | C-41 | 30 | 48.4 | 0.452 | 41.1 | 12.6 | 43.7 | 14.5 |
| NW-47 | C-42 | 30 | 49.8 | 0.528 | 31.6 | 9.8 | 35.6 | 10.5 |
| NW-48 | C-42 | 50 | 47.3 | 0.506 | 24.0 | 7.1 | 27.0 | 8.8 |
| NW-49 | C-43 | 30 | 49.4 | 0.460 | 42.8 | 14.1 | 46.0 | 14.5 |

**Table 22b: Additional Properties of Select Nonwovens**

| **Nonwoven** | **Fiber** | **Target Blend (% CA)** | **Absorbency (%)** | **Wicking Height, MD (mm)** | **Wicking Height, CD (mm)** | **Real Softness, dB** |
|---|---|---|---|---|---|---|
| NW-26 | C-33 | 30 | 977% | 5.7 | 7.7 | 4.2 |
| NW-46 | C-41 | 30 | 963% | 5.1 | 1.7 | 4.3 |
| NW-47 | C-42 | 30 | 902% | 43.3 | 27.1 | 3.5 |
| NW-48 | C-42 | 50 | 889% | 58.2 | 40.5 | 3.4 |
| NW-49 | C-43 | 30 | 971% | 10.0 | 5.9 | 4.0 |

As shown in Tables 21, 22a, and 22b, above, nonwovens formed from fibers having a lower crimp level (e.g., 10 CPI in NW-46) were slightly thinner (less lofty) than nonwovens formed from similar fibers having a higher crimp level (e.g., 16 CPI in NW-26). Additionally, nonwovens formed from lower crimp fibers exhibited slightly lower absorbency than those formed from higher crimped fibers, as shown by comparison of NW-46 (10 CPI fibers) and NW-26 (16 CPI fibers).

Additionally, as shown in Tables 21, 22a, and 22b, above, the nonwovens formed from fibers having a lower denier were slightly loftier (thicker) than nonwovens formed from fibers with a higher denier, as shown by comparison of NW-46 (2.5 dpf, 10 CPI fibers) and NW-49 (1.8 dpf, 10 CPI fibers). As also shown by the comparison of NW-46 and NW-49, nonwovens formed from lower denier fibers exhibited generally increased strength and higher absorbency than nonwovens formed from similar, higher denier fibers.

### Example 15

Filament yarns were prepared from individual continuous filaments of cellulose acetate having a linear denier per filament (dpf) of 1.8 and a Y-shaped cross-section. The filament yarns were crimped to a crimp frequency of 16 crimps per inch (CPI), and each was coated with about 0.64 % FOY of Finish B from Table 1, above. The filament yarns were then cut into staple fibers having a length of about 38 mm.

The resulting staple fibers were blended in various ratios with 1.7 dtex TENCEL^{®} fibers (commercially available from Lenzing). The resulting fiber blends were formed into nonwoven webs by carding and the carded webs were bonded via hydroentanglement to form nonwoven fabrics. The basis weight and thickness of each nonwoven were measured according to NWSP 130.1.R0 (15) and NWSP 120.1.R0 (15), respectively. Additionally, nonwovens CW-11 and CW-12 were formed by carding blends of a commercially-available 1.7-dtex viscose fiber (commercially available from Lenzing) with the same type of Tencel^{®} fibers used to form the cellulose acetate blends, and then bonding the viscose/Tencel^{®} webs via hydroentanglement.

The wet and dry tensile strength of these nonwovens were measured according to NWSP 110.4 Option A. Additionally, the absorbency of the nonwovens was also measured according to NWSP 010.1-7.2, along with the wicking height at 1 minute in the machine direction measured according to NWSP 010.1-7.3. The results of these analyses are summarized in Table 23, below.

**Table 23: Select Properties of Several Nonwovens**

| **NW** | **Basis Weight (gsm)** | **Target Blend (% CA/ Viscose)** | **Tensile Strength (N/in)** | | | | **Absorbency (%)** | **Wicking Height, MD (mm)** | **Real Softness, dB** |
|---|---|---|---|---|---|---|---|---|---|
| | | | ***Dry MD*** | ***Dry CD*** | ***Wet MD*** | ***Wet CD*** | | | |
| NW-50 | 56.6 | 10 | 43.3 | 13.0 | 35.3 | 11.6 | 960% | 1.1 | 5.9 |
| NW-51 | 52.4 | 25 | 28.7 | 8.9 | 28.4 | 10.1 | 1085% | 1.2 | 4.6 |
| NW-52 | 50.3 | 50 | 16.6 | 6.0 | 19.7 | 7.2 | 1184% | 1.7 | 4.4 |
| CW-11 | 52.3 | 10 | 51.5 | 13.4 | 38.5 | 11.7 | 930% | 0.8 | 7.1 |
| CW-12 | 56.4 | 25 | 48.7 | 13.5 | 34.5 | 11.5 | 897% | 0.9 | 6.4 |

As shown in Table 23, above, the absorbency of the nonwovens including cellulose acetate increased with increasing levels of cellulose acetate fibers. However, the overall strength and thickness of the nonwovens generally decreased with increasing amounts of cellulose acetate in the cellulose acetate/Tencel^{®} fiber blend. Overall, as shown by comparing nonwovens CW-11 and CW-12, the amount of viscose in the Tencel^{®} blend had a very minor effect on the strength and absorbency of the viscose/Tencel^{®} nonwovens. The nonwovens formed with cellulose acetate exhibited a higher absorbency than similar nonwovens formed with viscose, as shown by comparing NW-50 and CW-11 and NW-51 and CW-12 provided in Table 23.

Tables 24a-c below summarizes the tensile strength, as measured with a 1-inch sample strip and as normalized according to thickness, basis weight, and density, as well as bonding index, for each of NW-18 through NW-27, NW-31, NW-42 through NW-44, and NW-46 through NW-52, as well as CW-6 through CW-12.

**Table 24a: Summary of Properties of Several Nonwovens**

| **Nonwoven** | **Basis Weight (gsm)** | **Thickness (mm)** | **Thickness (m)** | **Tensile Strength, N/in per 1-in strip** | | | | | | **Bondability Index, N per 1-in strip** | |
|---|---|---|---|---|---|---|---|---|---|---|---|
| | | | | *Dry MD* | *Dry CD* | *Wet MD* | *Wet CD* | *Dry MD*/*CD* | *Wet MD*/*CD* | *BI₂₀ Dry* | *BI₂₀ Wet* |
| NW-18 | 51.1 | 0.64 | 0.00064 | 33.91 | 10.73 | 35.29 | 10.64 | 3.16 | 3.32 | 3.73 | 3.79 |
| NW-19 | 49.1 | 0.39 | 0.00039 | 47.25 | 10.19 | 46.74 | 12.05 | 4.64 | 3.88 | 4.47 | 4.83 |
| NW-20 | 50.1 | 0.71 | 0.00071 | 17.74 | 5.75 | 19.95 | 6.03 | 3.09 | 3.31 | 2.01 | 2.19 |
| NW-21 | 52.3 | 0.45 | 0.00045 | 28.82 | 5.65 | 31.18 | 6.22 | 5.11 | 5.01 | 2.44 | 2.66 |
| NW-22 | 49.1 | 0.62 | 0.00062 | 11.23 | 3.57 | 13.70 | 4.25 | 3.15 | 3.22 | 1.29 | 1.55 |
| NW-23 | 51 | 0.6 | 0.0006 | 41.90 | 12.03 | 41.80 | 11.10 | 3.48 | 3.77 | 4.40 | 4.22 |
| NW-24 | 50.2 | 0.61 | 0.00061 | 34.50 | 12.24 | 36.77 | 11.19 | 2.82 | 3.29 | 4.09 | 4.04 |
| NW-25 | 52.3 | 0.41 | 0.00041 | 40.34 | 8.35 | 40.93 | 9.43 | 4.83 | 4.34 | 3.51 | 3.76 |
| NW-26 | 50.8 | 0.49 | 0.00049 | 36.46 | 11.85 | 41.40 | 11.95 | 3.08 | 3.46 | 4.09 | 4.38 |
| CW-6 | 53.2 | 0.4 | 0.0004 | 54.56 | 15.34 | 47.51 | 16.22 | 3.56 | 2.93 | 5.44 | 5.22 |
| CW-7 | 50.4 | 0.4 | 0.0004 | 58.27 | 15.20 | 49.32 | 12.37 | 3.83 | 3.99 | 5.90 | 4.90 |
| NW-27 | 50 | 0.61 | 0.00061 | 37.60 | 9.80 | 37.90 | 11.50 | 3.84 | 3.30 | 3.84 | 4.18 |
| NW-31 | 51.2 | 0.69 | 0.00069 | 25.80 | 6.10 | 22.90 | 7.20 | 4.23 | 3.18 | 2.45 | 2.51 |
| NW-42 | 51.4 | 0.69 | 0.00069 | 31.90 | 7.80 | 32.80 | 8.20 | 4.09 | 4.00 | 3.07 | 3.19 |
| NW-43 | 47.1 | 0.68 | 0.00068 | 12.20 | 3.90 | 13.30 | 4.00 | 3.13 | 3.33 | 1.46 | 1.55 |
| NW-44 | 46.2 | 0.7 | 0.0007 | 7.20 | 3.50 | 5.50 | 2.90 | 2.06 | 1.90 | 1.09 | 0.86 |
| CW-8 | 50.9 | 0.54 | 0.00054 | 41.50 | 16.40 | 42.80 | 14.40 | 2.53 | 2.97 | 5.13 | 4.88 |
| CW-9 | 54.5 | 0.54 | 0.00054 | 41.70 | 12.00 | 36.90 | 10.50 | 3.48 | 3.51 | 4.10 | 3.61 |
| CW-10 | 49 | 0.48 | 0.00048 | 33.80 | 9.30 | 19.90 | 6.30 | 3.63 | 3.16 | 3.62 | 2.29 |
| NW-46 | 48.4 | 0.452 | 0.000452 | 41.10 | 12.60 | 43.70 | 14.50 | 3.26 | 3.01 | 4.70 | 5.20 |
| NW-47 | 49.8 | 0.528 | 0.000528 | 31.60 | 9.80 | 35.60 | 10.50 | 3.22 | 3.39 | 3.53 | 3.88 |
| NW-48 | 47.3 | 0.506 | 0.000506 | 24.00 | 7.10 | 27.00 | 8.80 | 3.38 | 3.07 | 2.76 | 3.26 |
| NW-49 | 49.4 | 0.46 | 0.00046 | 42.80 | 14.10 | 46.00 | 14.50 | 3.04 | 3.17 | 4.97 | 5.23 |
| NW-50 | 56.6 | 0.56 | 0.00056 | 43.30 | 13.00 | 35.30 | 11.60 | 3.33 | 3.04 | 4.19 | 3.58 |
| NW-51 | 52.4 | 0.58 | 0.00058 | 28.70 | 8.90 | 28.40 | 10.10 | 3.22 | 2.81 | 3.05 | 3.23 |
| NW-52 | 50.3 | 0.65 | 0.00065 | 16.60 | 6.00 | 19.70 | 7.20 | 2.77 | 2.74 | 1.98 | 2.37 |
| CW-11 | 52.3 | 0.49 | 0.00049 | 51.50 | 13.40 | 38.50 | 11.70 | 3.84 | 3.29 | 5.02 | 4.06 |
| CW-12 | 56.4 | 0.5 | 0.0005 | 48.70 | 13.50 | 34.50 | 11.50 | 3.61 | 3.00 | 4.55 | 3.53 |

**Table 24b: Summary of Properties of Several Nonwovens**

| **Nonwoven** | **Basis Weight (gsm)** | **Thickness (mm)** | **Thickness (m)** | **Tensile Strength, Normalized by Basis Wt, Nm²/kg per 1" strip** | | | | **Tensile Strength, Normalized by Thickness, N/m per 1" strip** | | | |
|---|---|---|---|---|---|---|---|---|---|---|---|
| | | | | *Dry MD* | *Dry CD* | *Wet MD* | *Wet CD* | *Dry MD* | *Dry CD* | *Wet MD* | *Wet CD* |
| NW-18 | 51.1 | 0.64 | 0.00064 | 663.60 | 209.98 | 690.51 | 208.22 | 52984.38 | 16765.63 | 55132.81 | 16625.00 |
| NW-19 | 49.1 | 0.39 | 0.00039 | 962.22 | 207.43 | 951.93 | 245.42 | 121141.03 | 26115.38 | 119846.15 | 30897.44 |
| NW-20 | 50.1 | 0.71 | 0.00071 | 353.99 | 114.67 | 398.20 | 120.36 | 24978.87 | 8091.55 | 28098.59 | 8492.96 |
| NW-21 | 52.3 | 0.45 | 0.00045 | 551.05 | 107.93 | 596.18 | 118.93 | 64044.44 | 12544.44 | 69288.89 | 13822.22 |
| NW-22 | 49.1 | 0.62 | 0.00062 | 228.72 | 72.71 | 279.02 | 86.56 | 18112.90 | 5758.06 | 22096.77 | 6854.84 |
| NW-23 | 51 | 0.6 | 0.0006 | 821.57 | 235.88 | 819.61 | 217.65 | 69833.33 | 20050.00 | 69666.67 | 18500.00 |
| NW-24 | 50.2 | 0.61 | 0.00061 | 687.15 | 243.73 | 732.47 | 222.91 | 56549.18 | 20057.38 | 60278.69 | 18344.26 |
| NW-25 | 52.3 | 0.41 | 0.00041 | 771.32 | 159.56 | 782.50 | 180.31 | 98390.24 | 20353.66 | 99817.07 | 23000.00 |
| NW-26 | 50.8 | 0.49 | 0.00049 | 717.62 | 233.27 | 814.96 | 235.24 | 74397.96 | 24183.67 | 84489.80 | 24387.76 |
| CW-6 | 53.2 | 0.4 | 0.0004 | 1025.56 | 288.35 | 893.05 | 304.79 | 136400.00 | 38350.00 | 118775.00 | 40537.50 |
| CW-7 | 50.4 | 0.4 | 0.0004 | 1156.05 | 301.59 | 978.57 | 245.34 | 145662.50 | 38000.00 | 123300.00 | 30912.50 |
| NW-27 | 50 | 0.61 | 0.00061 | 752.00 | 196.00 | 758.00 | 230.00 | 61639.34 | 16065.57 | 62131.15 | 18852.46 |
| NW-31 | 51.2 | 0.69 | 0.00069 | 503.91 | 119.14 | 447.27 | 140.63 | 37391.30 | 8840.58 | 33188.41 | 10434.78 |
| NW-42 | 51.4 | 0.69 | 0.00069 | 620.62 | 151.75 | 638.13 | 159.53 | 46231.88 | 11304.35 | 47536.23 | 11884.06 |
| NW-43 | 47.1 | 0.68 | 0.00068 | 259.02 | 82.80 | 282.38 | 84.93 | 17941.18 | 5735.29 | 19558.82 | 5882.35 |
| NW-44 | 46.2 | 0.7 | 0.0007 | 155.84 | 75.76 | 119.05 | 62.77 | 10285.71 | 5000.00 | 7857.14 | 4142.86 |
| CW-8 | 50.9 | 0.54 | 0.00054 | 815.32 | 322.20 | 840.86 | 282.91 | 76851.85 | 30370.37 | 79259.26 | 26666.67 |
| CW-9 | 54.5 | 0.54 | 0.00054 | 765.14 | 220.18 | 677.06 | 192.66 | 77222.22 | 22222.22 | 68333.33 | 19444.44 |
| CW-10 | 49 | 0.48 | 0.00048 | 689.80 | 189.80 | 406.12 | 128.57 | 70416.67 | 19375.00 | 41458.33 | 13125.00 |
| NW-46 | 48.4 | 0.452 | 0.000452 | 849.17 | 260.33 | 902.89 | 299.59 | 90929.20 | 27876.11 | 96681.42 | 32079.65 |
| NW-47 | 49.8 | 0.528 | 0.000528 | 634.54 | 196.79 | 714.86 | 210.84 | 59848.48 | 18560.61 | 67424.24 | 19886.36 |
| NW-48 | 47.3 | 0.506 | 0.000506 | 507.40 | 150.11 | 570.82 | 186.05 | 47430.83 | 14031.62 | 53359.68 | 17391.30 |
| NW-49 | 49.4 | 0.46 | 0.00046 | 866.40 | 285.43 | 931.17 | 293.52 | 93043.48 | 30652.17 | 100000.00 | 31521.74 |
| NW-50 | 56.6 | 0.56 | 0.00056 | 765.02 | 229.68 | 623.67 | 204.95 | 77321.43 | 23214.29 | 63035.71 | 20714.29 |
| NW-51 | 52.4 | 0.58 | 0.00058 | 547.71 | 169.85 | 541.98 | 192.75 | 49482.76 | 15344.83 | 48965.52 | 17413.79 |
| NW-52 | 50.3 | 0.65 | 0.00065 | 330.02 | 119.28 | 391.65 | 143.14 | 25538.46 | 9230.77 | 30307.69 | 11076.92 |
| CW-11 | 52.3 | 0.49 | 0.00049 | 984.70 | 256.21 | 736.14 | 223.71 | 105102.04 | 27346.94 | 78571.43 | 23877.55 |
| CW-12 | 56.4 | 0.5 | 0.0005 | 863.48 | 239.36 | 611.70 | 203.90 | 97400.00 | 27000.00 | 69000.00 | 23000.00 |

**Table 24c: Summary of Properties of Several Nonwovens**

| **Nonwoven** | **Basis Weight (gsm)** | **Thickness (mm)** | **Thickness (m)** | **Tensile Strength, Normalized by Density, Nm³/kg per 1-in strip** | | | |
|---|---|---|---|---|---|---|---|
| | | | | *Dry MD* | *Dry CD* | *Wet MD* | *Wet CD* |
| NW-18 | 51.1 | 0.64 | 0.00064 | 0.42 | 0.13 | 0.44 | 0.13 |
| NW-19 | 49.1 | 0.39 | 0.00039 | 0.38 | 0.08 | 0.37 | 0.10 |
| NW-20 | 50.1 | 0.71 | 0.00071 | 0.25 | 0.08 | 0.28 | 0.09 |
| NW-21 | 52.3 | 0.45 | 0.00045 | 0.25 | 0.05 | 0.27 | 0.05 |
| NW-22 | 49.1 | 0.62 | 0.00062 | 0.14 | 0.05 | 0.17 | 0.05 |
| NW-23 | 51 | 0.6 | 0.0006 | 0.49 | 0.14 | 0.49 | 0.13 |
| NW-24 | 50.2 | 0.61 | 0.00061 | 0.42 | 0.15 | 0.45 | 0.14 |
| NW-25 | 52.3 | 0.41 | 0.00041 | 0.32 | 0.07 | 0.32 | 0.07 |
| NW-26 | 50.8 | 0.49 | 0.00049 | 0.35 | 0.11 | 0.40 | 0.12 |
| CW-6 | 53.2 | 0.4 | 0.0004 | 0.41 | 0.12 | 0.36 | 0.12 |
| CW-7 | 50.4 | 0.4 | 0.0004 | 0.46 | 0.12 | 0.39 | 0.10 |
| NW-27 | 50 | 0.61 | 0.00061 | 0.46 | 0.12 | 0.46 | 0.14 |
| NW-31 | 51.2 | 0.69 | 0.00069 | 0.35 | 0.08 | 0.31 | 0.10 |
| NW-42 | 51.4 | 0.69 | 0.00069 | 0.43 | 0.10 | 0.44 | 0.11 |
| NW-43 | 47.1 | 0.68 | 0.00068 | 0.18 | 0.06 | 0.19 | 0.06 |
| NW-44 | 46.2 | 0.7 | 0.0007 | 0.11 | 0.05 | 0.08 | 0.04 |
| CW-8 | 50.9 | 0.54 | 0.00054 | 0.44 | 0.17 | 0.45 | 0.15 |
| CW-9 | 54.5 | 0.54 | 0.00054 | 0.41 | 0.12 | 0.37 | 0.10 |
| CW-10 | 49 | 0.48 | 0.00048 | 0.33 | 0.09 | 0.19 | 0.06 |
| NW-46 | 48.4 | 0.452 | 0.000452 | 0.38 | 0.12 | 0.41 | 0.14 |
| NW-47 | 49.8 | 0.528 | 0.000528 | 0.34 | 0.10 | 0.38 | 0.11 |
| NW-48 | 47.3 | 0.506 | 0.000506 | 0.26 | 0.08 | 0.29 | 0.09 |
| NW-49 | 49.4 | 0.46 | 0.00046 | 0.40 | 0.13 | 0.43 | 0.14 |
| NW-50 | 56.6 | 0.56 | 0.00056 | 0.43 | 0.13 | 0.35 | 0.11 |
| NW-51 | 52.4 | 0.58 | 0.00058 | 0.32 | 0.10 | 0.31 | 0.11 |
| NW-52 | 50.3 | 0.65 | 0.00065 | 0.21 | 0.08 | 0.25 | 0.09 |
| CW-11 | 52.3 | 0.49 | 0.00049 | 0.48 | 0.13 | 0.36 | 0.11 |
| CW-12 | 56.4 | 0.5 | 0.0005 | 0.43 | 0.12 | 0.31 | 0.10 |

### DEFINITIONS

As used herein, the terms "comprising," "comprises," and "comprise" are open-ended transition terms used to transition from a subject recited before the term to one or more elements recited after the term, where the element or elements listed after the transition term are not necessarily the only elements that make up the subject.

As used herein, the terms "including," "includes," and "include" have the same open-ended meaning as "comprising," "comprises," and "comprise."

As used herein, the terms "having," "has," and "have" have the same open-ended meaning as "comprising," "comprises," and "comprise."

As used herein, the terms "containing," "contains," and "contain" have the same open-ended meaning as "comprising," "comprises," and "comprise."

As used herein, the terms "a," "an," "the," and "said" mean one or more.

As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

## Claims

1. A staple fiber formed from cellulose acetate, wherein said fiber has a denier of about 0.5 to about 2.75 and a crimp frequency of from about 8 to about 22 CPI measured according to ASTM D3937, and wherein a plurality of said fibers exhibit a fiber-to-fiber staple pad coefficient of friction of not more than about 0.70 measured according to ASTM D3412, wherein
said fiber is at least partially coated with a spinning finish and a top-coat finish, wherein said spinning finish is present on said fiber in an amount of at least about 0.5% FOY measured by solvent extraction according to ASTM D2257 and wherein said top-coat finish is present on said fiber in an amount of not more than about 0.5% FOY measured by solvent extraction according to ASTM D2257, and wherein each of said spinning finish and said top-coat finish have been applied prior to cutting a filament yarn to form said fiber, and wherein
said fiber has a Y-shaped or round cross-sectional shape, and a length of about 3 to about 75 mm measured according to ASTM D-5103.

2. The staple fiber of claim 1, wherein said fiber has a static half-life of not more than about 12 minutes measured according of AATCC 84-2011 and wherein a plurality of said fibers exhibit a fiber-to-fiber staple pad coefficient of friction of at least about 0.1 measured according to ASTM D3412.

3. The staple fiber of claim 1, wherein a plurality of said fibers exhibit a fiber-to-fiber staple pad coefficient of friction of at least about 0.1 measured according to ASTM D3412 and wherein said fiber has a surface resistivity, expressed as log R, of not more than about 11 measured according to AATCC TM76-2011.

4. The staple fiber of claim 1, wherein said fiber is a biodegradable fiber, wherein the total amount of all finishes on said fiber is not more than about 1% FOY measured by solvent extraction according to ASTM D2257, and wherein said fiber exhibits at least one of the following biodegradability characteristics (i) through (iii) below -
(i) a biodegradation of at least 90% within a period of not more than 180 days, measured according to ISO 14855-1 (2012) under industrial composting conditions;
(ii) biodegradation of at least 90% within a period of not more than 2 years, measured according to ISO 17556 (2012) under soil compositing conditions; and
(iii) biodegradation of at least 90% within a period of not more than 1 year measured according to ISO 14855-1 (2012) under home composting conditions.

5. A nonwoven web comprising the staple fiber of claim 1.

6. A process for producing crimped, coated cellulose acetate staple fibers, said process comprising:
(a) forming a cellulose acetate filament yarn comprising plurality of individual cellulose acetate filaments, wherein said individual cellulose acetate filaments have a denier per filament in the range of from about 0.5 to about 2.75, wherein said forming includes applying at least one spinning finish to at least a portion of said filament yarn;
(b) crimping at least a portion of said cellulose acetate filament yarn to provide a crimped filament yarn, wherein said crimped filament yarn has an average crimping frequency, measured in at least 5 different locations of said crimped filament yarn, of from about 6 CPI to about 22 CPI measured according to ASTM D3937; and
(c) cutting said crimped filament yarn to form a plurality of crimped cellulose acetate staple fibers having a length of about 3 to about 75 mm measured according to ASTM D-5103, wherein the average tenacity of the filaments of said crimped filament yarn is at least 90 percent of the average tenacity of the filaments of said filament yarn prior to said crimping,
wherein said staple fibers have a round or V-shaped cross-section
further comprising applying a top-coat finish to at least a portion of said crimped filament yarn prior to said cutting, wherein the total amount of spinning finish is at least 0,5% FOY and the amount of top coat finish is not more than 0.5% FOY measured by solvent extraction according to ASTM D2257.

7. The process of claim 6, wherein said staple fibers have a surface resistivity, expressed as Log R measured according to AATCC TM76-2011, of not more than about 11 and a plurality of said fibers exhibits a fiber-to-fiber staple pad coefficient of friction of at least about 0.10 measured according to ASTM D3412.

8. The process of claim 6, wherein said staple fibers are biodegradable fibers, wherein the total amount of finish on said fibers is not more than about 1% FOY measured by solvent extraction according to ASTM D2257, and wherein said fibers exhibit at least one of the following biodegradability characteristics (i) through (iii) below -
(i) a biodegradation of at least 90% within not more than 180 days, measured according to ISO 14855-1 (2012) under industrial composting conditions;
(ii) biodegradation of at least 90% within not more than 2 years, measured according to ISO 17556 (2012) at ambient temperature; and
(iii) biodegradation of at least 90% within not more than 1 year measured according to ISO 14855-1 (2012) under industrial composting conditions.

9. Use of a cellulose acetate staple fiber according to claim 1 to 4 to form a nonwoven web.

10. Process for producing a nonwoven web comprising the steps
(a) providing a plurality of cellulose acetate staple fibers according to one of claims 1 to 4,
(b) introducing the staple fibers into an apparatus for forming a dry-laid nonwoven web, and
(c) forming the staple fibers into a nonwoven web in the apparatus.

## Patentansprüche

1. Stapelfaser, die aus Celluloseacetat gebildet ist, wobei die Faser einen Denier von etwa 0,5 bis etwa 2,75 und eine Kräuselungshäufigkeit von etwa 8 bis etwa 22 CPI, gemessen gemäß ASTM D3937, aufweist, und wobei eine Vielzahl der Fasern einen Faser-zu-Faser-Stapelfaserpolster-Reibungskoeffizienten von nicht mehr als etwa 0,70, gemessen gemäß ASTM D3412, aufweist, wobei
die Faser zumindest teilweise mit einer Spinnpräparation und einer Deckschichtpräparation beschichtet ist, wobei die Spinnpräparation auf der Faser in einer Menge von mindestens etwa 0,5 % FOY, gemessen durch Lösungsmittelextraktion gemäß ASTM D2257, vorhanden ist und wobei die Deckschichtpräparation auf der Faser in einer Menge von nicht mehr als etwa 0,5 % FOY, gemessen durch Lösungsmittelextraktion gemäß ASTM D2257, vorhanden ist, und wobei jede von der Spinnpräparation und der Deckschichtpräparation vor dem Schneiden eines Filamentgarns, um die Faser zu bilden, aufgetragen worden ist, und wobei
die Faser eine Y-förmige oder runde Querschnittsform und eine Länge von etwa 3 bis etwa 75 mm, gemessen gemäß ASTM D-5103, aufweist.

2. Stapelfaser nach Anspruch 1, wobei die Faser eine statische Halbwertszeit von nicht mehr als etwa 12 Minuten, gemessen gemäß AATCC 84-2011, aufweist und wobei eine Vielzahl der Fasern einen Faser-zu-Faser-Stapelfaserpolster-Reibungskoeffizienten von mindestens etwa 0,1, gemessen gemäß ASTM D3412, aufweist.

3. Stapelfaser nach Anspruch 1, wobei eine Vielzahl der Fasern einen Faser-zu-Faser-Stapelfaserpolster-Reibungskoeffizienten von mindestens etwa 0,1, gemessen gemäß ASTM D3412, aufweist und wobei die Faser einen Oberflächenwiderstand, ausgedrückt als log R, von nicht mehr als etwa 11, gemessen gemäß AATCC TM76-2011, aufweist.

4. Stapelfaser nach Anspruch 1, wobei die Faser eine biologisch abbaubare Faser ist, wobei die Gesamtmenge aller Präparationen auf der Faser nicht mehr als etwa 1 % FOY, gemessen durch Lösungsmittelextraktion gemäß ASTM D2257, beträgt, und wobei die Faser mindestens eine der folgenden biologischen Abbaubarkeitseigenschaften (i) bis (iii) unten aufweist -
(i) einen biologischen Abbau von mindestens 90 % innerhalb eines Zeitraums von nicht mehr als 180 Tagen, gemessen gemäß ISO 14855-1 (2012) unter industriellen Kompostierungsbedingungen;
(ii) einen biologischen Abbau von mindestens 90 % innerhalb eines Zeitraums von nicht mehr als 2 Jahren, gemessen gemäß ISO 17556 (2012) unter Bodenkompostierungsbedingungen; und
(iii) einen biologischen Abbau von mindestens 90 % innerhalb eines Zeitraums von nicht mehr als 1 Jahr, gemessen gemäß ISO 14855-1 (2012) unter Heimkompostierungsbedingungen.

5. Vliesstoffbahn, umfassend die Stapelfaser nach Anspruch 1.

6. Verfahren zum Herstellen von gekräuselten, beschichteten Celluloseacetat-Stapelfasern, wobei das Verfahren Folgendes umfasst:
(a) Bilden eines Celluloseacetat-Filamentgarns, das eine Vielzahl von einzelnen Celluloseacetat-Filamenten umfasst, wobei die einzelnen Celluloseacetat-Filamente einen Denier pro Filament in dem Bereich von etwa 0,5 bis etwa 2,75 aufweisen, wobei das Bilden das Auftragen mindestens einer Spinnpräparation auf mindestens einen Abschnitt des Filamentgarns beinhaltet;
(b) Kräuseln mindestens eines Abschnitts des Celluloseacetat-Filamentgarns, um ein gekräuseltes Filamentgarn vorzusehen, wobei das gekräuselte Filamentgarn eine durchschnittliche Kräuselungshäufigkeit, gemessen an mindestens 5 verschiedenen Stellen des gekräuselten Filamentgarns, von etwa 6 CPI bis etwa 22 CPI, gemessen gemäß ASTM D3937, aufweist; und
(c) Schneiden des gekräuselten Filamentgarns, um eine Vielzahl von gekräuselten Celluloseacetat-Stapelfasern zu bilden, die eine Länge von etwa 3 bis etwa 75 mm, gemessen gemäß ASTM D-5103, aufweisen, wobei die durchschnittliche Zugfestigkeit der Filamente des gekräuselten Filamentgarns mindestens 90 Prozent der durchschnittlichen Zugfestigkeit der Filamente des Filamentgarns vor dem Kräuseln beträgt,
wobei die Stapelfasern einen runden oder Y-förmigen Querschnitt aufweisen
ferner umfassend das Auftragen einer Deckschichtpräparation auf mindestens einen Abschnitt des gekräuselten Filamentgarns vor dem Schneiden, wobei die Gesamtmenge an Spinnpräparation mindestens 0,5 % FOY beträgt und die Menge an Deckschichtpräparation nicht mehr als 0,5 % FOY, gemessen durch Lösungsmittelextraktion gemäß ASTM D2257, beträgt.

7. Verfahren nach Anspruch 6, wobei die Stapelfasern einen Oberflächenwiderstand, ausgedrückt als Log R, gemessen gemäß AATCC TM76-2011, von nicht mehr als etwa 11 aufweisen und eine Vielzahl der Fasern einen Faser-zu-Faser-Stapelfaserpolster-Reibungskoeffizienten von mindestens etwa 0,10, gemessen gemäß ASTM D3412, aufweist.

8. Verfahren nach Anspruch 6, wobei die Stapelfasern biologisch abbaubare Fasern sind, wobei die Gesamtmenge an Präparation auf den Fasern nicht mehr als etwa 1 % FOY, gemessen durch Lösungsmittelextraktion gemäß ASTM D2257, beträgt, und wobei die Fasern mindestens eine der folgenden biologischen Abbaubarkeitseigenschaften (i) bis (iii) unten aufweisen -
(i) einen biologischen Abbau von mindestens 90 % innerhalb von nicht mehr als 180 Tagen, gemessen gemäß ISO 14855-1 (2012) unter industriellen Kompostierungsbedingungen;
(ii) einen biologischen Abbau von mindestens 90 % innerhalb von nicht mehr als 2 Jahren, gemessen gemäß ISO 17556 (2012) bei Umgebungstemperatur; und
(iii) einen biologischen Abbau von mindestens 90 % innerhalb von nicht mehr als 1 Jahr, gemessen gemäß ISO 14855-1 (2012) unter industriellen Kompostierungsbedingungen.

9. Verwendung einer Celluloseacetat-Stapelfaser nach Anspruch 1 bis 4, um eine Vliesstoffbahn zu bilden.

10. Verfahren zum Herstellen einer Vliesstoffbahn, umfassend die Schritte
(a) Bereitstellen einer Vielzahl von Celluloseacetat-Stapelfasern nach einem der Ansprüche 1 bis 4,
(b) Einführen der Stapelfasern in eine Einrichtung zum Bilden einer trockengelegten Vliesstoffbahn, und
(c) Bilden der Stapelfasern zu einer Vliesstoffbahn in der Einrichtung.

## Revendications

1. Fibre discontinue formée à partir d'acétate de cellulose, dans laquelle ladite fibre a un denier d'environ 0,5 à environ 2,75 et une fréquence de frisure d'environ 8 à environ 22 CPI mesurée selon la norme ASTM D3937, et dans laquelle une pluralité desdites fibres présentent un coefficient de frottement entre fibres sur tampon de fibres discontinues n'excédant pas environ 0,70 mesuré selon la norme ASTM D3412, dans laquelle
ladite fibre est au moins partiellement revêtue d'un apprêt de filage et d'un apprêt de revêtement supérieur, dans laquelle ledit apprêt de filage est présent sur ladite fibre en une quantité d'au moins environ 0,5 % de FOY mesurée par extraction au solvant selon la norme ASTM D2257 et dans laquelle ledit apprêt de revêtement supérieur est présent sur ladite fibre en une quantité n'excédant pas environ 0,5 % de FOY mesurée par extraction au solvant selon la norme ASTM D2257, et dans laquelle chacun dudit apprêt de filage et dudit apprêt de revêtement supérieur a été appliqué avant la coupe d'un fil de filament pour former ladite fibre, et dans laquelle
ladite fibre a une forme de coupe transversale en Y ou ronde, et une longueur d'environ 3 à environ 75 mm mesurée selon la norme ASTM D-5103.

2. Fibre discontinue selon la revendication 1, dans laquelle ladite fibre a une demi-vie statique non supérieure à environ 12 minutes mesurée selon la norme AATCC 84-2011 et dans laquelle une pluralité desdites fibres présentent un coefficient de frottement entre fibres sur tampon de fibres discontinues d'au moins environ 0,1 mesuré selon la norme ASTM D3412.

3. Fibre discontinue selon la revendication 1, dans laquelle une pluralité desdites fibres présentent un coefficient de frottement entre fibres sur tampon de fibres discontinues d'au moins environ 0,1 mesuré selon la norme ASTM D3412 et dans laquelle ladite fibre présente une résistivité de surface, exprimée en log R, non supérieure à environ 11 mesurée selon la norme AATCC TM76-2011.

4. Fibre discontinue selon la revendication 1, dans laquelle ladite fibre est une fibre biodégradable, dans laquelle la quantité totale de tous les apprêts sur ladite fibre n'excède pas environ 1 % de FOY, mesurée par extraction au solvant selon la norme ASTM D2257, et dans laquelle ladite fibre présente au moins l'une des caractéristiques de biodégradabilité (i) à (iii) ci-dessous
(i) une biodégradation d'au moins 90 % sur une période n'excédant pas 180 jours, mesurée selon la norme ISO 14855-1 (2012) dans des conditions de compostage industriel ;
(ii) une biodégradation d'au moins 90 % sur une période n'excédant pas 2 ans, mesurée selon la norme ISO 17556 (2012) dans des conditions de compostage du sol ; et
(iii) une biodégradation d'au moins 90 % sur une période n'excédant pas 1 an, mesurée selon la norme ISO 14855-1 (2012) dans des conditions de compostage domestique.

5. Nappe non tissée comprenant la fibre discontinue selon la revendication 1.

6. Procédé de production de fibres discontinues d'acétate de cellulose frisées et revêtues, ledit procédé comprenant :
(a) la formation d'un fil de filament d'acétate de cellulose comprenant une pluralité de filaments individuels d'acétate de cellulose, dans lequel lesdits filaments individuels d'acétate de cellulose ont un denier par filament compris dans la plage allant d'environ 0,5 à environ 2,75, dans lequel ladite formation comporte l'application d'au moins un apprêt de filage sur au moins une partie dudit fil de filament ;
(b) le frisage d'au moins une partie dudit fil de filament d'acétate de cellulose pour fournir un fil de filament frisé, dans lequel ledit fil de filament frisé a une fréquence de frisage moyenne, mesurée dans au moins 5 emplacements différents dudit fil de filament frisé, allant d'environ 6 CPI à environ 22 CPI, mesurée selon la norme ASTM D3937 ; et
(c) la coupe dudit fil de filament frisé pour former une pluralité de fibres discontinues d'acétate de cellulose frisées ayant une longueur d'environ 3 à environ 75 mm, mesurée selon la norme ASTM D-5103, dans lequel la ténacité moyenne des filaments dudit fil de filament frisé est d'au moins 90 % de la ténacité moyenne des filaments dudit fil de filament avant ledit frisage,
dans lequel lesdites fibres discontinues ont une section transversale ronde ou en forme de Y
comprenant en outre l'application d'un apprêt de revêtement supérieur sur au moins une partie dudit fil de filament frisé avant ladite coupe, dans lequel la quantité totale d'apprêt de filage est d'au moins 0,5 % de FOY et la quantité d'apprêt de finition n'excède pas 0,5 % de FOY, mesurée par extraction au solvant selon la norme ASTM D2257.

7. Procédé selon la revendication 6, dans lequel lesdites fibres discontinues ont une résistivité de surface, exprimée en log R mesurée selon la norme AATCC TM76-2011, non supérieure à environ 11, et une pluralité desdites fibres présentent un coefficient de frottement entre fibres sur tampon de fibres discontinues d'au moins environ 0,10 mesuré selon la norme ASTM D3412.

8. Procédé selon la revendication 6, dans lequel lesdites fibres discontinues sont des fibres biodégradables, dans lequel la quantité totale d'apprêt sur lesdites fibres n'excède pas environ 1 % de FOY, mesurée par extraction au solvant selon la norme ASTM D2257, et dans lequel lesdites fibres présentent au moins l'une des caractéristiques de biodégradabilité (i) à (iii) ci-dessous
(i) une biodégradation d'au moins 90 % en pas plus de 180 jours, mesurée selon la norme ISO 14855-1 (2012) dans des conditions de compostage industriel ;
(ii) une biodégradation d'au moins 90 % en pas plus de 2 ans, mesurée selon la norme ISO 17556 (2012) à température ambiante ; et
(iii) une biodégradation d'au moins 90 % en pas plus de 1 an, mesurée selon la norme ISO 14855-1 (2012) dans des conditions de compostage industriel.

9. Utilisation d'une fibre discontinue d'acétate de cellulose selon la revendication 1 à 4 pour former une nappe non tissée.

10. Procédé de production d'une nappe non tissée comprenant les étapes
(a) de fourniture d'une pluralité de fibres discontinues d'acétate de cellulose selon l'une des revendications 1 à 4,
(b) d'introduction des fibres discontinues dans un appareil destiné à former une nappe non tissée par voie sèche, et
(c) de formation des fibres discontinues en une nappe non tissée dans l'appareil.
